# EUROPEAN PATENT APPLICATION

(11) **EP 2 518 422 A1**
(43) Date of publication of application: **31.10.2012**
(21) Application number: 10838958.6
(22) Date of filing: 22.12.2010
(51) Int. Cl.: F25B 1/00

(54) **REFRIGERATION DEVICE**

(30) Priority: 22.12.2009 JP 2009290935
(71) Applicant: Daikin Industries, Ltd., Osaka-shi, Osaka 530-8323 (JP)
(72) Inventor: KIDO, Naohiro, Kusatsu-shi Shiga 525-8526 (JP); MAEDA, Toshiyuki, Kusatsu-shi Shiga 525-8526 (JP)
(74) Representative: HOFFMANN EITLE
(86) International application number: PCT/JP2010/007442
(87) International publication number: WO 2011/077720

(57) **Abstract**

A refrigeration apparatus (1) includes a refrigerant circuit (10) having a main circuit (10A) performing a refrigeration cycle and a branch circuit (10B) which branches part of high-pressure liquid refrigerant flowing through the main circuit (10A) and leads the part of high-pressure liquid refrigerant from a high-pressure part of the main circuit (10A) to part of the main circuit (10A) having a pressure lower than that of the high-pressure part. The branch circuit (10B) is connected to a cooler (16) configured to cool a power element(s) (37) of a power supply device (30) supplying power to drivers of components of the refrigerant circuit (10) by refrigerant. In the refrigeration apparatus (1), an adjusting mechanism (90) configured to adjust the state of refrigerant flowing through the branch circuit (10B) and adjust the temperature of refrigerant passing through the cooler (16) to a target temperature is provided.

## Description

### TECHNICAL FIELD

The present invention relates to a refrigeration apparatus in which a power element(s) of a power supply device configured to supply power to components of a refrigerant circuit is cooled by refrigerant.

### BACKGROUND ART

Conventionally, a refrigeration apparatus has been known, in which a power element(s) used for a power supply device of, e.g., a compressor is cooled by refrigerant of a refrigerant circuit. For example, Patent Document 1 discloses a refrigeration apparatus in which a cooler configured to cool a power element(s) is arranged in a branch flow path branched from part of a main circuit between a condenser and an expansion valve and joining an inlet pipe of the compressor. A capillary tube is provided upstream of the cooler of the branch flow path. In the refrigeration apparatus, part of refrigerant condensed in the condenser and flowing toward the expansion valve flows into the branch flow path. Then, after the pressure of such refrigerant is reduced by the capillary tube, the refrigerant flows into the cooler. The refrigerant flowing into the cooler cools the power element(s) in the cooler. Subsequently, the refrigerant joins refrigerant flowing through the inlet pipe of the compressor, and flows into the compressor.

### CITATION LIST

### PATENT DOCUMENT

PATENT DOCUMENT 1: Japanese Utility Model Publication No. S61-076267

### SUMMARY OF THE INVENTION

### TECHNICAL PROBLEM

The amount of heat generation of the power element of the power supply device is significantly changed depending on a usage status and a usage environment. In the foregoing refrigeration apparatus, since the pressure of refrigerant of the branch flow path is reduced by the capillary tube, a pressure reduction amount by the capillary tube is constant. Thus, the amount and pressure of refrigerant flowing into the cooler are determined by the rotational speed of the compressor controlled depending on a load of a utilization-side heat exchanger, and cannot be changed depending on the amount of heat generation of the power element. This may results in deficiency or excess of a cooling capacity of refrigerant in the cooler.

The present invention has been made in view of the foregoing, and it is an objective of the present invention to improve, in a refrigeration apparatus including a cooler configured to cool a power element(s) by refrigerant, efficiency of cooling the power element(s) by the refrigerant in the cooler.

### SOLUTION TO THE PROBLEM

A first aspect of the invention is intended to a refrigeration apparatus including a refrigerant circuit (10) having a main circuit (10A) in which a compressor (11), a heat-source-side heat exchanger (12), an expansion mechanism (13), and a utilization-side heat exchanger (14) are connected together to perform a refrigeration cycle, a branch circuit (10B) which branches part of high-pressure liquid refrigerant flowing through the main circuit (10A) and leads the part of high-pressure liquid refrigerant from a high-pressure part of the main circuit (10A) to part of the main circuit (10A) having a pressure lower than that of the high-pressure part, a power supply device (30) including a power element (37) and supplying power to a driver of a component of the refrigerant circuit (10), and a cooler (16) connected to the branch circuit (10B) and cooling the power element (37) by refrigerant flowing through the branch circuit (10B). In addition, the refrigeration apparatus includes an adjusting mechanism (90) configured to adjust a state of refrigerant flowing through the branch circuit (10B) and adjust a temperature of refrigerant passing through the cooler (16) to a target temperature.

In the first aspect of the invention, the cooler (16) is provided in the branch circuit (10B) which branches part of high-pressure liquid refrigerant flowing through the main circuit (10A) and leads the part of high-pressure liquid refrigerant from the high-pressure part of the main circuit (10A) to part of the main circuit (10A) having the pressure lower than that of the high-pressure part. In addition, in the first aspect of the invention, the power supply device (30) supplies power to the driver of the component of the refrigerant circuit (10). In the cooler (16), refrigerant flowing into the branch circuit (10B) absorbs heat from the power element (37) of the power supply device (30) to cool the power element (37). In addition, the adjusting mechanism (90) adjusts the state of refrigerant flowing through the branch circuit (10B) and adjusts the temperature of refrigerant passing through the cooler (16) to the target temperature. This adjusts the temperature of the cooler (16).

Note that "to cool the power element (37)" includes the case where the power element (37) is indirectly cooled through surrounding components such as a substrate on which the power element (37) is mounted.

A second aspect of the invention is intended to the refrigeration apparatus of the first aspect of the invention, in which the adjusting mechanism (90) includes a throttle mechanism (17, 27) connected to one end of the cooler (16) of the branch circuit (10B), a throttle valve (18, 28) which is connected to the other end of the cooler (16) of the branch circuit (10B) and a degree of opening of which is adjustable, and an opening degree adjuster (52, 59) adjusting the degree of opening of the throttle valve (18, 28) such that an evaporation temperature of refrigerant in the cooler (16) reaches a target temperature.

In the second aspect of the invention, a flow path width is reduced by the throttle mechanism at the one end of the cooler (16) of the branch circuit (10B). A flow path width is reduced by the throttle valve (18, 28), the degree of opening of which is adjusted by the opening degree adjuster (52, 59), at the other end of the cooler (16) of the branch circuit (10B). The opening degree adjuster (52, 59) adjusts the degree of opening of the throttle valve (18, 28) such that the evaporation temperature of refrigerant in the cooler (16) reaches the target temperature, thereby adjusting the temperature of the cooler (16) to a desired temperature.

A third aspect of the invention is intended to the refrigeration apparatus of the second aspect of the invention, in which the throttle valve (18) is provided downstream of the cooler (16), the throttle mechanism (17) is provided upstream of the cooler (16), and a degree of opening of the throttle mechanism (17) is adjustable, and the adjusting mechanism (90) further includes a throttle mechanism adjuster (53) adjusting the degree of opening of the throttle mechanism (17) such that a degree of superheating of refrigerant at an outlet of the cooler (16) reaches a target degree of superheating.

In the third aspect of the invention, the degree of opening of the throttle valve (18) provided downstream of the cooler (16) is adjusted, and therefore the temperature of the cooler (16) is adjusted to the desired temperature. On the other hand, the degree of opening of the throttle mechanism (17) provided upstream of the cooler (16) is adjusted by the throttle mechanism adjuster (53), and therefore the degree of superheating of refrigerant after the refrigerant passes through the cooler (16) reaches the target degree of superheating. Thus, moisturizing of refrigerant led to the compressor (11) is prevented.

A fourth aspect of the invention is intended to the refrigeration apparatus of the third aspect of the invention, in which the opening degree adjuster (52) adjusts, upon a start of the refrigeration apparatus, the degree of opening of the throttle valve (18) to a degree of opening larger than an opening degree adjustable range of a normal operation, and the throttle mechanism adjuster (53) adjusts, upon the start of the refrigeration apparatus, the degree of opening of the throttle mechanism (17) to a degree of opening larger than an opening degree adjustable range of the normal operation.

Upon the start of the refrigeration apparatus, only liquid refrigerant does not flow into the branch circuit (10B), but refrigerant containing a relatively-large amount of gas refrigerant flows into the branch circuit (10B). Thus, unevenness in temperature of the cooler (16) is likely to occur, and it is highly likely that the power element (37) cannot be sufficiently cooled. In addition, if the amount of refrigerant flowing into the branch circuit (10B) is small, it takes time for refrigerant to reach the cooler (16) after the start of the refrigeration apparatus, and the power element (37) cannot be cooled during such a time.

In the fourth aspect of the invention, upon the start of the refrigeration apparatus, the opening degree adjuster (52) adjusts the degree of opening of the downstream-side throttle valve (18) to the degree of opening larger than that of the normal operation, and the throttle mechanism adjuster (53) adjusts the degree of opening of the upstream-side throttle mechanism (17) to the degree of opening larger than that of the normal operation. As in the foregoing, by adjusting, upon the start of the refrigeration apparatus, the degree of opening of the upstream-side throttle mechanism (17) and the degree of opening of the downstream-side throttle valve (18) to the degree of opening larger than that of the normal operation, an easy flow of refrigerant into the branch circuit (10B) is allowed, and refrigerant promptly reaches the cooler (16).

A fifth aspect of the invention is intended to the refrigeration apparatus of the third or fourth aspect of the invention, which further includes a stop controller (97) configured to, upon stoppage of the refrigeration apparatus, control at least one of the degrees of opening of the throttle valve (18) and the throttle mechanism (17) to a fully-closed state.

When the throttle valve (18) and the throttle mechanism (17) are opened upon the stoppage of the refrigeration apparatus, refrigerant continues flowing until a pressure in the branch circuit (10B) is balanced. Thus, for a certain time after the stoppage of the refrigeration apparatus, refrigerant flows into the cooler (16) although the power element (37) does not generate heat. As a result, there is a possibility that dew condensation occurs in the cooler (16), and therefore the power element (37) is broken down.

In the fifth aspect of the invention, upon the stoppage of the refrigeration apparatus, the stop controller (97) controls the at least one of the degrees of opening of the throttle valve (18) and the throttle mechanism (17) to the fully-closed state. Thus, refrigerant no longer flows into the cooler (16) after the stoppage of the refrigeration apparatus. As a result, a decrease in temperature of the cooler (16) is reduced.

A sixth aspect of the invention is intended to the refrigeration apparatus of any one of the third to fifth aspects of the invention, which further includes a fixed throttle (4) connected in parallel to the throttle mechanism (17).

The throttle mechanism (17) provided upstream of the cooler (16) is configured such that the degree of opening thereof is adjustable by the throttle mechanism adjuster (53) However, if the throttle mechanism (17) is broken down, the degree of opening thereof cannot be adjusted. Thus, if the degree of opening of the throttle mechanism (17) is fixed to a relatively-small degree of opening, the pressure of refrigerant is significantly reduced on an upstream side of the cooler (16). That is, the evaporation pressure of refrigerant in the cooler (16) is significantly reduced. For the foregoing reason, there is a possibility that the temperature of refrigerant circulating through the cooler (16) is decreased, resulting in excess of a cooling capacity of the cooler (16). In addition, if the flow rate of refrigerant flowing into the cooler (16) is too low, the cooling capacity of the cooler (16) may be deficient.

In the sixth aspect of the invention, the fixed throttle (4) connected in parallel to the throttle mechanism (17) is provided. If the degree of opening of the throttle mechanism (17) is fixed to the relatively-small degree of opening due to the breakdown of the throttle mechanism (17), refrigerant passes through a flow path formed by the fixed throttle (4) and flows into the cooler (16). Thus, even if the throttle mechanism (17) is broken down, the extremely-low evaporation pressure of refrigerant in the cooler (16) is prevented. As a result, the excessive decrease in temperature of refrigerant circulating through the cooler (16) is prevented. In addition, the significantly-low flow rate of refrigerant flowing into the cooler (16) is prevented.

A seventh aspect of the invention is intended to the refrigeration apparatus of any one of the third to sixth aspects of the invention, which further includes a fixed throttle (5) connected in series with the first throttle valve (18).

The throttle valve (18, 28) provided downstream of the cooler (16) is configured such that the degree of opening thereof is adjustable by the opening degree adjuster (52, 59). However, if the throttle valve (18, 28) is broken down, the degree of opening thereof cannot be adjusted. Thus, if the degree of opening of the throttle valve (18, 28) is fixed to a relatively-large degree of opening, a differential pressure in the throttle valve (18, 28) is significantly low, and the pressure of refrigerant flowing into the cooler (16) is close to the pressure of refrigerant at an outlet of the branch circuit (10B). That is, the evaporation pressure of refrigerant in the cooler (16) is significantly reduced. For the foregoing reason, there is a possibility that the temperature of the cooler (16) is decreased, resulting in excess of the cooling capacity of the cooler (16). In addition, if the degree of opening of the throttle valve (18, 28) is large, the amount of refrigerant flowing out from the cooler (16) is increased. Thus, refrigerant flows out from the cooler (16) before refrigerant flowing into the cooler (16) exchanges sufficient heat with the power element (37). That is, refrigerant branched from a main flow uselessly passes through the cooler (16).

In the seventh aspect of the invention, the fixed throttle (5) connected in series with the throttle valve (18, 28) is provided. Thus, even if the degree of opening of the throttle valve (18, 28) is fixed to the relatively-large degree of opening due to the breakdown of the throttle valve (18, 28), the pressure of refrigerant is reduced by the fixed throttle (5). Since the significantly-low evaporation pressure of refrigerant in the cooler (16) is prevented, the excessive decrease in temperature of refrigerant circulating through the cooler (16) is prevented. In addition, the capillary tube (5) prevents the amount of refrigerant flowing out from the cooler (16) from being significantly increased. Thus, refrigerant flowing into the cooler (16) flows out from the cooler (16) after the sufficient heat exchange with the power element (37).

An eighth aspect of the invention is intended to the refrigeration apparatus of any one of the second to seventh aspects of the invention, which includes a detector (41, 46, 47, 48) configured to detect a physical amount to be an indicator for a possibility of occurrence of dew condensation in the power element (37) or a surrounding component (16, 71) thereof; and a forcible opening degree reducer (55) configured to, when a detection value of the detector (41, 46, 47, 48) indicates a dew condensation state in which the dew condensation is highly likely to occur in the power element (37) or the surrounding component (16, 71) thereof, forcibly reduce the degree of opening of the throttle valve (18, 28) on behalf of the opening degree adjuster (52, 59).

In the eighth aspect of the invention, when the detection value of the detector (41, 46, 47, 48) indicates the dew condensation state in which the dew condensation is highly likely to occur in the power element (37) or the surrounding component (16, 71) thereof, the forcible opening degree reducer (55) forcibly reduces the degree of opening of the throttle valve (18, 28) on behalf of the opening degree adjuster (52, 59). Thus, since the amount of refrigerant passing through the cooler (16) is reduced, the amount of heat absorbed by refrigerant in the cooler (16) is reduced, and therefore the excessive decrease in temperature of the power element (37) or the cooler (16) is reduced.

A ninth aspect of the invention is intended to the refrigeration apparatus of the eighth aspect of the invention, in which the detector includes a temperature sensor (46) provided in the power element (37) or the surrounding component (16, 71) thereof, and an air temperature sensor (41) detecting a temperature of air around the power supply device (30), and the forcible opening degree reducer (55) is configured to, when the detection value of the temperature sensor (46) is lower than the detection value of the air temperature sensor (41) and it is determined that the dew condensation state is established, forcibly reduce the degree of opening of the throttle valve (18, 28) on behalf of the opening degree adjuster (52, 59).

In the ninth aspect of the invention, the temperature sensor (46) provided in the power element (37) or the surrounding component (16, 71) thereof, and the air temperature sensor (41) detecting the temperature of air around the power supply device (30) are used as the detectors.

Since it is practically impossible that the relative humidity of air around the power supply device (30)) reaches 100%, the dew-point temperature of air around the power supply device (30) is lower than the temperature of such air (dry-bulb temperature of air around the power supply device (30)). In the state in which the detection value of the temperature sensor (46) is lower than the detection value of the air temperature sensor (41), the temperature of the power element (37) or the surrounding component (16, 71) thereof is close to the dew-point temperature of air around the power supply device (30). Thus, it can be assumed that the dew condensation is highly likely to occur in the power element (37) or surrounding component (16, 71) thereof.

Thus, in the ninth aspect of the invention, when the detection value of the temperature sensor (46) is lower than the detection value of the air temperature sensor (41), the forcible opening degree reducer (55) forcibly reduces the degree of opening of the throttle valve (18, 28) on behalf of the opening degree adjuster (52, 59).

A tenth aspect of the invention is intended to the refrigeration apparatus of the eighth aspect of the invention, in which the detector includes a temperature sensor (46) provided in the power element (37) or the surrounding component (16, 71) thereof, and an air temperature sensor (41) detecting a temperature of air around the power supply device (30), and the forcible opening degree reducer (55) is configured to, when a temperature obtained by adding a preset temperature increase from an installation part of the temperature sensor (46) to an electrical connection part of the power element (37) to the detection value of the temperature sensor (46) is lower than the detection value of the air temperature sensor (41) and it is determined that the dew condensation state is established, forcibly reduce the degree of opening of the throttle valve (18, 28) on behalf of the opening degree adjuster (52, 59).

Even under the temperature environment under which the dew condensation occurs around the cooler (16) during the operation of the refrigeration apparatus, the electrical connection part of the power element (37) where a short circuit may occur due to adherence of dew condensation water may not actually be, because of heat generation of the power element (37), under the temperature environment under which the dew condensation occurs.

Thus, in the tenth aspect of the invention, when the estimated temperature of the electrical connection part of the power element (37) where the short circuit may occur due to the adherence of dew condensation water is lower than an air temperature, the forcible opening degree reducer (55) forcibly reduces the degree of opening of the throttle valve (18, 28).

An eleventh aspect of the invention is intended to the refrigeration apparatus of the eighth aspect of the invention, in which the detector includes a temperature sensor (46) provided in the power element (37) or the surrounding component (16, 71) thereof, and an air temperature sensor (41) detecting a temperature of air around the power supply device (30), and the forcible opening degree reducer (55) is configured to, when the detection value of the temperature sensor (46) is lower than a dew-point temperature corresponding to a preset reference relative humidity at an air temperature detected by the air temperature sensor (41) and it is determined that the dew condensation state is established, forcibly reduce the degree of opening of the throttle valve (18, 28) on behalf of the opening degree adjuster (52, 59).

In the eleventh aspect of the invention, the temperature sensor (46) provided in the power element (37) or the surrounding component (16, 71) thereof, and the air temperature sensor (41) detecting the temperature of air around the power supply device (30) are used as the detectors. When the detection value of the temperature sensor (46) is lower than the dew-point temperature of air around the power supply device (30) which is calculated based on the detection value of the air temperature sensor (41) and the predetermined reference humidity preset as the relative humidity of air around the power supply device (30) considering, e.g., installation environment and a usage time, the forcible opening degree reducer (55) forcibly reduces the degree of opening of the throttle valve (18, 28) on behalf of the opening degree adjuster (52, 59).

A twelfth aspect of the invention is intended to the refrigeration apparatus of the eighth aspect of the invention, in which the detector includes a humidity sensor (47) detecting a relative humidity of air around the power element (37), and the forcible opening degree reducer (55) is configured to, when the detection value of the humidity sensor (47) is higher than a predetermined upper limit and it is determined that the dew condensation state is established, forcibly reduce the degree of opening of the throttle valve (18, 28) on behalf of the opening degree adjuster (52, 59).

In the twelfth aspect of the invention, the humidity sensor (47) detects the relative humidity of air around the power element (37). In addition, when the detection value of the humidity sensor (47) is higher than the predetermined upper limit, the forcible opening degree reducer (55) forcibly reduces the degree of opening of the throttle valve (18, 28) on behalf of the opening degree adjuster (52, 59).

A thirteenth aspect of the invention is intended to the refrigeration apparatus of the eighth aspect of the invention, in which the detector includes a humidity sensor (48) detecting a relative humidity of air around the power supply device (30), an air temperature sensor (41) detecting a temperature of air around the power supply device (30), and a temperature sensor (46) provided in the power element (37) or the surrounding component (16, 71) thereof, and the forcible opening degree reducer (55) is configured to, when the detection value of the temperature sensor (46) is lower than a dew-point temperature calculated based on the relative humidity detected by the humidity sensor (48) and the air temperature detected by the air temperature sensor (41), forcibly reduce the degree of opening of the throttle valve (18, 28) on behalf of the opening degree adjuster (52, 59).

In the thirteenth aspect of the invention, the humidity sensor (48) detecting the relative humidity of air around the power supply device (30), the air temperature sensor (41) detecting the temperature of air around the power supply device (30), and the temperature sensor (46) provided in the power element (37) or the surrounding component (16, 71) thereof are used as the detectors. When the temperature around the power element (37) is lower than the dew-point temperature of air calculated based on the temperature and humidity of the air (outdoor air) before the air is cooled by the cooler (16), the forcible opening degree reducer (55) forcibly reduces the degree of opening of the throttle valve (18, 28) on behalf of the opening degree adjuster (52, 59).

A fourteenth aspect of the invention is intended to the refrigeration apparatus of any one of the second to seventh aspects of the invention, which further includes a dew condensation sensor (45) detecting dew condensation in the power element (37) or the surrounding component (16, 71) thereof; and a forcible opening degree reducer (55) configured to, when a detection value of the dew condensation sensor (45) indicates a dew condensation state in which dew condensation occurs in the power element (37) or the surrounding component (16, 71) thereof, forcibly reduce the degree of opening of the throttle valve (18, 28) on behalf of the opening degree adjuster (52, 59).

In the fourteenth aspect of the invention, the forcible opening degree reducer (55) forcibly reduces the degree of opening of the throttle valve (18, 28) on behalf of the opening degree adjuster (52, 59) not when it is assumed that the dew condensation occurs in the power element (37) or the surrounding component (16, 71) thereof, but when the dew condensation actually occurs in the power element (37) or the surrounding component (16, 71) thereof. This reduces the amount of refrigerant passing through the cooler (16). Thus, the amount of heat absorbed by refrigerant in the cooler (16) is reduced, and therefore the excessive decrease in temperature of the power element (37) or the cooler (16) is reduced.

A fifteenth aspect of the invention is intended to the refrigeration apparatus of any one of the first to fourteenth aspects of the invention, which further includes a closing unit (6) configured to close the branch circuit (10B) upon power shutdown that a power supply to the power supply device (30) is shut down.

When the power supply to the power supply device (30) is shut down due to, e.g., a blackout, a power supply to the power element (37) is also shut down. As a result, the power element (37) no longer generates heat. Meanwhile, in the branch circuit (10B), refrigerant continues flowing until the pressure is balanced. Although the power element (37) does not generate heat, refrigerant continues circulating through the cooler (16). As a result, there is a possibility that the temperature of the cooler (16) is decreased to the temperature at which the dew condensation occurs.

In the fifteenth aspect of the invention, when the power supply to the power supply device (30) is shut down, the closing unit (6) closes the branch circuit (10B). This prevents the refrigerant circulation through the cooler (16). Thus, the decrease in temperature of the cooler (16) is reduced.

A sixteenth aspect of the invention is intended to the refrigeration apparatus of the fifteenth aspect of the invention, in which the closing unit (6) is configured by a solenoid valve (6a) provided in the branch circuit (10B) and switching to a closed state upon the power shutdown.

In the sixteenth aspect of the invention, when the power supply to the power supply device (30) is shut down, the solenoid valve (6a) closes the branch circuit (10B).

A seventeenth aspect of the invention is intended to the refrigeration apparatus of the third aspect of the invention, which further includes a power shutdown adjusting unit (6b) configured to, upon power shutdown that a power supply to the power supply device (30) is shut down, use power generated in a driver of the compressor (11) by rotation of the compressor (11) to adjust at least one of the degrees of opening of the throttle valve (18) and the throttle mechanism (17) to a fully-closed state.

In the seventeenth aspect of the invention, when the power supply to the power supply device (30) is shut down, the power shutdown adjusting unit (6b) uses power generated in the driver by the rotation (rotation using inertia or reverse rotation using a refrigerant pressure) of the compressor (11) to adjust the at least one of the degrees of opening of the throttle valve (18) and the throttle mechanism (17) to the fully-closed state. Then, the power shutdown adjusting unit (6b) closes the branch circuit (10B).

An eighteenth aspect of the invention is intended to the refrigeration apparatus of any one of the first to seventeenth aspects of the invention, which further includes a pump-down controller (98) configured to control the expansion mechanism (13) and at least one of the throttle valve (18) and the throttle mechanism (17) to the fully-closed state to perform a pump-down operation in which refrigerant is stored in the heat-source-side heat exchanger (12), and estimate an overheating point bringing about an overheating state in which a temperature of the power element (37) is highly likely to exceed a predetermined upper limit to complete the pump-down operation before the overheating point.

When the pump-down operation is performed, the at least one of the throttle valve (18) and the throttle mechanism (17) is switched to the fully-closed state to close the branch circuit (10B). Thus, refrigerant no longer flows into the cooler (16). Although the power element (37) cannot be cooled by the cooler (16) and the temperature of the power element (37) is increased, refrigerant does not flow into the cooler (16), and therefore the overheating state of the power element (37) cannot be estimated based on a refrigerant state. As a result, there is a possibility that the power element (37) enters the overheating state during the pump-down operation.

Thus, in the eighteenth aspect of the invention, the pump-down controller (98) is provided, which is configured to perform the pump-down operation, estimate the overheating point bringing about the overheating state of the power element (37) during the pump-down operation, and complete the pump-down operation before the overheating point. Thus, the pump-down operation is completed before the power element (37) enters the overheating state.

A nineteenth aspect of the invention is intended to the refrigeration apparatus of any one of the first to eighteenth aspects of the invention, which further includes a start interrupting unit (99) configured to, when the dew condensation is highly likely to occur in the cooler (16), interrupt the start of the refrigeration apparatus.

Upon the stoppage of the refrigeration apparatus, the dew condensation may be highly likely to occur in the cooler (16) depending on, e.g., a change in environment. If the refrigeration apparatus is started in such a state, there is a possibility that a short circuit is caused in, e.g., the electrical connection part of the power element (37).

In the nineteenth aspect of the invention, when the dew condensation is highly likely to occur in the cooler (16), the start interrupting unit (99) interrupts the start of the refrigeration apparatus. Thus, the start of the refrigeration apparatus is allowed only when the dew condensation is not highly likely to occur in the cooler (16).

A twentieth aspect of the invention is intended to the refrigeration apparatus of any one of the second to seventh aspects of the invention, which further includes a detector (41, 46, 47, 48) configured to detect a physical amount to be an indicator for a possibility of occurrence of dew condensation in the power element (37) or a surrounding component (16, 71) thereof; and a temperature increaser (91) configured to, when a detection value of the detector (41, 46, 47, 48) indicates a dew condensation state in which the dew condensation is highly likely to occur in the power element (37) or the surrounding component (16, 71) thereof, increase a temperature of the power element (37).

In the twentieth aspect of the invention, when the detection value of the detector (41, 46, 47, 48) indicates the dew condensation state in which the dew condensation is highly likely to occur in the power element (37) or the surrounding component (16, 71) thereof, the temperature increaser (91) increases the temperature of the power element (37). This increase the temperature of the surrounding component (16, 71) of the power element (37).

A twenty-first aspect of the invention is intended to the refrigeration apparatus of the twentieth aspect of the invention, in which the detector includes a temperature sensor (46) provided in the power element (37) or the surrounding component (16, 71) thereof, and an air temperature sensor (41) detecting a temperature of air around the power supply device (30), and the temperature increaser (91) is configured to, when the detection value of the temperature sensor (46) is lower than the detection value of the air temperature sensor (41) and it is determined that the dew condensation state is established, increase the temperature of the power element (37).

In the twenty-first aspect of the invention, the temperature sensor (46) provided in the power element (37) or the surrounding component (16, 71) thereof, and the air temperature sensor (41) detecting the temperature of air around the power supply device (30) are used as the detectors.

Since it is practically impossible that the relative humidity of air around the power supply device (30) reaches 100%, the dew-point temperature of air around the power supply device (30) is lower than the temperature of such air (dry-bulb temperature of air around the power supply device (30)). In the state in which the detection value of the temperature sensor (46) is lower than the detection value of the air temperature sensor (41), the temperature of the power element (37) or the surrounding component (16, 71) thereof is close to the dew-point temperature of air around the power supply device (30). Thus, it can be assumed that the dew condensation is highly likely to occur in the power element (37) or surrounding component (16, 71) thereof.

Thus, in the twenty-first aspect of the invention, when the detection value of the temperature sensor (46) is lower than the detection value of the air temperature sensor (41), the temperature increaser (91) increases the temperature of the power element (37).

A twenty-second aspect of the invention is intended to the refrigeration apparatus of the twentieth aspect of the invention, in which the detector includes a temperature sensor (46) provided in the power element (37) or the surrounding component (16, 71) thereof, and an air temperature sensor (41) detecting a temperature of air around the power supply device (30), and the temperature increaser (91) is configured to, when a temperature obtained by adding a preset temperature increase from an installation part of the temperature sensor (46) to an electrical connection part of the power element (37) to the detection value of the temperature sensor (46) is lower than the detection value of the air temperature sensor (41) and it is determined that the dew condensation state is established, increase the temperature of power element (37).

Even under the temperature environment under which the dew condensation occurs around the cooler (16) during the operation of the refrigeration apparatus, the electrical connection part of the power element (37) where the short circuit may occur due to the adherence of dew condensation water may not actually be, because of the heat generation of the power element (37), under the temperature environment under which the dew condensation occurs.

Thus, in the twenty-second aspect of the invention, when the estimated temperature of the electrical connection part of the power element (37) where the short circuit may occur due to the adherence of dew condensation water is lower than the air temperature, the temperature increaser (91) increases the temperature of the power element (37).

A twenty-third aspect of the invention is intended to the refrigeration apparatus of the twentieth aspect of the invention, in which the detector includes a temperature sensor (46) provided in the power element (37) or the surrounding component (16, 71) thereof, and an air temperature sensor (41) detecting a temperature of air around the power supply device (30), and the temperature increaser (91) is configured to, when the detection value of the temperature sensor (46) is lower than a dew-point temperature corresponding to a preset reference relative humidity at an air temperature detected by the air temperature sensor (41) and it is determined that the dew condensation state is established, increase the temperature of the power element (37).

In the twenty-third aspect of the invention, the temperature sensor (46) provided in the power element (37) or the surrounding component (16, 71) thereof, and the air temperature sensor (41) detecting the temperature of air around the power supply device (30) are used as the detectors. When the detection value of the temperature sensor (46) is lower than the dew-point temperature of air around the power supply device (30) which is calculated based on the detection value of the air temperature sensor (41) and the predetermined reference humidity preset as the relative humidity of air around the power supply device (30) considering, e.g., the installation environment and the usage time, the the temperature increaser (91) increases the temperature of the power element (37).

A twenty-fourth aspect of the invention is intended to the refrigeration apparatus of the twentieth aspect of the invention, in which the detector includes a humidity sensor (47) detecting a relative humidity of air around the power element (37), and the temperature increaser (91) is configured to, when the detection value of the humidity sensor (47) is higher than a predetermined upper limit and it is determined that the dew condensation state is established, increase the temperature of the power element (37).

In the twenty-fourth aspect of the invention, the humidity sensor (47) is used as the detector, and detects the relative humidity of air around the power element (37). In addition, when the detection value of the humidity sensor (47) is higher than the predetermined upper humidity limit, the temperature increaser (91) increases the temperature of the power element (37).

A twenty-fifth aspect of the invention is intended to the refrigeration apparatus of the twentieth aspect of the invention, in which the detector includes a humidity sensor (48) detecting a relative humidity of air around the power supply device (30), an air temperature sensor (41) detecting a temperature of air around the power supply device (30), and a temperature sensor (46) provided in the power element (37) or the surrounding component (16, 71) thereof, and the temperature increaser (91) is configured to, when the detection value of the temperature sensor (46) is lower than a dew-point temperature calculated based on the relative humidity detected by the humidity sensor (48) and the air temperature detected by the air temperature sensor (41) and it is determined that the dew condensation state is established, increase the temperature of the power element (37).

In the twenty-fifth aspect of the invention, the humidity sensor (48) detecting the relative humidity of air around the power supply device (30), the air temperature sensor (41) detecting the temperature of air around the power supply device (30), and the temperature sensor (46) provided in the power element (37) or the surrounding component (16, 71) thereof are used as the detectors. When the temperature around the power element (37) is lower than the dew-point temperature of air calculated based on the temperature and humidity of the air (outdoor air) before the air is cooled by the cooler (16), the temperature increaser (91) increases the temperature of the power element (37).

A twenty-sixth aspect of the invention is intended to the refrigeration apparatus of any one of the second to seventh aspects of the invention, which further includes a dew condensation sensor (45) detecting dew condensation in the power element (37) or the surrounding component (16, 71) thereof; and a temperature increaser (91) configured to, when a detection value of the dew condensation sensor (45) indicates a dew condensation state in which dew condensation occurs in the power element (37) or the surrounding component (16, 71) thereof, increase a temperature of the power element (37).

In the twenty-sixth aspect of the invention, the temperature increaser (91) increases the temperature of the power element (37) not when it is assumed that the dew condensation occurs in the power element (37) or the surrounding component (16, 71) thereof, but when the dew condensation actually occurs in the power element (37) or the surrounding component (16, 71) thereof. This increases not only the temperature of the power element (37) but also the temperature of the surrounding component (16, 71) of the power element (37).

A twenty-seventh aspect of the invention is intended to the refrigeration apparatus of any one of the twentieth to twenty-sixth aspects of the invention, in which the temperature increaser (91) includes a heat generation amount increaser (56) increasing an amount of heat generation of the power element (37).

In the twenty-seventh aspect of the invention, the heat generation amount increaser (56) increases the amount of heat generation of the power element (37), thereby increasing the temperature of the power element (37).

A twenty-eighth aspect of the invention is intended to the refrigeration apparatus of any one of the twentieth to twenty-sixth aspects of the invention, in which the temperature increaser (91) includes a heater (95) heating the power element (37).

In the twenty-eighth aspect of the invention, the heater (95) heats the power element (37), thereby increasing the temperature of the power element (37).

A twenty-ninth aspect of the invention is intended to the refrigeration apparatus of the twenty-seventh aspect of the invention, which further includes a heat generation amount resetter (57) configured to, when the dew condensation state is cleared, reset the amount of heat generation of the power element (37) increased by the heat generation amount increaser (56) to a normal state before an increase in heat generation amount.

In the twenty-ninth aspect of the invention, when the heat generation amount increaser (56) increases the amount of heat generation of the power element (37) and then the dew condensation state is cleared, the heat generation amount resetter (57) resets the amount of heat generation of the power element (37) to the normal state before the increase in heat generation amount.

A thirtieth aspect of the invention is intended to the refrigeration apparatus of the twenty-ninth aspect of the invention, which further includes a forcible heat generation amount resetter (58) configured to, after a predetermined time has lapsed since the amount of heat generation of the power element (37) is increased by the heat generation amount increaser (56), forcibly reset the amount of heat generation of the power element (37) increased by the heat generation amount increaser (56) to the normal state before the increase in heat generation amount.

The power element (37) generates high-temperature heat, and tends to be broken down when the temperature thereof is increased beyond a limit temperature. For such a reason, it is not preferable considering protection of the power element (37) that the state in which the amount of heat generation of the power element (37) is large continues for a long period of time. When the dew condensation is highly likely to occur, it is determined that the dew condensation state is established, and then the amount of heat generation of the power element (37) is increased. Although the dew condensation state is actually cleared, it is determined that the dew condensation state is still established. Thus, there is a possibility that the state in which the amount of heat generation of the power element (37) is large continues uselessly.

Thus, in the thirtieth aspect of the invention, after the predetermined time has lapsed since the amount of heat generation of the power element (37) is increased, the amount of heat generation of the power element (37) is forcibly reset to the normal state before the increase in heat generation amount.

A thirty-first aspect of the invention is intended to the refrigeration apparatus of any one of the twenty-seventh, twenty-ninth, and thirties aspects of the invention, in which the heat generation amount increaser (56) increases a current value of the compressor (11) to increase the amount of heat generation of the power element (37) controlling the compressor (11).

In the thirty-first aspect of the invention, power elements (37) controlling components together form a single power module under normal conditions. Thus, when the heat generation amount increaser (56) increases the amount of heat generation of the power element (37) controlling the compressor (11), the temperature of the entirety of the power module is also increased.

A thirty-second aspect of the invention is intended to the refrigeration apparatus of any one of the twenty-seventh, twenty-ninth, and thirties aspects of the invention, in which the power element (37) is a switching element, and the heat generation amount increaser (56) increases a switching frequency of the switching element to increase the amount of heat generation of the power element (37).

In the thirty-second aspect of the invention, when the heat generation amount increaser (56) increases the switching frequency of the switching element, the amount of heat generation of the power element (37) is increased, and then the temperature of the power element (37) and the surrounding component (16, 71) thereof is increased.

A thirty-third aspect of the invention is intended to the refrigeration apparatus of any one of the twenty-seventh, twenty-ninth, and thirties aspects of the invention, in which the power element (37) is a switching element, and the heat generation amount increaser (56) increases a loss of the switching element to increase the amount of heat generation of the power element (37).

In the thirty-third aspect of the invention, when the heat generation amount increaser (56) increases the loss of the switching element serving as the power element (37), the amount of heat generation of the power element (37) is increased, and then the temperature of the power element (37) and the surrounding component (16, 71) thereof is increased.

A thirty-fourth aspect of the invention is intended to the refrigeration apparatus of any one of the twenty-seventh, twenty-ninth, and thirties aspects of the invention, in which the heat generation amount increaser (56) increases a conduction loss of the power element (37) to increase the amount of heat generation of the power element (37).

In the thirty-third aspect of the invention, when the heat generation amount increaser (56) increases the conduction loss of the power element (37), the amount of heat generation of the power element (37) is increased, and then the temperature of the power element (37) and the surrounding component (16, 71) thereof is increased.

### ADVANTAGES OF THE INVENTION

According to the present invention, since the adjusting mechanism (90) is provided to adjust the temperature of refrigerant passing through the cooler (16), the temperature of the cooler (16) can be adjusted to a suitable temperature. That is, the temperature of refrigerant passing through the cooler (16) can be adjusted depending on the amount of heat generation of the power element (37) or the change in installation environment of the power element (37). Thus, insufficient cooling or excessive cooling of the power element (37) by the cooler (16) can be reduced, thereby improving efficiency of cooling of the power element (37) by the cooler (16).

According to the second and third aspects of the invention, the temperature of the cooler (16) can be adjusted to a suitable temperature by a simple configuration. In addition, according to the third aspect of the invention, the moisturizing of refrigerant cooling the power element (37) and returning to the compressor (11) can be prevented. Thus, the breakdown of the compressor (11) due to liquid refrigerant flowing into the compressor (11) can be prevented.

According to the fourth aspect of the invention, since the amount of refrigerant larger than that in the normal operation can circulate through the branch circuit (10B) upon the start of the refrigeration apparatus, the unevenness in temperature of the cooler (16) can be prevented. In addition, after the start of the refrigeration apparatus, refrigerant can promptly reach the cooler (16). Thus, the power element (37) can be sufficiently cooled right after the start of the refrigeration apparatus.

According to the fifth aspect of the invention, the flow of refrigerant into the cooler (16) after the stoppage of the refrigeration apparatus can be reduced by providing the stop controller (97). This reduces the decrease in temperature of the cooler (16). Thus, the occurrence of the dew condensation in the cooler (16) can be prevented, and the breakdown of the power element (37) due to the adherence of dew condensation water can be prevented.

According to the sixth aspect of the invention, since the fixed throttle (4) is provided in parallel to the throttle mechanism (17) provided upstream of the cooler (16), the significantly-low evaporation pressure of refrigerant in the cooler (16) can be prevented upon the breakdown of the throttle mechanism (17). This prevents the excessive decrease in temperature of refrigerant circulating through the cooler (16) and the excess of the cooling capacity of the cooler (16). In addition, the significantly-low flow rate of refrigerant flowing into the cooler (16) can be prevented upon the breakdown of the throttle mechanism (17). This prevents the deficiency of the cooling capacity of the cooler (16).

According to the seventh aspect of the invention, since the fixed throttle (5) is provided in series with the throttle valve (18, 28), the significantly-low evaporation pressure of refrigerant in the cooler (16) can be prevented upon the breakdown of the throttle valve (18, 28). This prevents the excessive decrease in temperature of refrigerant circulating through the cooler (16) and the excess of the cooling capacity of the cooler (16). In addition, upon the breakdown of the throttle valve (18, 28), the fixed throttle (5) can control the amount of refrigerant flowing out from the cooler (16) not to be significantly large. This prevents refrigerant branched from the main flow from uselessly passing through the cooler (16) without the sufficient heat exchange with the power element (37).

According to the eighth aspect of the invention, when the detection value of the detector (41, 46, 47, 48) indicates the dew condensation state in which the dew condensation is highly likely to occur in the power element (37) or the surrounding component (16, 71) thereof, the forcible opening degree reducer (55) forcibly reduces the degree of opening of the throttle valve (18, 28). Thus, since the amount of refrigerant passing through the cooler (16) is reduced, and the amount of heat absorbed by refrigerant in the cooler (16) is reduced, the excessive decrease in temperature of the power element (37) or the cooler (16) can be reduced. The occurrence of the dew condensation in the power element (37) and the surrounding component (16, 71) thereof can be reduced. In addition, corrosion of, e.g., metal components arranged near the power element (37) and the surrounding components (16, 71) thereof and degradation of insulating performance of the power element (37) can be prevented.

According to the ninth to eleventh aspects of the invention, since the temperature sensor (46) and the air temperature sensor (41) are used, it can be easily detected with high accuracy that the dew condensation is highly likely to occur in the power element (37) or the surrounding components (16, 71) thereof. In addition, the occurrence of the dew condensation can be prevented.

According to the tenth aspect of the invention, when the estimated temperature of the electrical connection part of the power element (37) where the short circuit may occur due to the adherence of dew condensation water is lower than the air temperature, the degree of opening of the throttle valve (18, 28) is forcibly reduced by the forcible opening degree reducer (55). Thus, the temperature of refrigerant in the cooler (16) can be reduced to the lowest possible temperature at which the dew condensation does not occur in the electrical connection part of the power element (37). Thus, the breakdown of the power element (37) can be prevented, and performance of the cooler (16) can be improved.

According to the twelfth aspect of the invention, since the humidity sensor (47) is used, it can be easily detected with high accuracy that the dew condensation is highly likely to occur in the power element (37) or the surrounding components (16, 71) thereof. In addition, the occurrence of the dew condensation can be prevented.

According to the thirteenth aspect of the invention, since the humidity sensor (48), the air temperature sensor (41), and the temperature sensor (46) are used, it can be easily detected with high accuracy that the dew condensation is highly likely to occur in the power element (37) or the surrounding components (16, 71) thereof. In addition, since the amount of heat generation of the power element (37) is increased when the possibility of the occurrence of the dew condensation is increased, the occurrence of the dew condensation can be prevented.

According to the fourteenth aspect of the invention, when the detection value of the dew condensation sensor (45) indicates the dew condensation state in which the dew condensation occurs in the power element (37) or the surrounding component (16, 71) thereof, the forcible opening degree reducer (55) forcibly reduces the degree of opening of the throttle valve (18, 28). Thus, since the amount of refrigerant passing through the cooler (16) is reduced, and the amount of heat absorbed by refrigerant in the cooler (16) is reduced, the excessive decrease in temperature of the power element (37) or the cooler (16) can be reduced. The occurrence of the dew condensation in the power element (37) and the surrounding component (16, 71) thereof can be reduced. In addition, the corrosion of, e.g., the metal components arranged near the power element (37) and the surrounding components (16, 71) thereof and the degradation of the insulating performance of the power element (37) can be prevented.

According to the fifteenth and sixteenth aspects of the invention, the closing unit (6) is provided. Thus, upon the power shutdown such as the blackout, the circulation of refrigeration through the cooler (16) can be blocked, and the decrease in temperature of the cooler (16) can be reduced. Consequently, the occurrence of the dew condensation can be prevented, and the breakdown of the power element (37) due to the adherence of dew condensation water can be prevented.

According to the sixteenth aspect of the invention, the closing unit (6) can be easily configured.

According to the seventeenth aspect of the invention, the power shutdown adjusting unit (6b) is provided. Thus, upon the power shutdown such as the blackout, the circulation of refrigeration through the cooler (16) can be blocked, and the decrease in temperature of the cooler (16) can be reduced. Consequently, the occurrence of the dew condensation can be prevented, and the breakdown of the power element (37) due to the adherence of dew condensation water can be prevented.

According to the eighteenth aspect of the invention, the pump-down controller (98) is provided, which is configured to perform the pump-down operation, estimate the overheating point bringing about the overheating state of the power element (37) during the pump-down operation, and complete the pump-down operation before the overheating point. Thus, the breakdown of the power element (37) can be prevented, and it can be ensured that the pump-down operation is performed.

According to the nineteenth aspect of the invention, since the start interrupting unit (99) interrupts the start of the refrigeration apparatus when the dew condensation is highly likely to occur in the cooler (16), the short circuit in, e.g., the electrical connection part of the power element (37) upon the start of the refrigeration apparatus can be prevented. In other words, the start of the refrigeration apparatus is allowed only when there is no possibility that the short circuit is caused, thereby ensuring safety upon the start of the refrigeration apparatus.

According to the twentieth aspect of the invention, when the detection value of the detector (41, 46, 47, 48) indicates the dew condensation state in which the dew condensation is highly likely to occur in the power element (37) or the surrounding component (16, 71) thereof, the temperature increaser (91) increases the temperature of the power element (37) and the temperature of the surrounding component (16, 71) of the power element (37). This reduces the occurrence of the dew condensation in the power element (37) and the surrounding component (16, 71) thereof. In addition, the corrosion of, e.g., the metal components arranged near the power element (37) and the surrounding components (16, 71) thereof and the degradation of the insulating performance of the power element (37) can be prevented.

According to the twenty-first to twenty-third aspects of the invention, since the temperature sensor (46) and the air temperature sensor (41) are used, it can be easily detected with high accuracy that the dew condensation is highly likely to occur in the power element (37) or the surrounding components (16, 71) thereof. In addition, the occurrence of the dew condensation can be prevented.

According to the twenty-second aspect of the invention, when there is no possibility that the dew condensation occurs in the electrical connection part of the power element (37) where the short circuit may occur due to the adherence of dew condensation water, the temperature increaser (91) can prevent the temperature of the power element (37) from being uselessly increased. Thus, the breakdown of the power element (37) can be prevented without uselessly increasing the amount of heat generation of the power element (37).

According to the twenty-fourth aspect of the invention, since the humidity sensor (47) is used, it can be easily detected with high accuracy that the dew condensation is highly likely to occur in the power element (37) or the surrounding components (16, 71) thereof. In addition, the occurrence of the dew condensation can be prevented.

According to the twenty-fifth aspect of the invention, since the humidity sensor (48), the air temperature sensor (41), and the temperature sensor (46) are used, it can be easily detected with high accuracy that the dew condensation is highly likely to occur in the power element (37) or the surrounding components (16, 71) thereof. In addition, since the amount of heat generation of the power element (37) is increased when the possibility of the occurrence of the dew condensation is increased, the occurrence of the dew condensation can be prevented.

According to the twenty-sixth aspect of the invention, when the detection value of the dew condensation sensor (45) indicates the dew condensation state in which the dew condensation occurs in the power element (37) or the surrounding component (16, 71) thereof, the temperature increaser (91) increases the temperature of the power element (37) and the temperature of the surrounding component (16, 71) thereof. Thus, the occurrence of the dew condensation in the power element (37) and the surrounding component (16, 71) thereof can be reduced. In addition, the corrosion of, e.g., the metal components arranged near the power element (37) and the surrounding components (16, 71) thereof and the degradation of the insulating performance of the power element (37) can be prevented.

According to the twenty-seventh aspect of the invention, the amount of heat generation of the power element (37) is increased without separately using, e.g., a heating unit, thereby easily increasing the temperature of the power element (37).

According to the twenty-eighth aspect of the invention, the temperature of the power element (37) can be easily increased by using the heater (95).

According to the twenty-ninth aspect of the invention, the detector can detect with high accuracy that the dew condensation state is cleared. As soon as the dew condensation state is cleared, the amount of heat generation of the power element (37) can be reset to the normal state. Thus, a heat loss caused due to the increase in amount of heat generation of the power element (37) can be suppressed to the minimum.

According to the thirtieth aspect of the invention, since the amount of heat generation of the power element (37) is forcibly reset after the lapse of the predetermined time from the increase in amount of heat generation of the power element (37), the breakdown of the power element (37) can be prevented, and the heat loss of the power element (37) can be reduced.

According to the thirty-first aspect of the invention, the current value of the compressor (11) is increased to increase the amount of heat generation of the power element (37) controlling the compressor (11) without separately using, e.g., the heating unit. Thus, the temperature of the entirety of the power module can be increased. Thus, the occurrence of the dew condensation in the power element (37) or the surrounding component (16, 71) thereof can be easily reduced.

According to the thirty-second to thirty-fourth aspects of the invention, the amount of heat generation of the power element (37) is easily increased without separately using, e.g., a heating unit, thereby reducing the occurrence of the dew condensation in the power element (37) or the surrounding component (16, 71) thereof.

### BRIEF DESCRIPTION OF THE DRAWINGS

[FIG. 1] FIG. 1 is a piping diagram illustrating a configuration of a refrigeration apparatus of a first embodiment of the present invention.
[FIG. 2] FIG. 2 is a diagram illustrating a drive circuit of a power supply device of the first embodiment.
[FIG. 3] FIG. 3 is a cross-sectional view illustrating a vicinity of a power element(s) and a cooler of the first embodiment.
[FIG. 4] FIG. 4 is a flow chart illustrating a dew condensation reduction operation control of the first embodiment.
[FIG. 5] FIG. 5 is a cross-sectional view illustrating a vicinity of a power element(s) and a cooler of a second embodiment.
[FIG. 6] FIG. 6 is a flow chart illustrating a dew condensation reduction operation control of the second embodiment.
[FIG. 7] FIG. 7 is a flow chart illustrating a dew condensation reduction operation control of a third embodiment.
[FIG. 8] FIG. 8 is a flow chart illustrating a dew condensation reduction operation control of a fourth embodiment.
[FIG. 9] FIG. 9 is a cross-sectional view illustrating a vicinity of a power element(s) and a cooler of a fifth embodiment.
[FIG. 10] FIG. 10 is a flow chart illustrating a dew condensation reduction operation control of the fifth embodiment.
[FIG. 11] FIG. 11 is a cross-sectional view illustrating a vicinity of a power element(s) and a cooler of a sixth embodiment.
[FIG. 12] FIG. 12 is a flow chart illustrating a dew condensation reduction operation control of the sixth embodiment.
[FIG. 13] FIG. 13 is a piping diagram illustrating a configuration of a refrigeration apparatus of a seventh embodiment.
[FIG. 14] FIG. 14 is a flow chart illustrating a dew condensation reduction operation control of the seventh embodiment.
[FIG. 15] FIG. 15 is a flow chart illustrating a dew condensation reduction operation control of an eighth embodiment.
[FIG. 16] FIG. 16 is a flow chart illustrating a dew condensation reduction operation control of a ninth embodiment.
[FIG. 17] FIG. 10 is a flow chart illustrating a dew condensation reduction operation control of a tenth embodiment.
[FIG. 18] FIG. 18 is a flow chart illustrating a dew condensation reduction operation control of an eleventh embodiment.
[FIG. 19] FIG. 19 is a flow chart illustrating a dew condensation reduction operation control of a twelfth embodiment.
[FIG. 20] FIG. 20(a) illustrates an ON/OFF control of a switching element in a normal operation control of a thirteenth embodiment over time. FIG. 20(b) illustrates an ON/OFF control of a switching element in a dew condensation reduction operation control of the thirteenth embodiment over time.
[FIG. 21] FIGS. 21(a) and 21(c) respectively illustrate examples of a base circuit of a power supply device of a fourteenth embodiment. FIG. 21 (b) is a graph illustrating base voltage in a normal operation and a dew condensation reduction operation of the fourteenth embodiment over time.
[FIG. 22] FIG. 22 is a graph illustrating, in a first example of a fifteenth embodiment where a conduction loss of a power element is increased, a relationship between a current phase input from a drive circuit to a driver and the conduction loss of the power element.
[FIG. 23] FIG. 23 is a graph illustrating, in a second example of the fifteenth embodiment where a conduction loss of a power element is increased, a comparison of emitter-collector voltage between a normal operation control and a dew condensation reduction operation control.
[FIG. 24] FIG. 24 illustrates, in the second example of the fifteenth embodiment where the conduction loss of the power element is increased, an example of a drive circuit configured to fluctuate the emitter-collector voltage.
[FIG. 25] FIG. 25 is a piping diagram illustrating a configuration of a refrigeration apparatus of a sixteenth embodiment.
[FIG. 26] FIG. 26 is a piping diagram illustrating a configuration of a refrigeration apparatus of a seventeenth embodiment.
[FIG. 27] FIG. 27 is a piping diagram illustrating a configuration of a refrigeration apparatus of an eighteenth embodiment.
[FIG. 28] FIG. 28 is a piping diagram illustrating a configuration of a refrigeration apparatus of a nineteenth embodiment.
[FIG. 29] FIG. 29 is a piping diagram illustrating a configuration of a refrigeration apparatus of a twentieth embodiment.
[FIG. 30] FIG. 30 is a piping diagram illustrating another configuration of the refrigeration apparatus of the twentieth embodiment.
[FIG. 31] FIG. 31 is a piping diagram illustrating a configuration of a refrigeration apparatus of a twenty-second embodiment.
[FIG. 32] FIG. 32 is a piping diagram illustrating a configuration of a refrigeration apparatus of a twenty-third embodiment.
[FIG. 33] FIG. 33 is a piping diagram illustrating a configuration of a refrigeration apparatus of a twenty-fourth embodiment.
[FIG. 34] FIG. 34 is a piping diagram illustrating a configuration of a refrigeration apparatus of a twenty-fifth embodiment.
[FIG. 35] FIG. 35 is a piping diagram illustrating a configuration of a refrigeration apparatus of a twenty-sixth embodiment.
[FIG. 36] FIG. 36 is a piping diagram illustrating a configuration of a refrigeration apparatus of a twenty-seventh embodiment.
[FIG. 37] FIG. 37 is a piping diagram illustrating a configuration of a refrigeration apparatus of a twenty-eighth embodiment.

### DESCRIPTION OF EMBODIMENTS

Embodiments of the present invention will be described below in detail with reference to drawings.

### «First Embodiment of the Invention»

### Entire Configuration

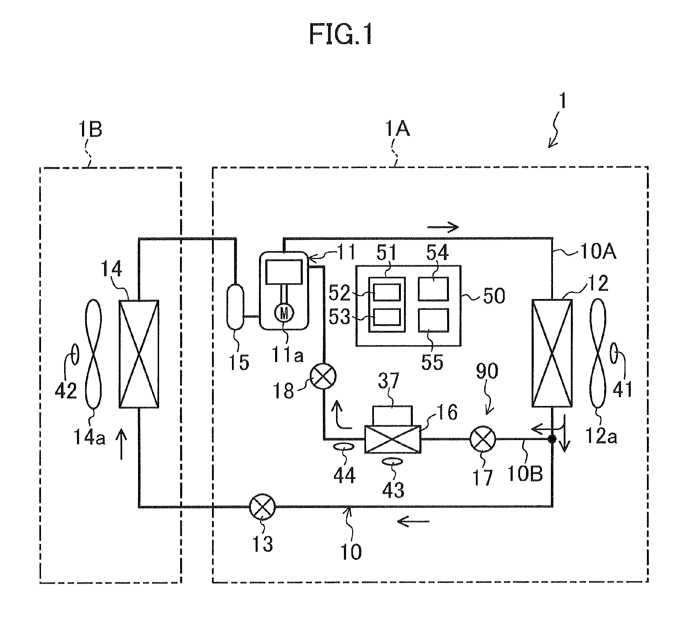

As illustrated in FIG. 1, a refrigeration apparatus (1) of an embodiment of the present invention includes a heat-source-side unit (1A) and a utilization-side unit (1B), and further includes a refrigerant circuit (10) configured to perform a vapor compression refrigeration cycle. The refrigeration apparatus of the present invention may be, e.g., an air conditioning apparatus or a cooling apparatus configured to cool an inside of a refrigerator or a freezer. In the present embodiment, an air conditioning apparatus configured to cool air inside a room will be described as an example.

The refrigerant circuit (10) includes a main circuit (10A) in which a compressor (11), a heat-source-side heat exchanger (12), an expansion valve (13), and a utilization-side heat exchanger (14) are connected together in this order through refrigerant pipes. Note that, in a first embodiment, the main circuit (10A) is configured such that refrigerant circulates in one direction and do not circulate in an opposite direction. Thus, in the present embodiment, the heat-source-side heat exchanger (12) functions as a condenser on every occasion, and the utilization-side heat exchanger (14) functions as an evaporator on every occasion. In the first embodiment, each of the heat-source-side heat exchanger (12) and the utilization-side heat exchanger (14) is a cross-fin type fin-and-tube heat exchanger, and is configured to exchange heat between refrigerant of the main circuit (10A) and air.

The compressor (11) includes a motor (11a) rotatably driven by a power supply device (30) which will be described later. Although the details will be described later, the motor (11a) is configured such that the rotational speed thereof is adjustable by the power supply device (30). An accumulator (15) configured to remove liquid refrigerant contained in refrigerant and supply only gas refrigerant to the compressor (11) is provided on an inlet side of the compressor (11).

The refrigerant circuit (10) further includes a branch circuit (10B) branched from part of the main circuit (10A) between the heat-source-side heat exchanger (12) and the expansion valve (13). An outlet end of the branch circuit (10B) is connected to the compressor (11). Note that, in the first embodiment, the outlet end of the branch circuit (10B) is connected to an intermediate port of the compressor (11) communicating with a compression chamber in the middle of compression.

In the branch circuit (10B), a cooler (16) configured to cool a power element(s) (37) which will be described later is provided. A first throttle valve (18) and a second throttle valve (17), the degree of opening of each of which is variable, are provided downstream and upstream of the cooler (16) of the branch circuit (10B), respectively.

A heat-source-side fan (12a) is provided near the heat-source-side heat exchanger (12), and a utilization-side fan (14a) is provided near the utilization-side heat exchanger (14). The compressor (11), the heat-source-side heat exchanger (12), the heat-source-side fan (12a), the expansion valve (13), and the branch circuit (10B) are provided in the heat-source-side unit (1A). The utilization-side heat exchanger (14) and the utilization-side fan (14a) are provided in the utilization-side unit (1B).

### <Power Supply Device>

The power supply device (30) configured to supply power to each of drivers of components of the refrigerant circuit (10) is provided in the heat-source-side unit (1A).

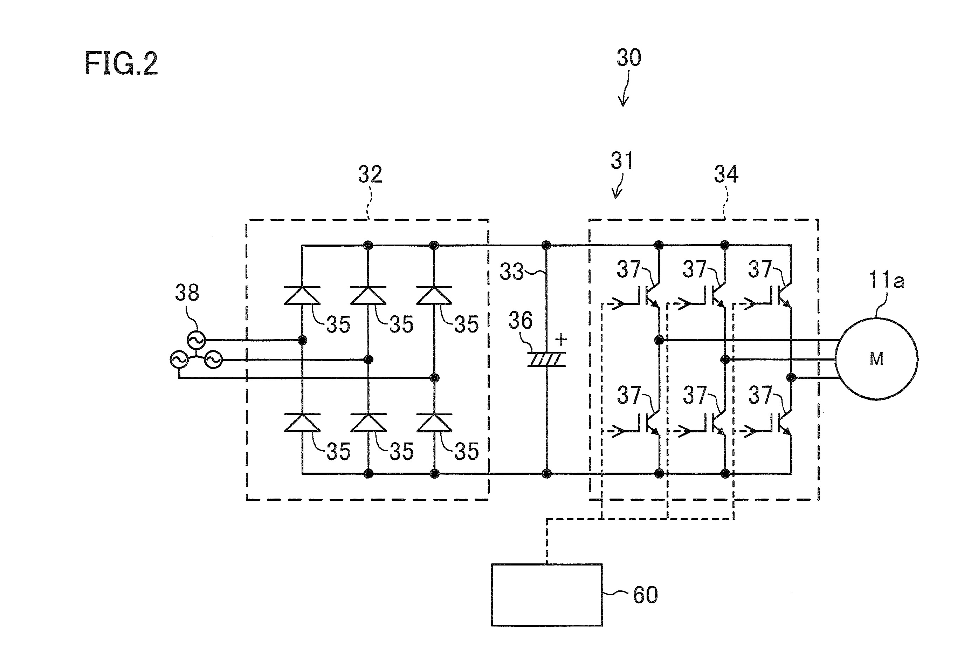

As illustrated in FIG. 2, the power supply device (30) includes a drive circuit (31) configured to control and convert power supplied to the drivers such as the motor (11a) of the compressor (11). Note that, as an example of the drive circuit (31), FIG. 2 illustrates the drive circuit (31) for the compressor (11), which is connected to the motor (11a) of the compressor (11). The drive circuit (31) includes a rectifier circuit (32) connected to a commercial power source (38), a capacitor circuit (33), and an inverter circuit (34) connected to the motor (11a) of the compressor (11), i.e., the driver of the compressor (11).

The rectifier circuit (32) is connected to the commercial power source (38) which is a three-phase AC power source. The rectifier circuit (32) is a circuit configured to convert AC voltage of the commercial power source (38) into DC voltage, and six diodes (35) are connected together in a three-phase bridge configuration.

The capacitor circuit (33) is connected between the rectifier circuit (32) and the inverter circuit (34), and includes a capacitor (36).

The inverter circuit (34) is configured to convert DC voltage of the capacitor circuit (33) into three-phase AC voltage and supply the converted AC voltage to the motor (11a) which is a load. In the inverter circuit (34), six switching elements are connected together in a three-phase bridge configuration. Note that the switching element is the power element (37) of the present invention, and, e.g., an insulated gate bipolar transistor (IGBT) or a MOS field effect transistor (MOS-FET) is used as the switching element. In the inverter circuit (34), switching of the switching element(s) is controlled to increase/decrease AC voltage output to the motor (11a) and the frequency of the AC voltage, thereby adjusting the rotational speed of the motor (11a). Note that the switching of the switching element(s) is controlled by a control device (60).

According to the foregoing configuration, in the power supply device (30), after AC voltage of the commercial power source (38) is converted into DC voltage in the rectifier circuit (32), and the DC voltage is converted into AC voltage having a desired frequency in the inverter circuit (34), the AC voltage is supplied to the drivers such as the motor (11a) of the compressor (11).

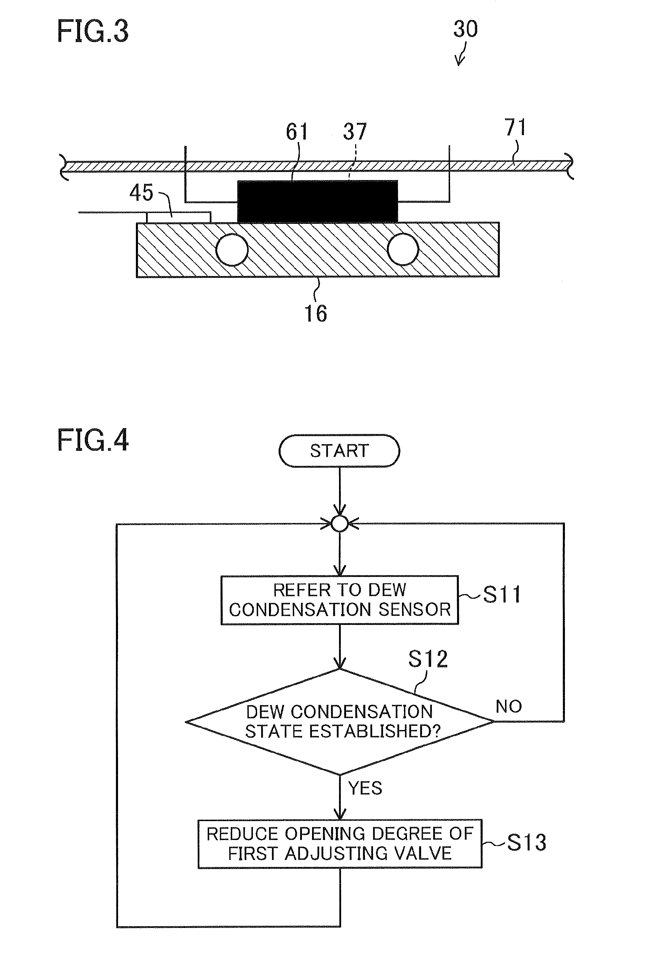

As illustrated in FIG. 3, in the present embodiment, the power elements (37) of the drive circuits (31) for the compressor (11) and the other components together form a single power module (61). The power module (61) and other electric components (not shown in the figure) are mounted on a substrate (71) provided in the heat-source-side unit (1A).

### <Cooler>

The power element(s) (37) generates high-temperature heat when the refrigeration apparatus (1) is started. Thus, the cooler (16) configured to cool the power element(s) (37) by refrigerant flowing through the refrigerant circuit (10) is provided. As described above, in the present embodiment, the power elements (37) for the components together form the single power module (61). Thus, as illustrated in FIG. 3, the cooler (16) is provided so as to cool the power module (61).

The cooler (16) is made of, e.g., metal such as aluminum in a flat rectangular parallelepiped shape, and a refrigerant flow path through which refrigerant circulates is formed inside the cooler (16). The refrigerant flow path may be formed by inserting part of the refrigerant pipe or may be formed by connecting the refrigerant pipe to a tubular through-hole. In the present embodiment, the refrigerant flow path is formed by part of the branch circuit (10B) of the refrigerant circuit (10) inserted into the cooler (16) (see FIG. 1).

According to the foregoing configuration, the cooler (16) is configured such that refrigerant flowing through the refrigerant circuit (10) can circulate through the cooler (16). In addition, since the cooler (16) is made of the metal such as aluminum, cold heat of refrigerant circulating through the cooler (16) is transferred to an outer surface of the cooler (16).

### <Detector>

As illustrated in FIG. 1, in the heat-source-side unit (1A), an outdoor air temperature sensor (41) configured to detect an outdoor air temperature (air temperature before air passes through the heat-source-side heat exchanger (12)) is provided. On the other hand, in the utilization-side unit (1B), a room temperature sensor (42) configured to detect a room temperature (air temperature before air passes through the utilization-side heat exchanger (14)) is provided.

In the cooler (16), an evaporation temperature sensor (43) configured to detect the evaporation temperature of refrigerant in the cooler (16) is provided. An outlet temperature sensor (44) configured to detect a refrigerant temperature at an outlet of the cooler (16) is provided downstream of the cooler (16) in the branch circuit (10B).

As illustrated in FIG. 3, a dew condensation sensor (45) configured to detect dew condensation in the cooler (16) is provided in the cooler (16). The dew condensation sensor (45) is attached to a surface of the cooler (16) facing the power module (61).

The outdoor air temperature sensor (41), the room temperature sensor (42), the evaporation temperature sensor (43), the outlet temperature sensor (44), and the dew condensation sensor (45) are connected to an operation control device (50) which will be described later, and transmit detection signals to the operation control device (50).

### <Operation Control Device>

In the heat-source-side unit (1A), the operation control device (50) configured to control the drivers of the components of the refrigerant circuit (10) is provided. The operation control device (50) is connected to the control device (60) connected to each of the drive circuits (31), and is configured to transmit a control signal for controlling each of the drive circuits (31).

The control device (60) controls the switching of the switching element(s) serving as the power element(s) (37) based on the control signal from the operation control device (50), thereby controlling AC voltage supplied to each of the drivers and the frequency of the AC voltage. Specifically, the operation control device (50) transmits control signals to the control devices (60) based on detection values of, e.g., the outdoor air temperature sensor (41) and the room temperature sensor (42) such that each of the drivers is in a desired state (e.g., the motor (11a) has a desired rotational speed). The control device (60) converts the control signal into a drive signal, and outputs the drive signal to the drive circuit (31) of the driver. The drive signal is input to a base circuit (not shown in the figure) of each of the switching elements, and ON/OFF of each of the switching elements is controlled. This controls AC voltage supplied to each of the drivers to desired voltage and frequency, and, e.g., the rotational speed of the motor (11a) is changed to a desired rotational speed.

The operation control device (50) includes a normal operator (51) configured to perform a normal operation by adjusting the temperature and the degree of superheating of refrigerant passing through the cooler (16), a dew condensation determinator (54), and a forcible opening degree reducer (55). The dew condensation determinator (54) and the forcible opening degree reducer (55) are configured to perform a dew condensation reduction operation which will be described later. The normal operator (51) includes a first opening degree adjuster (52) configured to adjust the degree of opening of the first throttle valve (18), and a second opening degree adjuster (53) configured to adjust the degree of opening of the second throttle valve (17).

The first opening degree adjuster (52) adjusts the degree of opening of the first throttle valve (18) such that the evaporation temperature of refrigerant in the cooler (16) reaches a target temperature. Specifically, the first opening degree adjuster (52) reduces the degree of opening of the first throttle valve (18) when a detection value of the evaporation temperature sensor (43) is lower than the target temperature, and increases the degree of opening of the first throttle valve (18) when the detection value of the evaporation temperature sensor (43) is higher than the target temperature.

The second opening degree adjuster (53) adjusts the degree of opening of the second throttle valve (17) such that the degree of superheating of refrigerant at the outlet of the cooler (16) reaches a target degree of superheating. Specifically, the second opening degree adjuster (53) reduces the degree of opening of the second throttle valve (17) when a value obtained by subtracting a detection value of the evaporation temperature sensor (43) from a detection value of the outlet temperature sensor (44) (i.e., the degree of superheating of refrigerant at the outlet of the cooler (16)) is smaller than the target degree of superheating. The second opening degree adjuster (53) increases the degree of opening of the second throttle valve (17) when the foregoing value is larger than the target degree of superheating.

The dew condensation determinator (54) refers to a detection value (dew condensation signal) of the dew condensation sensor (45), and determines based on the detection value whether or not a dew condensation state in which the dew condensation occurs in the cooler (16) is established.

When the dew condensation determinator (54) determines that the dew condensation state is established, the forcible opening degree reducer (55) forcibly reduces the degree of opening of the first throttle valve (18) on behalf of the first opening degree adjuster (52).

In the first embodiment, the first throttle valve (18), the second throttle valve (17), the first opening degree adjuster (52), and the second opening degree adjuster (53) form an adjusting mechanism (90) of the present invention. Note that the adjusting mechanism (90) of the present invention does not necessarily include the second opening degree adjuster (53).

### Operation

In the main circuit (10A) of the refrigerant circuit (10), when the compressor (11) is driven, refrigerant circulates in a direction indicated by arrows of FIG. 1, thereby performing the vapor compression refrigeration cycle in which the heat-source-side heat exchanger (12) functions as the condenser and the utilization-side heat exchanger (14) functions as the evaporator. In the utilization-side heat exchanger (14), refrigerant flowing through the utilization-side heat exchanger (14) functioning as the evaporator absorbs heat from air taken by the utilization-side fan (14a), and the air is cooled. The cooled air is discharged to a room or a container by the utilization-side fan (14a) to cool an inside of the room or the container.

### <Cooling of Power Element>

When the compressor (11) is driven, part of high-pressure liquid refrigerant condensed in the heat-source-side heat exchanger (12) of the main circuit (10A) is branched and flows into the branch circuit (10B) of the refrigerant circuit (10). The high-pressure liquid refrigerant flowing into the branch circuit (10B) passes through the first throttle valve (18), and then flows into the cooler (16). In the cooler (16), the power module (61) formed by the plurality of power elements (37) is cooled by dissipating heat to the refrigerant flowing through the cooler (16).

### <Control by Control Device>

The operation control device (50) configured to control power supplied to the drivers of the components of the refrigerant circuit (10) performs a normal operation control and a dew condensation reduction operation control as described below.

### «Normal Operation Control»

The operation control device (50) controls the components of the refrigerant circuit (10) based on detection values of the room temperature sensor (42) and the outdoor air temperature sensor (41) such that a room temperature reaches a desired temperature. For, e.g., the motor (11a) of the compressor (11), the operation control device (50) increases the rotational speed of the motor (11a) of the compressor (11) when the room temperature is higher than the desired temperature, and decreases the rotational speed of the motor (11a) of the compressor (11) when the room temperature is lower than the desired temperature.

The normal operator (51) of the operation control device (50) adjusts the temperature and the degree of superheating of refrigerant passing through the cooler (16). Specifically, the first opening degree adjuster (52) adjusts the degree of opening of the first throttle valve (18) such that the evaporation temperature of refrigerant in the cooler (16) reaches the target temperature. In addition, the second opening degree adjuster (53) adjusts the degree of opening of the second throttle valve (17) such that the degree of superheating of refrigerant at the outlet of the cooler (16) reaches the target degree of superheating. More specifically, the first opening degree adjuster (52) reduces the degree of opening of the first throttle valve (18) when the evaporation temperature of refrigerant in the cooler (16) is lower than the target temperature, and increases the degree of opening of the first throttle valve (18) when the evaporation temperature of refrigerant in the cooler (16) is higher than the target temperature. In addition, the second opening degree adjuster (53) reduces the degree of opening of the second throttle valve (17) when the degree of superheating of refrigerant at the outlet of the cooler (16) is smaller than the target degree of superheating, and increases the degree of opening of the second throttle valve (17) when the degree of superheating of refrigerant at the outlet of the cooler (16) is larger than the target degree of superheating. Thus, the temperature of refrigerant passing through the cooler (16) can be the target temperature, and moisturizing of refrigerant to be introduced into the compressor (11) can be prevented.

### «Dew Condensation Reduction Operation Control»

As described above, depending on operation conditions or outdoor air conditions, the temperatures of the cooler (16) and surrounding components thereof (e.g., the power module (61) and the substrate (71)) may fall below the dew-point temperature of surrounding air, and therefore the dew condensation may occur in the cooler (16) and the surrounding components thereof. Thus, in parallel with the normal operation control, the dew condensation reduction operation control which will be described below is performed at predetermined time intervals (e.g., at intervals of 30 seconds).

As illustrated in FIG. 4, the dew condensation determinator (54) first refers to a dew condensation signal from the dew condensation sensor (45) (step S11), and then determines whether or not the dew condensation state in which the dew condensation occurs in the cooler (16) is established (step S12). If the dew condensation determinator (54) determines that the dew condensation state is established, the forcible opening degree reducer (55) forcibly reduces the degree of opening of the first throttle valve (first adjusting valve) (18) by a predetermined value on behalf of the first opening degree adjuster (52) (step S 13).

When the degree of opening of the first throttle valve (18) is forcibly reduced, the amount of refrigerant flowing into the branch circuit (10B) is reduced, and therefore the amount of heat absorbed by refrigerant in the cooler (16) (the amount of heat dissipated from the power module (61)) is reduced. Thus, the dew condensation in the power module (61) and the surrounding components thereof is reduced, and the dew condensation state in the cooler (16) is cleared.

After the degree of opening of the first throttle valve (18) is forcibly reduced by the forcible opening degree reducer (55) as described above, the process returns to step S11, and the operation control device (50) repeats the same process. As a result, while the dew condensation determinator (54) determines that the dew condensation state is established, the degree of opening of the first throttle valve (18) is reduced by the forcible opening degree reducer (55) every time the dew condensation reduction operation control is performed. When the dew condensation determinator (54) no longer determines that the dew condensation state is established, the operation control device (50) resumes the normal operation control, and adjusts the degree of opening of the first throttle valve (18) such that the evaporation temperature of refrigerant in the cooler (16) reaches the target temperature.

### Advantages of First Embodiment

As described above, according to the first embodiment, since the adjusting mechanism (90) is provided to adjust the temperature of refrigerant passing through the cooler (16), the temperature of the cooler (16) can be adjusted to a suitable temperature. That is, the temperature of refrigerant passing through the cooler (16) can be adjusted depending on the amount of heat generation of the power element(s) (37) or a change in installation environment of the power element(s) (37). Thus, insufficient cooling or excessive cooling of the power element(s) (37) by the cooler (16) can be reduced, thereby improving efficiency of cooling of the power element(s) (37) by the cooler (16).

According to the first embodiment, since the first opening degree adjuster (52) configured to adjust the degree of opening of the first throttle valve (18) such that the evaporation temperature of refrigerant in the cooler (16) reaches the target temperature is provided, the temperature of the cooler (16) can be adjusted to a suitable temperature by a simple configuration.

According to the first embodiment, since the second opening degree adjuster (53) configured to adjust the degree of opening of the second throttle valve (17) such that the degree of superheating of refrigerant at the outlet of the cooler (16) reaches the target degree of superheating is provided, the moisturizing of refrigerant cooling the power element(s) (37) and returning to the compressor (11) can be prevented. Thus, a breakdown of the compressor (11) due to liquid refrigerant flowing into the compressor (11) can be prevented.

According to the first embodiment, since the dew condensation determinator (54) and the forcible opening degree reducer (55) are provided, the degree of opening of the first throttle valve (18) is forcibly reduced by the forcible opening degree reducer (55) when the dew condensation determinator (54) determines that the dew condensation state is established. As a result, the amount of refrigerant flowing into the cooler (16) is reduced, and the amount of heat absorbed by refrigerant in the cooler (16) is reduced. Thus, an excessive decrease in temperature of the power element(s) (37) or the cooler (16) can be reduced. Consequently, the occurrence of the dew condensation in the power element(s) (37) and the surrounding components (16, 71) thereof can be reduced, and corrosion of, e.g., metal components arranged near the power element(s) (37) and the surrounding components (16, 71) thereof and degradation of insulating performance of the power element(s) (37) can be prevented.

According to the first embodiment, since the dew condensation sensor (45) is used, the occurrence of the dew condensation can be easily detected with high accuracy.

Under normal conditions, the cooler (16) configured to cool the power element(s) (37) has a temperature lower than that of the power element(s) (37) during the operation of the refrigeration apparatus (1). Thus, it is likely that the dew condensation occurs in the cooler (16) before the dew condensation occurs in the power element(s) (37).

In the present embodiment, since the dew condensation sensor (45) is attached to the cooler (16), the occurrence of the dew condensation can be detected at a relatively early stage. Thus, e.g., when the dew condensation occurs in the cooler (16) and does not occur in the power element(s) (37), the degree of opening of the first throttle valve (18) is reduced to prevent the dew condensation from occurring in the power element(s) (37).

The dew condensation sensor (45) may be attached to the power element(s) (37) (in the present embodiment, the power module (61)) or the surrounding components (e.g., the substrate (71)) thereof.

### «Second Embodiment of the Invention»

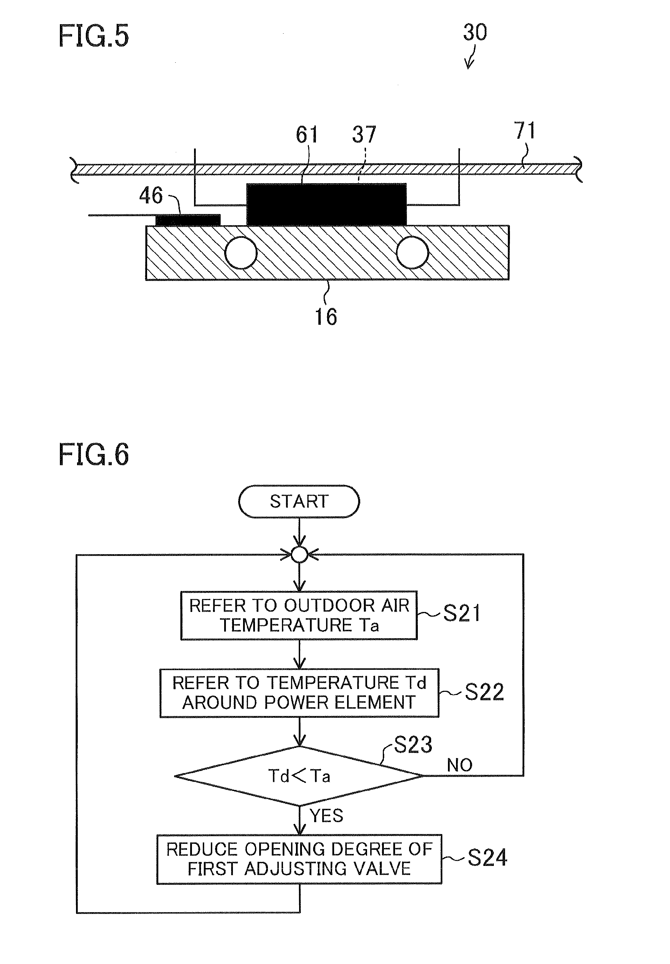

As illustrated in FIG. 5, in a refrigeration apparatus (1) of a second embodiment, a temperature sensor (46) is provided near a power element(s) (37) instead of providing the dew condensation sensor (45) of the first embodiment. In addition, an outdoor air temperature sensor (41) is used as an air temperature sensor of the present invention configured to detect an air temperature around a power supply device (30). In the refrigeration apparatus (1) of the second embodiment, the temperature sensor (46) and the outdoor air temperature sensor (41) are used as detectors each configured to detect a physical amount based on which it is determined whether or not a dew condensation state is established.

The temperature sensor (46) is attached to a surface of a cooler (16) facing a power module (61). The temperature sensor (46) is connected to an operation control device (50), and transmits a detection signal to the operation control device (50). When a detection value of the temperature sensor (46) is lower than a detection value of the outdoor air temperature sensor (41), a dew condensation determinator (54) of the operation control device (50) determines that the dew condensation state in which dew condensation is highly likely to occur in the power element(s) (37) and surrounding components (16, 71) thereof is established. Since other configurations of the present embodiment are similar to those of the first embodiment, the description thereof will not be repeated.

A refrigeration cycle, cooling of the power element(s), and a normal operation control by the operation control device (50) in the present embodiment are similar to those of the first embodiment. A dew condensation reduction operation control by the operation control device (50) will be described below.

As illustrated in FIG. 6, the dew condensation determinator (54) first refers to a detection value (outdoor air temperature) Ta of the outdoor air temperature sensor (41) (step S21), and then refers to a detection value (temperature of the cooler (16)) Td of the temperature sensor (46) (step S22).

Next, the dew condensation determinator (54) determines whether or not the dew condensation state in which the dew condensation is highly likely to occur in the cooler (16) is established (step S23). Note that, when the detection value Td of the temperature sensor (46) is lower than the detection value Ta of the outdoor air temperature sensor (41), the dew condensation determinator (54) determines that the dew condensation state is established.

When the dew condensation determinator (54) determines at step S23 that the dew condensation state is established, a forcible opening degree reducer (55) forcibly reduces the degree of opening of a first throttle valve (18) by a predetermined value on behalf of a first opening degree adjuster (52) (step S24).

When the degree of opening of the first throttle valve (18) is forcibly reduced, the amount of refrigerant flowing into a branch circuit (10B) is reduced, and therefore the amount of heat absorbed by refrigerant in the cooler (16) (the amount of heat dissipated from the power module (61)) is reduced. Thus, the dew condensation in the power module (61) and the surrounding components (16, 71) thereof is reduced, and the dew condensation state in the cooler (16) is cleared.

After the degree of opening of the first throttle valve (18) is forcibly reduced by the forcible opening degree reducer (55) as described above, the process returns to step S21, and the operation control device (50) repeats the same process. As a result, while the dew condensation determinator (54) determines that the dew condensation state is established, the degree of opening of the first throttle valve (18) is reduced by the forcible opening degree reducer (55) every time the dew condensation reduction operation control is performed. When the dew condensation determinator (54) no longer determines that the dew condensation state is established, the operation control device (50) resumes the normal operation control, and adjusts the degree of opening of the first throttle valve (18) such that the evaporation temperature of refrigerant in the cooler (16) reaches a target temperature.

### Advantages of Second Embodiment

In the second embodiment, since the state of air (state of outdoor air) before the air passes through a heat-source-side heat exchanger (12) and the state of air around the power supply device (30) are substantially the same, the outdoor air temperature sensor (41) is used as the air temperature sensor of the present invention. The temperature sensor (46) provided on the cooler (16) near the power element(s) (37) and the outdoor air temperature sensor (41) are used as the detectors.

Since it is practically impossible that the relative humidity of outdoor air (relative humidity of air around the power supply device (30)) reaches 100%, the dew-point temperature of outdoor air (dew-point temperature of air around the power supply device (30)) is lower than the temperature of outdoor air (dry-bulb temperature of air around the power supply device (30)). In the state in which the detection value Td of the temperature sensor (46) is lower than the detection value Ta of the outdoor air temperature sensor (41), the surface temperature of the cooler (16) is close to the dew-point temperature of outdoor air (dew-point temperature of air around the power supply device (30)). Thus, it can be assumed that the dew condensation is highly likely to occur in the power element(s) (37) and the cooler (16).

When the detection value Td of the temperature sensor (46) is lower than the detection value Ta of the outdoor air temperature sensor (41), the dew condensation determinator (54) determines that the dew condensation state is established.

Thus, according to the second embodiment, since the temperature sensor (46) and the outdoor air temperature sensor (41) are used, it can be easily detected with high accuracy that the dew condensation is highly likely to occur in the power element(s) (37) or the surrounding components (16, 71) thereof. In addition, since the amount of heat generation of the power element(s) (37) is increased when the possibility of the occurrence of the dew condensation is increased, the occurrence of the dew condensation can be prevented.

Under normal conditions, the cooler (16) configured to cool the power element(s) (37) has a temperature lower than that of the power element(s) (37) during the operation of the refrigeration apparatus (1). Since the temperature sensor (46) is attached to the cooler (16), the possibility of the occurrence of the dew condensation can be detected at a relatively early stage. Thus, it can be further ensured that the occurrence of the dew condensation in the power element(s) (37) and the surrounding components (16, 71) thereof is prevented.

Note that the temperature sensor (46) may be attached to the power element(s) (37) (in the present embodiment, the power module (61)) or the surrounding components (e.g., the substrate (71)) thereof.

In the second embodiment, the outdoor air temperature sensor (41) is used as the air temperature sensor of the present invention. However, the air temperature sensor of the present invention may be any sensors other than the outdoor air temperature sensor (41) as long as the temperature of air around the power supply device (30) is detectable, and may be a sensor configured to detect the temperature of air around the power supply device (30) in a heat-source-side unit (1A).

### «Third Embodiment of the Invention»

A refrigeration apparatus (1) of a third embodiment is configured similar to that of the second embodiment, except that a method for determining occurrence of dew condensation by a dew condensation determinator (54) of an operation control device (50) is different. Since other configurations and operations of the present embodiment are similar to those of the second embodiment, a dew condensation reduction operation control by the operation control device (50) which is different from that of the second embodiment will be described below.

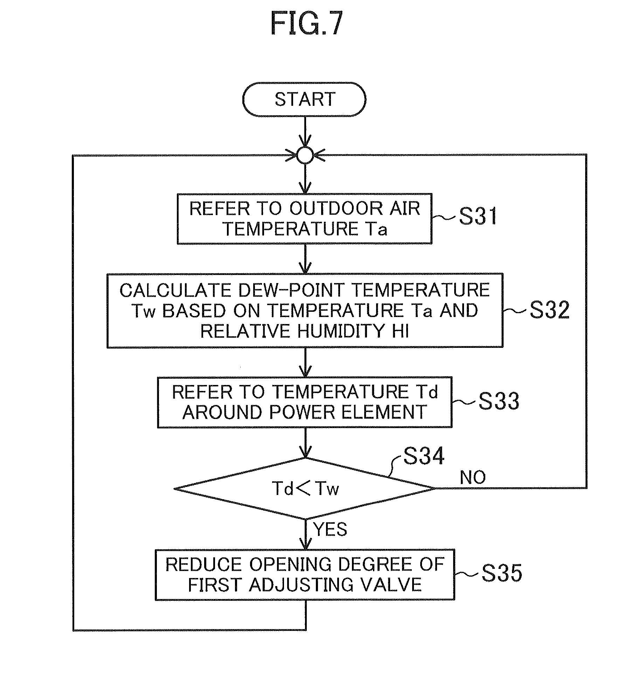

As illustrated in FIG. 7, the dew condensation determinator (54) first refers to a detection value (outdoor air temperature) Ta of an outdoor air temperature sensor (41) (step S31). Next, based on the detection value Ta of the outdoor air temperature sensor (41), the dew condensation determinator (54) calculates a dew-point temperature Tw when an air temperature is Ta and a relative humidity is H1 (step S32). Then, the dew condensation determinator (54) refers to a detection value (temperature Td of a cooler (16)) of a temperature sensor (46) (step S33).

Subsequently, the dew condensation determinator (54) determines whether or not a dew condensation state in which the dew condensation is highly likely to occur in the cooler (16) is established (step S34). Note that, when the detection value Td of the temperature sensor (46) is lower than the dew-point temperature Tw, the dew condensation determinator (54) determines that the dew condensation state is established.

If the dew condensation determinator (54) determines that the dew condensation state is established, a forcible opening degree reducer (55) forcibly reduces the degree of opening of a first throttle valve (18) by a predetermined value on behalf of a first opening degree adjuster (52) (step S35).

When the degree of opening of the first throttle valve (18) is forcibly reduced, the amount of refrigerant flowing into a branch circuit (10B) is reduced, and therefore the amount of heat absorbed by refrigerant in the cooler (16) (the amount of heat dissipated from a power module (61)) is reduced. Thus, the dew condensation in the power module (61) and surrounding components (16, 71) thereof is reduced, and the dew condensation state in the cooler (16) is cleared.

After the degree of opening of the first throttle valve (18) is forcibly reduced by the forcible opening degree reducer (55) as described above, the process returns to step S31, and the operation control device (50) repeats the same process. As a result, while the dew condensation determinator (54) determines that the dew condensation state is established, the degree of opening of the first throttle valve (18) is reduced by the forcible opening degree reducer (55) every time the dew condensation reduction operation control is performed. When the dew condensation determinator (54) no longer determines that the dew condensation state is established, the operation control device (50) resumes a normal operation control, and adjusts the degree of opening of the first throttle valve (18) such that the evaporation temperature of refrigerant in the cooler (16) reaches a target temperature.

### Advantages of Third Embodiment

In the third embodiment, since the state of air (state of outdoor air) before the air passes through a heat-source-side heat exchanger (12) and the state of air around a power supply device (30) are substantially the same, the outdoor air temperature sensor (41) is used as the air temperature sensor of the present invention. The temperature sensor (46) provided on the cooler (16) near power element(s) (37) and the outdoor air temperature sensor (41) are used as detectors.

Although the relative humidity of outdoor air (relative humidity of air around the power supply device (30)) varies depending on, e.g., installation environment, seasons, and time, the relative humidity can be estimated considering, e.g., the installation environment and the usage time. In the third embodiment, the dew condensation determinator (54) estimates the dew-point temperature Tw of air outside a heat-source-side unit (1A) based on the detection value Ta of the outdoor air temperature sensor (41) and the preset relative humidity H1 (e.g., 60%), and, when the detection value Td of the temperature sensor (46) is lower than the dew-point temperature Tw, determines that the dew condensation state is established.

As described above, according to the third embodiment, since the temperature sensor (46) and the outdoor air temperature sensor (41) are used, it can be easily detected with high accuracy that the dew condensation is highly likely to occur in the power element(s) (37) or the surrounding components (16, 71) thereof. In addition, when the possibility of the occurrence of the dew condensation is increased, the degree of opening of the first throttle valve (18) is reduced, thereby reducing a decrease in temperature of the cooler (16). Thus, the occurrence of the dew condensation can be prevented.

Under normal conditions, the cooler (16) configured to cool the power element(s) (37) has a temperature lower than that of the power element(s) (37) during the operation of the refrigeration apparatus (1). Since the temperature sensor (46) is attached to the cooler (16), the possibility of the occurrence of the dew condensation can be detected at a relatively early stage. Thus, it can be further ensured that the occurrence of the dew condensation in the power element(s) (37) and the surrounding components (16, 71) thereof is prevented.

Note that the temperature sensor (46) may be attached to the power element(s) (37) (in the present embodiment, the power module (61)) or the surrounding components (e.g., the substrate (71)) thereof.

In the third embodiment, the outdoor air temperature sensor (41) is used as the air temperature sensor of the present invention. However, the air temperature sensor of the present invention may be any sensors other than the outdoor air temperature sensor (41) as long as the temperature of air around the power supply device (30) is detectable, and may be a sensor configured to detect the temperature of air around the power supply device (30) in the heat-source-side unit (1A).

### <<ourth Embodiment of the Invention>>

A refrigeration apparatus (1) of a fourth embodiment is configured similar to that of the second embodiment, except that a method for determining occurrence of dew condensation by a dew condensation determinator (54) of an operation control device (50) is different. Since other configurations and operations of the present embodiment are similar to those of the second embodiment, a dew condensation reduction operation control by the operation control device (50) which is different from that of the second embodiment will be described below.

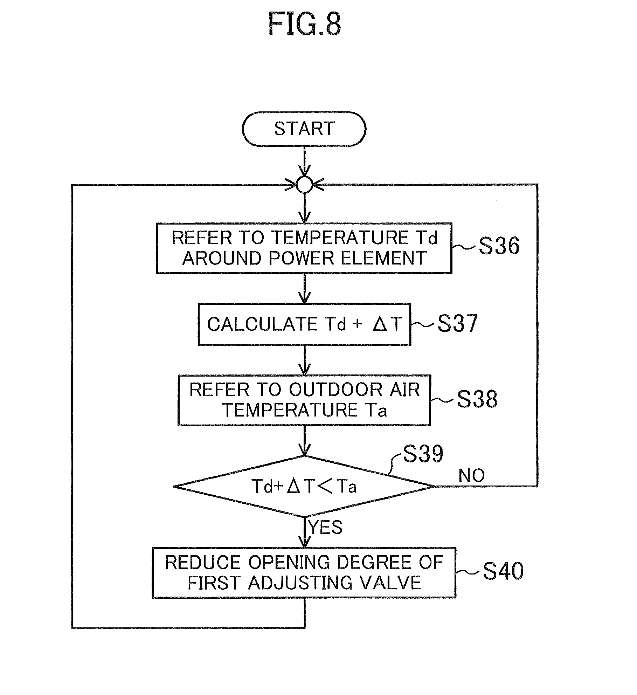

As illustrated in FIG. 8, the dew condensation determinator (54) first refers to a detection value (temperature Td of a cooler (16)) of a temperature sensor (46) (step S36). Next, the dew condensation determinator (54) calculates a temperature (Td + ΔT) by adding the detection value Td of the temperature sensor (46) to a temperature increase ΔT from an installation part of the temperature sensor (46) to each electrical connection part of the power element(s) (37) (step S37). Note that the temperature increase ΔT may be a value measured by a test in advance or may be a value estimated based on thermal resistance and a thermal flow rate. Then, the dew condensation determinator (54) refers to a detection value (outdoor air temperature) Ta of an outdoor air temperature sensor (41) (step S38).

Subsequently, the dew condensation determinator (54) determines whether or not a dew condensation state in which the dew condensation is highly likely to occur in the cooler (16) is established (step S39). Note that, when the temperature (Td + ΔT) is lower than the outdoor air temperature Ta, the dew condensation determinator (54) determines that the dew condensation state is established.

When the dew condensation determinator (54) determines that the dew condensation state is established, a forcible opening degree reducer (55) forcibly reduces the degree of opening of a first throttle valve (18) by a predetermined value on behalf of a first opening degree adjuster (52) (step S40).

When the degree of opening of the first throttle valve (18) is forcibly reduced, the amount of refrigerant flowing into a branch circuit (10B) is reduced, and therefore the amount of heat absorbed by refrigerant in the cooler (16) (the amount of heat dissipated from a power module (61)) is reduced. Thus, the dew condensation in the power module (61) and surrounding components (16, 71) thereof is reduced, and the dew condensation state in the cooler (16) is cleared.

After the degree of opening of the first throttle valve (18) is forcibly reduced by the forcible opening degree reducer (55) as described above, the process returns to step S36, and the operation control device (50) repeats the same process. As a result, while the dew condensation determinator (54) determines that the dew condensation state is established, the degree of opening of the first throttle valve (18) is reduced by the forcible opening degree reducer (55) every time the dew condensation reduction operation control is performed. When the dew condensation determinator (54) no longer determines that the dew condensation state is established, the operation control device (50) resumes a normal operation control, and adjusts the degree of opening of the first throttle valve (18) such that the evaporation temperature of refrigerant in the cooler (16) reaches a target temperature.

### Advantages of Fourth Embodiment

According to the fourth embodiment, since the temperature sensor (46) and the outdoor air temperature sensor (41) are used, it can be easily detected with high accuracy that the dew condensation is highly likely to occur in the power element(s) (37) or the surrounding components (16, 71) thereof. In addition, when the possibility of the occurrence of the dew condensation is increased, the degree of opening of the first throttle valve (18) is reduced, thereby reducing a decrease in temperature of the cooler (16). Thus, the occurrence of the dew condensation can be prevented.

Even under the temperature environment under which the dew condensation occurs around the cooler (16) during the operation of the refrigeration apparatus (1), the electrical connection part of the power element(s) (37) where a short circuit may occur due to adherence of dew condensation water may not actually be, because of heat generation of the power element(s) (37), under the temperature environment under which the dew condensation occurs. In the fourth embodiment, when the estimated temperature of the electrical connection part of the power element(s) (37) where the short circuit may occur due to the adherence of dew condensation water is lower than an air temperature, the degree of opening of the first throttle valve (18) is forcibly reduced by the forcible opening degree reducer (55), thereby preventing the occurrence of the dew condensation. The temperature of refrigerant in the cooler (16) can be reduced to the lowest possible temperature at which the dew condensation does not occur in the electrical part of the power element(s) (37). Thus, breakdown of the power element(s) (37) can be prevented, and performance of the cooler (16) can be improved.

Note that the temperature sensor (46) may be attached to the power element(s) (37) (in the present embodiment, the power module (61)) or the surrounding components (e.g., the substrate (71)) thereof.

In the fourth embodiment, the outdoor air temperature sensor (41) is used as the air temperature sensor of the present invention. However, the air temperature sensor of the present invention may be any sensors other than the outdoor air temperature sensor (41) as long as the temperature of air around a power supply device (30) is detectable, and may be a sensor configured to detect the temperature of air around the power supply device (30) in a heat-source-side unit (1A).

### «Fifth Embodiment of the Invention»

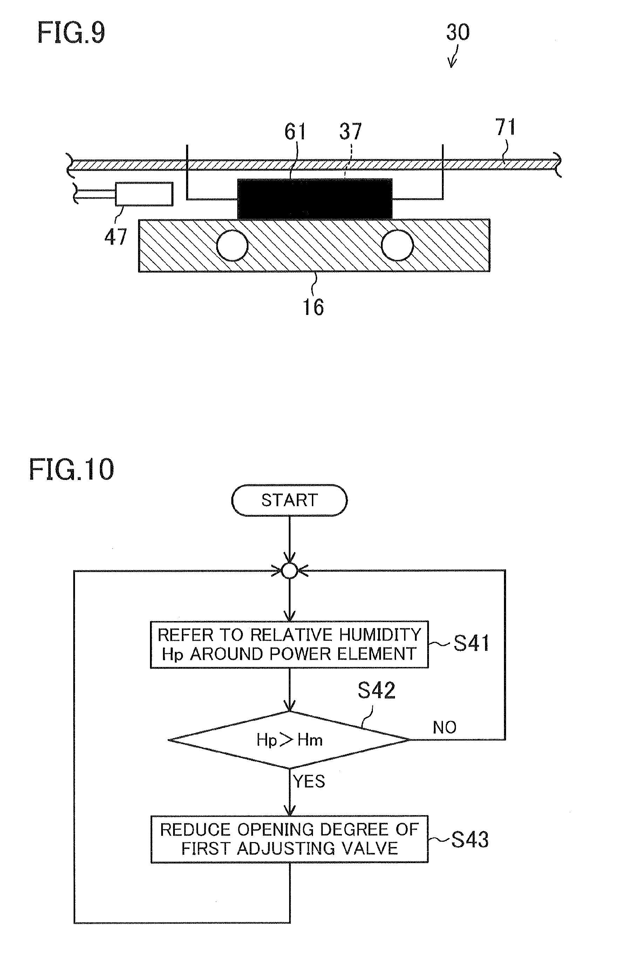

As illustrated in FIG. 9, in a refrigeration apparatus (1) of a fifth embodiment, a humidity sensor (47) is provided near power element(s) (37) instead of providing the dew condensation sensor (45) of the first embodiment, and is used as a detector configured to detect a physical amount based on which it is determined whether or not a dew condensation state is established.

The humidity sensor (47) is connected to an operation control device (50), and transmits a detection signal to the operation control device (50). When a detection value of the humidity sensor (47) is higher than a predetermined upper limit, a dew condensation determinator (54) of the operation control device (50) determines that the dew condensation state in which dew condensation occurs in the power element(s) (37) and surrounding components (16, 71) thereof is established. Since other configurations of the present embodiment are similar to those of the first embodiment, the description thereof will not be repeated.

A refrigeration cycle, cooling of the power element(s), and a normal operation control by the operation control device (50) are similar to those of the first embodiment. A dew condensation reduction operation control by the operation control device (50) will be described below.

As illustrated in FIG. 10, the dew condensation determinator (54) first refers to a detection value Hp of the humidity sensor (47) (step S41).

Next, the dew condensation determinator (54) determines whether or not the dew condensation state in which the dew condensation is highly likely to occur in the power element(s) (37) or the surrounding components (16, 71) thereof is established (step S42). Note that, when the detection value Hp of the humidity sensor (47) is higher than a predetermined upper limit Hm, the dew condensation determinator (54) determines that the dew condensation state is established.

Then, when the dew condensation determinator (54) determines at step S42 that the dew condensation state is established, a forcible opening degree reducer (55) forcibly reduces the degree of opening of a first throttle valve (18) by a predetermined value on behalf of a first opening degree adjuster (52) (step S43).

When the degree of opening of the first throttle valve (18) is forcibly reduced, the amount of refrigerant flowing into a branch circuit (10B) is reduced, and therefore the amount of heat absorbed by refrigerant in a cooler (16) (the amount of heat dissipated from a power module (61)) is reduced. Thus, the dew condensation in the power module (61) and the surrounding components (16, 71) thereof is reduced, and the dew condensation state in the cooler (16) is cleared.

After the degree of opening of the first throttle valve (18) is forcibly reduced by the forcible opening degree reducer (55) as described above, the process returns to step S41, and the operation control device (50) repeats the same process. As a result, while the dew condensation determinator (54) determines that the dew condensation state is established, the degree of opening of the first throttle valve (18) is reduced by the forcible opening degree reducer (55) every time the dew condensation reduction operation control is performed. When the dew condensation determinator (54) no longer determines that the dew condensation state is established, the operation control device (50) resumes the normal operation control, and adjusts the degree of opening of the first throttle valve (18) such that the evaporation temperature of refrigerant in the cooler (16) reaches a target temperature.

### Advantages of Fifth Embodiment

In the fifth embodiment, since the humidity sensor (47) is used, it can be easily detected with high accuracy that the dew condensation is highly likely to occur in the power element(s) (37) or the surrounding components (16, 71) thereof. In addition, when the possibility of the occurrence of the dew condensation is increased, the degree of opening of the first throttle valve (18) is forcibly reduced, thereby reducing a decrease in temperature of the cooler (16). Thus, the occurrence of the dew condensation can be prevented.

### <<Sixth Embodiment of the Invention>>

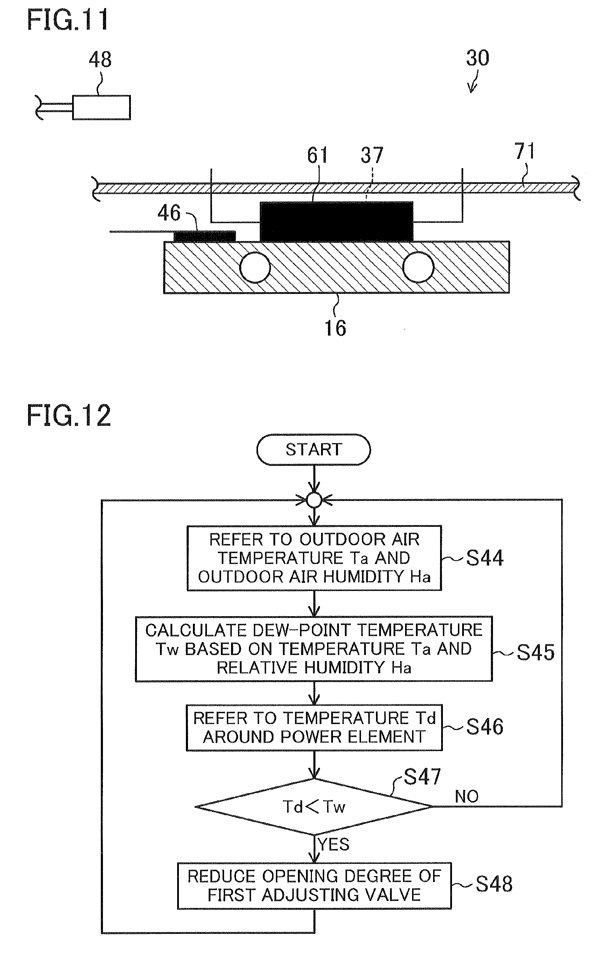

As illustrated in FIG. 11, a refrigeration apparatus (1) of a sixth embodiment is configured by adding a humidity sensor (48) configured to detect the humidity of air around a power supply device (30) to the refrigeration apparatus (1) of the second embodiment. In the refrigeration apparatus (1) of the sixth embodiment, the humidity sensor (48), an outdoor air temperature sensor (41), and a temperature sensor (46) are used as detectors each configured to detect a physical amount based on which it is determined whether or not a dew condensation state is established.

The humidity sensor (48) is configured to detect the humidity of outdoor air before the outdoor air reaches a cooler (16), and is provided upstream of the cooler (16) in an air flow. In addition, the humidity sensor (48) is connected to an operation control device (50), and transmits a detection signal to the operation control device (50). When a detection value of the temperature sensor (46) is lower than a dew-point temperature calculated based on a detection value of the humidity sensor (48) and a detection value of the outdoor air temperature sensor (41), a dew condensation determinator (54) of the operation control device (50) determines that the dew condensation state in which dew condensation is highly likely to occur in power element(s) (37) and surrounding components (16, 71) thereof is established. Since other configurations of the present embodiment are similar to those of the second embodiment, the description thereof will not be repeated.

A refrigeration cycle, cooling of the power element(s), and a normal operation control by the operation control device (50) are similar to those of the first embodiment. A dew condensation reduction operation control by the operation control device (50) will be described below.

As illustrated in FIG. 12, the dew condensation determinator (54) first refers to a detection value (outdoor air temperature) Ta of the outdoor air temperature sensor (41) and a detection value (outdoor air humidity) Ha of the humidity sensor (48) (step S44). Next, based on the detection value Ta of the outdoor air temperature sensor (41) and the detection value Ha of the humidity sensor (48), the dew condensation determinator (54) calculates a dew-point temperature Tw when an air temperature is Ta and a relative humidity is Ha (step S45). Then, the dew condensation determinator (54) refers to a detection value (temperature Td of the cooler (16)) of the temperature sensor (46) (step S46).

Next, the dew condensation determinator (54) determines whether or not the dew condensation state in which the dew condensation is highly likely to occur in the cooler (16) is established (step S47). Note that, when the detection value Td of the temperature sensor (46) is lower than the dew-point temperature Tw, the dew condensation determinator (54) determines that the dew condensation state is established.

Then, when the dew condensation determinator (54) determines at step S47 that the dew condensation state is established, a forcible opening degree reducer (55) forcibly reduces the degree of opening of a first throttle valve (18) by a predetermined value on behalf of a first opening degree adjuster (52) (step S48).

When the degree of opening of the first throttle valve (18) is forcibly reduced, the amount of refrigerant flowing into a branch circuit (10B) is reduced, and therefore the amount of heat absorbed by refrigerant in the cooler (16) (the amount of heat dissipated from a power module (61)) is reduced. Thus, the dew condensation in the power module (61) and the surrounding components (16, 71) thereof is reduced, and the dew condensation state in the cooler (16) is cleared.

After the degree of opening of the first throttle valve (18) is forcibly reduced by the forcible opening degree reducer (55) as described above, the process returns to step S44, and the operation control device (50) repeats the same process. As a result, while the dew condensation determinator (54) determines that the dew condensation state is established, the degree of opening of the first throttle valve (18) is reduced by the forcible opening degree reducer (55) every time the dew condensation reduction operation control is performed. When the dew condensation determinator (54) no longer determines that the dew condensation state is established, the operation control device (50) resumes the normal operation control, and adjusts the degree of opening of the first throttle valve (18) such that the evaporation temperature of refrigerant in the cooler (16) reaches a target temperature.

### Advantages of Sixth Embodiment

In the sixth embodiment, the humidity sensor (48) configured to detect the humidity of outdoor air before the outdoor air reaches the cooler (16), the outdoor air temperature sensor (41) similar to that of the second embodiment, and the temperature sensor (46) similar to that of the second embodiment are used as the detectors.

Based on the temperature and humidity of air (outdoor air) before the air is cooled by the cooler (16), the dew condensation determinator (54) calculates the dew-point temperature of the air, and determines, when the temperature around the power element(s) (37) is lower than the dew-point temperature, that the dew condensation state in which the dew condensation is highly likely to occur in the power element(s) (37) is established.

Thus, according to the sixth embodiment, since the humidity sensor (48), the outdoor air temperature sensor (41), and the temperature sensor (46) are used, it can be easily detected with high accuracy that the dew condensation is highly likely to occur in the power element(s) (37) or the surrounding components (16, 71) thereof. In addition, since the amount of heat generation of the power element(s) (37) is increased when the possibility of the occurrence of the dew condensation is increased, the occurrence of the dew condensation can be prevented.

Under normal conditions, the cooler (16) configured to cool the power element(s) (37) has a temperature lower than that of the power element(s) (37) during the operation of the refrigeration apparatus (1). Since the temperature sensor (46) is attached to the cooler (16), the possibility of the occurrence of the dew condensation can be detected at a relatively early stage. Thus, it can be further ensured that the occurrence of the dew condensation in the power element(s) (37) and the surrounding components (16, 71) thereof is prevented.

Note that the temperature sensor (46) may be attached to the power element(s) (37) (in the present embodiment, the power module (61)) or the surrounding components (e.g., the substrate (71)) thereof.

In the sixth embodiment, the outdoor air temperature sensor (41) is used as the air temperature sensor of the present invention. However, the air temperature sensor of the present invention may be any sensors other than the outdoor air temperature sensor (41) as long as the temperature of air around the power supply device (30) is detectable, and may be a sensor configured to detect the temperature of air around the power supply device (30) in a heat-source-side unit (1A).

### «Seventh Embodiment of the Invention»

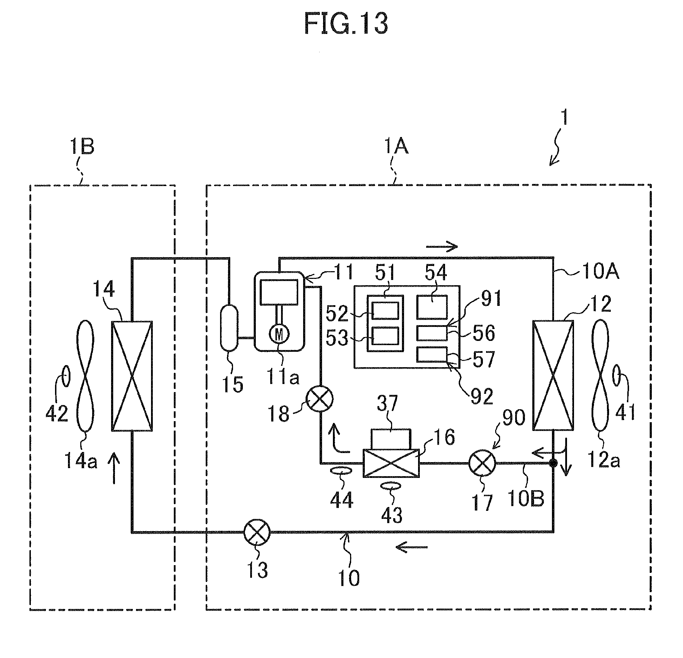

As illustrated in FIG. 13, a refrigeration apparatus (1) of a seventh embodiment is configured by changing the configuration of the operation control device (50) of the first embodiment.

Specifically, in the seventh embodiment, an operation control device (50) includes a normal operator (51) and a dew condensation determinator (54) which are similar to those of the first embodiment. In addition, the operation control device (50) further includes a heat generation amount increaser (56) and a heat generation amount resetter (57), instead of including the forcible opening degree reducer (55) of the first embodiment.

When the dew condensation determinator (54) determines that a dew condensation state is established, the heat generation amount increaser (56) increases the amount of heat generation of power element(s) (37). Note that, in the present embodiment, the heat generation amount increaser (56) increases a current value of a compressor (11), thereby increasing the amount of heat generation of the power element(s) (37) in a drive circuit (31) for the compressor (11).

When the dew condensation determinator (54) determines that the dew condensation state is not established, the heat generation amount resetter (57) resets the amount of heat generation of the power element(s) (37) of the power module (61) increased by the heat generation amount increaser (56) to a normal state before the increase in heat generation amount. That is, the heat generation amount resetter (57) resets a current value of a motor (11a) of the compressor (11) to a normal state before the increase in current value, thereby resetting the amount of heat generation of the power element(s) (37) in the drive circuit (31) for the compressor (11) to the normal state.

The heat generation amount increaser (56) serves as a temperature increaser (91) of the present invention configured to increase the temperature of the power element(s) (37). On the other hand, the heat generation amount resetter (57) serves as a temperature resetter (92) configured to reset the temperature of the power element(s) (37) increased by the temperature increaser (91) to a normal state.

A refrigeration cycle, cooling of the power element(s), and a normal operation control by the operation control device (50) are similar to those of the first embodiment. A dew condensation reduction operation control by the operation control device (50) will be described below.

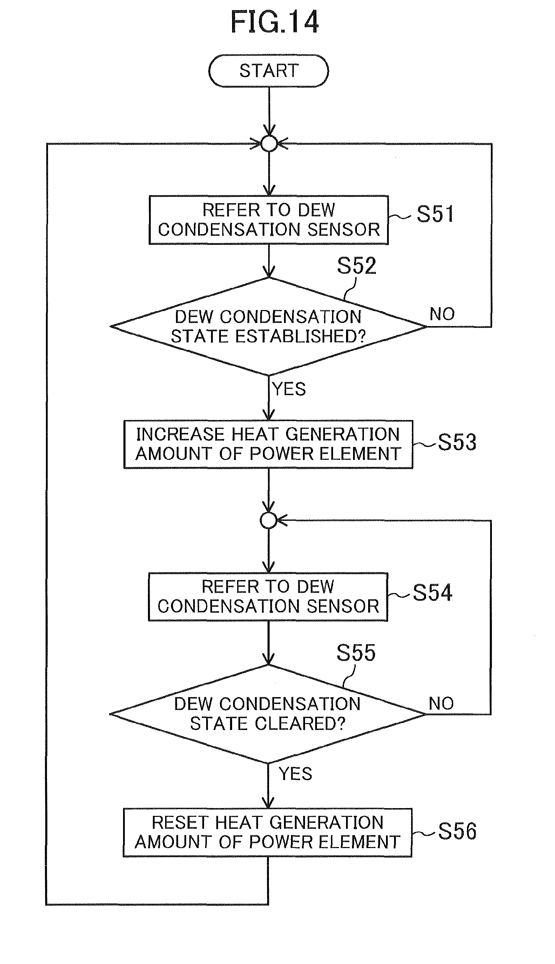

As illustrated in FIG. 14, the dew condensation determinator (54) first refers to a dew condensation signal from a dew condensation sensor (45) (step S51), and then determines whether or not the dew condensation state in which dew condensation occurs in a cooler (16) is established (step S52). Then, when the dew condensation determinator (54) determines that the dew condensation state is established, the heat generation amount increaser (56) increases the amount of heat generation of the power element(s) (37) (step S53).

Note that, in the present embodiment, the heat generation amount increaser (56) increases the current value of the compressor (11), thereby increasing the amount of heat generation of the power element(s) (37) in the drive circuit (31) for the compressor (11).

Of various power elements (37), only the amount of heat generation of the power element(s) (37) in the drive circuit (31) for the compressor (11) is increased in the foregoing state. However, the various power elements (37) together form the single power module (61). Thus, the amount of heat generation of the power element(s) (37) controlling the compressor (11) is increased, resulting in an increase in temperature of the entirety of the power module (61). Consequently, the dew condensation in the power module (61) and surrounding components (16, 71) thereof is reduced, and the dew condensation state in the cooler (16) is cleared.

After the amount of heat generation of the power element(s) (37) in the drive circuit (31) for the compressor (11) is increased as described above, the dew condensation determinator (54) refers to a dew condensation signal from the dew condensation sensor (45) (step S54), and determines whether or not the dew condensation state in the cooler (16) is cleared (step S55). Then, when the dew condensation determinator (54) determines that the dew condensation state is not cleared, the process returns to step S54 with the amount of heat generation of the power element(s) (37) being increased, and the dew condensation determinator (54) refers to a dew condensation signal of the dew condensation sensor (45) again.

On the other hand, when the dew condensation determinator (54) determines at step S55 that the dew condensation state is cleared, the heat generation amount resetter (57) resets the amount of heat generation of the power element(s) (37) in the drive circuit (31) for the compressor (11) to the normal state before the increase in heat generation amount (step S56). Then, the process returns to step S51, and the foregoing flow is repeated.

### Advantages of Seventh Embodiment

As described above, according to the seventh embodiment, when the dew condensation determinator (54) determines that the dew condensation state in which the dew condensation occurs in the cooler (16) is established, the amount of heat generation of the power element(s) (37) is increased by the heat generation amount increaser (56), thereby increasing the temperature of the power element(s) (37) and the surrounding components (16, 71) thereof. As a result, the occurrence of the dew condensation in the power element(s) (37) and the surrounding components (16, 71) thereof can be reduced, and corrosion of, e.g., metal components arranged near the power element(s) (37) and the surrounding components (16, 71) thereof and degradation of insulating performance of the power element(s) (37) can be prevented.

According to the seventh embodiment, the amount of heat generation of the power element(s) (37) is increased not when it is assumed that the dew condensation state is established, but when it is determined by using the dew condensation sensor (45) that the dew condensation state in which the dew condensation actually occurs in the cooler (16) is established. Thus, when the dew condensation does not actually occur, the amount of heat generation of the power element(s) (37) is not uselessly increased. Consequently, a loss caused due to the increase in amount of heat generation of the power element(s) (37) can be reduced.

According to the seventh embodiment, since the dew condensation sensor (45) is used, the occurrence of the dew condensation can be easily detected with high accuracy.

Under normal conditions, the cooler (16) configured to cool the power element(s) (37) has a temperature lower than that of the power element(s) (37) during the operation of the refrigeration apparatus (1). Thus, it is likely that the dew condensation occurs in the cooler (16) before the dew condensation occurs in the power element(s) (37).

In the seventh embodiment, since the dew condensation sensor (45) is attached to the cooler (16), the occurrence of the dew condensation can be detected at a relatively early stage. Thus, e.g., when the dew condensation occurs in the cooler (16) and does not occur in the power element(s) (37), the amount of heat generation of the power element(s) (37) can be increased. This prevents the occurrence of the dew condensation in the power element(s) (37).

Note that the dew condensation sensor (45) may be attached to the power element(s) (37) (in the present embodiment, the power module (61)) or the surrounding components (e.g., the substrate (71)) thereof.

According to the seventh embodiment, the dew condensation sensor (45) can detect with high accuracy that the dew condensation state is cleared. As soon as the dew condensation state is cleared, the amount of heat generation of the power element(s) (37) can be, by the heat generation amount resetter (57), reset to the normal state before the increase in heat generation amount. Thus, a heat loss caused due to the increase in amount of heat generation of the power element(s) (37) can be suppressed to the minimum.

According to the seventh embodiment, the current value of the compressor (11) is increased, and therefore the amount of heat generation of the power element(s) (37) provided for the compressor (11) is increased. In such a manner, the temperature of the entirety of the power module (61) formed by the various power element(s) (37) can be increased. Consequently, the temperature of the power element(s) (37) can be easily increased, e.g., without using a heating unit such as a heater. As a result, the occurrence of the dew condensation in the power element(s) (37) and the surrounding components (16, 71) thereof can be easily reduced.

### «Eighth Embodiment of the Invention»

In a refrigeration apparatus (1) of an eighth embodiment, a temperature sensor (46) similar to that of the second embodiment is provided instead of providing the dew condensation sensor (45) of the seventh embodiment (see FIG. 5). As in the second embodiment, an outdoor air temperature sensor (41) is used as the air temperature sensor of the present invention configured to detect the temperature of air around a power supply device (30). In addition, in the refrigeration apparatus (1) of the eighth embodiment, the temperature sensor (46) and the outdoor air temperature sensor (41) are used as detectors each configured to detect a physical amount based on which it is determined whether or not a dew condensation state is established.

As in the second embodiment, when a detection value of the temperature sensor (46) is lower than a detection value of the outdoor air temperature sensor (41), a dew condensation determinator (54) of an operation control device (50) determines that the dew condensation state in which dew condensation occurs in power element(s) (37) and surrounding components (16, 71) thereof is established. Since other configurations of the present embodiment are similar to those of the seventh embodiment, the description thereof will not be repeated.

A refrigeration cycle, cooling of the power element(s), and a normal operation control by the operation control device (50) are similar to those of the seventh embodiment. A dew condensation reduction operation control by the operation control device (50) will be described below.

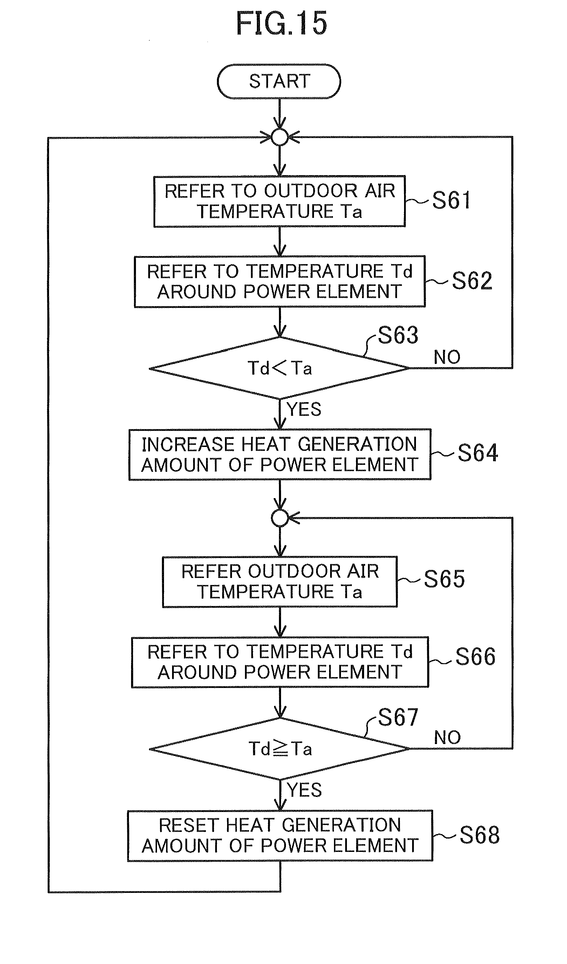

As illustrated in FIG. 15, the dew condensation determinator (54) first refers to a detection value (outdoor air temperature) Ta of the outdoor air temperature sensor (41) (step S61), and then refers to a detection value (temperature of a cooler (16)) Td of the temperature sensor (46) (step S62).

Next, the dew condensation determinator (54) determines whether or not the dew condensation state in which the dew condensation is highly likely to occur in the cooler (16) is established (step S63). Note that, when the detection value Td of the temperature sensor (46) is lower than the detection value Ta of the outdoor air temperature sensor (41), the dew condensation determinator (54) determines that the dew condensation state is established.

Then, when the dew condensation determinator (54) determines at step S63 that the dew condensation state is established, a heat generation amount increaser (56) increases the amount of heat generation of the power element(s) (37) (step S64).

After the heat generation amount increaser (56) increases the amount of heat generation of the power element(s) (37), the dew condensation determinator (54) refers to the detection value Ta of the outdoor air temperature sensor (41) (step S65), and then refers to the detection value Td of the temperature sensor (46) (step S66).

Next, the dew condensation determinator (54) determines whether or not the dew condensation state is cleared (step S67). Note that, when the detection value Td of the temperature sensor (46) reaches a value equal to or greater than the detection value Ta of the outdoor air temperature sensor (41), the dew condensation determinator (54) determines that the dew condensation state is cleared.

When the dew condensation determinator (54) determines at step S67 that the dew condensation state is not cleared, the process returns to step S65 with the amount of heat generation of the power element(s) (37) being increased, and the dew condensation determinator (54) refers to a detection value Ta of the outdoor air temperature sensor (41) and the detection value Td of the temperature sensor (46) again.

On the other hand, when the dew condensation determinator (54) determines at step S67 that the dew condensation state is cleared, the heat generation amount resetter (57) resets the amount of heat generation of the power element(s) (37) to a normal state before the increase in heat generation amount (step S68). Then, the process returns to step S61, and the foregoing flow is repeated.

### Advantages of Eighth Embodiment

According to the eighth embodiment, since the temperature sensor (46) and the outdoor air temperature sensor (41) are used as in the second embodiment, it can be easily detected with high accuracy that the dew condensation is highly likely to occur in the power element(s) (37) or the surrounding components (16, 71) thereof. In addition, when the possibility of the occurrence of the dew condensation is increased, the amount of heat generation of the power element(s) (37) is increased. Thus, the occurrence of the dew condensation can be prevented.

### «Ninth Embodiment of the Invention»

A refrigeration apparatus (1) of a ninth embodiment is configured similar to that of the eighth embodiment, except that a method for determining occurrence of dew condensation by a dew condensation determinator (54) of an operation control device (50) is different. Note that the method for determining the occurrence of the dew condensation is similar to that of the third embodiment. A dew condensation reduction operation control by the operation control device (50) which is different from that of the eighth embodiment will be described below.

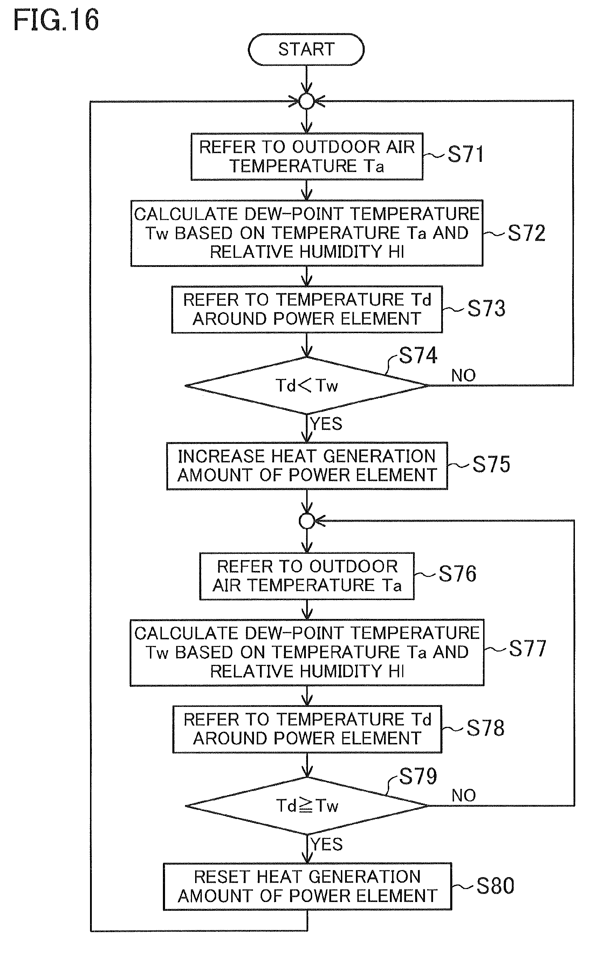

As illustrated in FIG. 16, the dew condensation determinator (54) first refers to a detection value (outdoor air temperature) Ta of an outdoor air temperature sensor (41) (step S71). Next, based on the detection value Ta of the outdoor air temperature sensor (41), the dew condensation determinator (54) calculates a dew-point temperature Tw when an air temperature is Ta and a relative humidity is H1 (step S72). Then, the dew condensation determinator (54) refers to a detection value (temperature Td of a cooler (16)) of a temperature sensor (46) (step S73).

Subsequently, the dew condensation determinator (54) determines whether or not a dew condensation state in which the dew condensation is highly likely to occur in the cooler (16) is established (step S74). Note that, when the detection value Td of the temperature sensor (46) is lower than the dew-point temperature Tw, the dew condensation determinator (54) determines that the dew condensation state is established.

When the dew condensation determinator (54) determines that the dew condensation state is established, a heat generation amount increaser (56) increases the amount of heat generation of the power element(s) (37) (step S75).

After the heat generation amount increaser (56) increases the amount of heat generation of the power element(s) (37), the dew condensation determinator (54) refers to the detection value Ta of the outdoor air temperature sensor (41) (step S76). Next, the dew condensation determinator (54) calculates the dew-point temperature Tw when the air temperature is Ta and the relative humidity is H1 (step S77). Then, the dew condensation determinator (54) refers to the detection value Td of the temperature sensor (46) (step S78).

Subsequently, the dew condensation determinator (54) determines whether or not the dew condensation state is cleared (step S79). Note that, when the detection value Td of the temperature sensor (46) reaches a value equal to or higher than the calculated dew-point temperature Tw, the dew condensation determinator (54) determines that the dew condensation state is cleared.

When the dew condensation determinator (54) determines at step S79 that the dew condensation state is not cleared, the process returns to step S76 with the amount of heat generation of the power element(s) (37) being increased. Then, the dew condensation determinator (54) calculates the dew-point temperature Tw based on the detection value Ta of the outdoor air temperature sensor (41) and the relative humidity H1 again, and refers to the detection value Td of the temperature sensor (46).

On the other hand, when the dew condensation determinator (54) determines at step S79 that the dew condensation state is cleared, the heat generation amount resetter (57) resets the amount of heat generation of the power element(s) (37) to a normal state before the increase in heat generation amount (step S80). Then, the process returns to step S71, and the foregoing flow is repeated.

### Advantages of Ninth Embodiment

According to the ninth embodiment, since the temperature sensor (46) and the outdoor air temperature sensor (41) are used as in the third embodiment, it can be easily detected with high accuracy that the dew condensation is highly likely to occur in the power element(s) (37) or surrounding components (16, 71) thereof. In addition, when the possibility of the occurrence of the dew condensation is increased, the amount of heat generation of the power element(s) (37) is increased. Thus, the occurrence of the dew condensation can be prevented.

### «Tenth Embodiment of the Invention»

A refrigeration apparatus (1) of a tenth embodiment is configured similar to that of the eighth embodiment, except that a method for determining occurrence of dew condensation by a dew condensation determinator (54) of an operation control device (50) is different. Note that the method for determining the occurrence of the dew condensation is similar to that of the fourth embodiment. A dew condensation reduction operation control by the operation control device (50) which is different from that of the eighth embodiment will be described below.

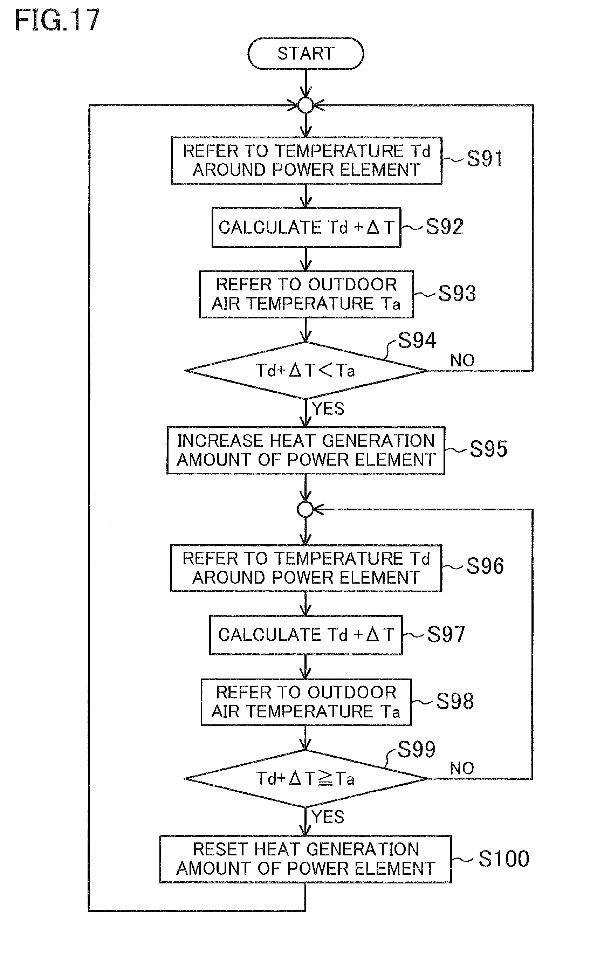

As illustrated in FIG. 17, the dew condensation determinator (54) first refers to a detection value (temperature Td of a cooler (16)) of a temperature sensor (46) (step S91). Next, the dew condensation determinator (54) calculates a temperature (Td + ΔT) by adding the detection value Td of the temperature sensor (46) to a temperature increase ΔT from an installation part of the temperature sensor (46) to each electrical connection part of power element(s) (37) (step S92). Note that the temperature increase ΔT may be a value measured by a test in advance or may be a value estimated based on thermal resistance and a thermal flow rate. Then, the dew condensation determinator (54) refers to a detection value (outdoor air temperature) Ta of an outdoor air temperature sensor (41) (step S93).

Subsequently, the dew condensation determinator (54) determines whether or not a dew condensation state in which the dew condensation is highly likely to occur in the cooler (16) is established (step S94). Note that, when the temperature (Td + ΔT) is lower than the outdoor air temperature Ta, the dew condensation determinator (54) determines that the dew condensation state is established.

When the dew condensation determinator (54) determines that the dew condensation state is established, a heat generation amount increaser (56) increases the amount of heat generation of the power element(s) (37) (step S95).

After the heat generation amount increaser (56) increases the amount of heat generation of the power element(s) (37), the dew condensation determinator (54) refers to a detection value (temperature Td of the cooler (16)) of the temperature sensor (46) (step S96). Next, the dew condensation determinator (54) calculates the temperature (Td + ΔT) by adding the detection value Td of the temperature sensor (46) to the temperature increase ΔT from the installation part of the temperature sensor (46) to the electrical connection part of the power element(s) (37) (step S97). Then, the dew condensation determinator (54) refers to a detection value (outdoor air temperature) Ta of the outdoor air temperature sensor (41) (step S98).

Next, the dew condensation determinator (54) determines whether or not the dew condensation state is cleared (step S99). Note that, when the temperature (Td + ΔT) reaches a value equal to or greater than the detection value Ta of the outdoor air temperature sensor (41), the dew condensation determinator (54) determines that the dew condensation state is cleared.

When the dew condensation determinator (54) determines at step S99 that the dew condensation state is not cleared, the process returns to step S96 with the amount of heat generation of the power element(s) (37) being increased.

On the other hand, when the dew condensation determinator (54) determines at step S99 that the dew condensation state is cleared, a heat generation amount resetter (57) resets the amount of heat generation of the power element(s) (37) to a normal amount before the increase in heat generation amount (step S100). Then, the process returns to step S91, and the foregoing flow is repeated.

### Advantages of Tenth Embodiment

According to the tenth embodiment, since the temperature sensor (46) and the outdoor air temperature sensor (41) are used as in the fourth embodiment, it can be easily detected with high accuracy that the dew condensation is highly likely to occur in the power element(s) (37) or surrounding components (16, 71) thereof. In addition, when the possibility of the occurrence of the dew condensation is increased, the amount of heat generation of the power element(s) (37) is increased. Thus, the occurrence of the dew condensation can be prevented.

Even under the temperature environment under which the dew condensation occurs around the cooler (16) during the operation of the refrigeration apparatus (1), the electrical connection part of the power element(s) (37) where a short circuit may occur due to adherence of dew condensation water may not actually be, because of heat generation of the power element(s) (37), under the temperature environment under which the dew condensation occurs. In the tenth embodiment, when the estimated temperature of the electrical connection part of the power element(s) (37) where the short circuit may occur due to the adherence of dew condensation water is lower than an air temperature, the temperature of the power element(s) (37) is increased by the temperature increaser (91). Thus, when the dew condensation may not actually occur in the electrical connection part of the power element(s) (37) where the short circuit may occur due to the adherence of dew condensation water, the temperature of the power element(s) (37) is not uselessly increased by the temperature increaser (91). Consequently, breakdown of the power element(s) (37) can be prevented without uselessly increasing the amount of heat generation of the power element(s) (37).

### «Eleventh Embodiment of the Invention»

In a refrigeration apparatus (1) of an eleventh embodiment, a humidity sensor (47) similar to that of the fifth embodiment is provided near power element(s) (37) instead of providing the dew condensation sensor (45) of the seventh embodiment (see FIG. 9), and is used as a detector configured to detect a physical amount based on which it is determined whether or not a dew condensation state is established.

As in the fifth embodiment, a dew condensation determinator (54) of an operation control device (50) is configured to determine, when a detection value of the humidity sensor (47) is higher than a predetermined upper limit, that the dew condensation state in which dew condensation occurs in the power element(s) (37) and surrounding components (16, 71) thereof is established. Since other configurations of the present embodiment are similar to those of the seventh embodiment, the description thereof will not be repeated.

A refrigeration cycle, cooling of the power element(s), and a normal operation control by the operation control device (50) are similar to those of the seventh embodiment. A dew condensation reduction operation control by the operation control device (50) will be described below.

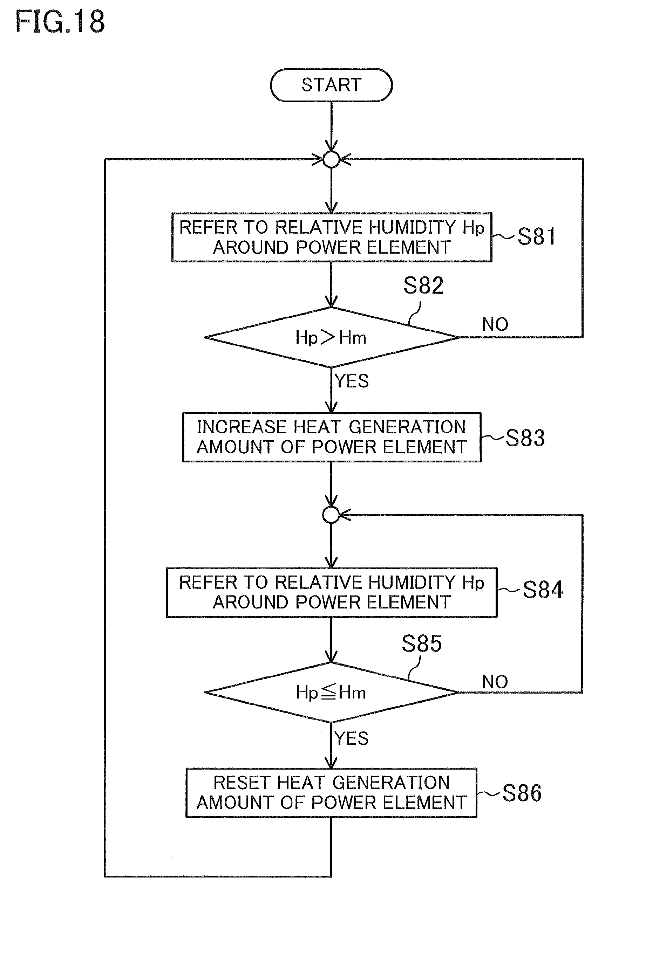

As illustrated in FIG. 18, the dew condensation determinator (54) first refers to a detection value Hp of the humidity sensor (47) (step S81).

Next, the dew condensation determinator (54) determines whether or not the dew condensation state in which the dew condensation is highly likely to occur in the power element(s) (37) or the surrounding components (16, 71) thereof is established (step S82). Note that, when the detection value Hp of the humidity sensor (47) is higher than a predetermined upper limit Hm, the dew condensation determinator (54) determines that the dew condensation state is established.

Then, when the dew condensation determinator (54) determines at step S82 that the dew condensation state is established, a heat generation amount increaser (56) increases the amount of heat generation of the power element(s) (37) (step S83).

After the heat generation amount increaser (56) increases the amount of heat generation of the power element(s) (37), the dew condensation determinator (54) refers to the detection value Hp of the humidity sensor (47) (step S84), and then determines whether or not the dew condensation state is cleared (step S85). Note that, when the detection value Hp of the humidity sensor (47) reaches a value equal to or less than the predetermined upper limit Hm, the dew condensation determinator (54) determines that the dew condensation state is cleared.

When the dew condensation determinator (54) determines at step S85 that the dew condensation state is not cleared, the process returns to step S84 with the amount of heat generation of the power element(s) (37) being increased, and the dew condensation determinator (54) refers to a detection value of the humidity sensor (47) again.

On the other hand, when the dew condensation determinator (54) determines at step S85 that the dew condensation state is cleared, a heat generation amount resetter (57) resets the amount of heat generation of the power element(s) (37) to a normal state before the increase in heat generation amount (step S86). Then, the process returns to step S81, and the foregoing flow is repeated.

### Advantages of Eleventh Embodiment

According to the eleventh embodiment, since the humidity sensor (47) is used, it can be easily detected with high accuracy that the dew condensation is highly likely to occur in the power element(s) (37) or the surrounding components (16, 71) thereof. In addition, when the possibility of the occurrence of the dew condensation is increased, the amount of heat generation of the power element(s) (37) is increased. Thus, the occurrence of the dew condensation can be prevented.

### «Twelfth Embodiment of the Invention»

A refrigeration apparatus (1) of a twelfth embodiment is configured by adding a humidity sensor (48) similar to that of the sixth embodiment to the refrigeration apparatus (1) of the eighth embodiment (see FIG. 11). The humidity sensor (48), an outdoor air temperature sensor (41), and a temperature sensor (46) are used as detectors each configured to detect a physical amount based on which it is determined whether or not a dew condensation state is established.

As in the sixth embodiment, a dew condensation determinator (54) of an operation control device (50) is configured to determine, when a detection value of the temperature sensor (46) is lower than a dew-point temperature calculated based on a detection value of the humidity sensor (48) and a detection value of the outdoor air temperature sensor (41), that the dew condensation state in which dew condensation is highly likely to occur in power element(s) (37) and surrounding components (16, 71) thereof is established. Since other configurations of the present embodiment are similar to those of the eighth embodiment, the description thereof will not be repeated.

A refrigeration cycle, cooling of the power element(s), and a normal operation control by the operation control device (50) are similar to those of the eighth embodiment. A dew condensation reduction operation control by the operation control device (50) will be described below.

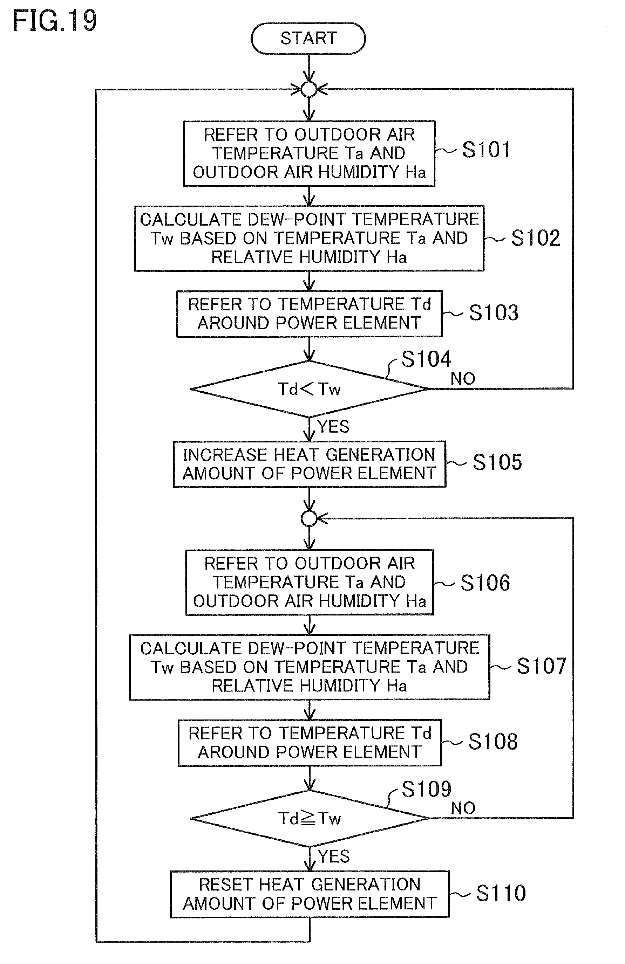

As illustrated in FIG. 19, the dew condensation determinator (54) first refers to a detection value (outdoor air temperature) Ta of the outdoor air temperature sensor (41) and a detection value (outdoor air humidity) Ha of the humidity sensor (48) (step S101). Next, based on the detection value Ta of the outdoor air temperature sensor (41) and the detection value Ha of the humidity sensor (48), the dew condensation determinator (54) calculates a dew-point temperature Tw when an air temperature is Ta and a relative humidity is Ha (step S102). Then, the dew condensation determinator (54) refers to a detection value (temperature Td of a cooler (16)) of the temperature sensor (46) (step S103).

Next, the dew condensation determinator (54) determines whether or not the dew condensation state in which the dew condensation is highly likely to occur in the cooler (16) is established (step S104). Note that, when the detection value Td of the temperature sensor (46) is lower than the dew-point temperature Tw, the dew condensation determinator (54) determines that the dew condensation state is established.

After a heat generation amount increaser (56) increases the amount of heat generation of the power element(s) (37), the dew condensation determinator (54) refers to a detection value (outdoor air temperature) Ta of the outdoor air temperature sensor (41) and the detection value (outdoor air humidity) Ha of the humidity sensor (48) (step S106). Next, based on the detection value Ta of the outdoor air temperature sensor (41) and the detection value Ha of the humidity sensor (48), the dew condensation determinator (54) calculates the dew-point temperature Tw when the air temperature is Ta and the relative humidity is Ha (step S107). Then, the dew condensation determinator (54) refers to a detection value (temperature Td of the cooler (16)) of the temperature sensor (46) (step S108).

Subsequently, the dew condensation determinator (54) determines whether or not the dew condensation state is cleared (step S109). Note that, when the detection value Td of the temperature sensor (46) reaches a value equal to or higher than the dew-point temperature Tw, the dew condensation determinator (54) determines that the dew condensation state is cleared.

When the dew condensation determinator (54) determines at step S109 that the dew condensation state is not cleared, the process returns to step S106 with the amount of heat generation of the power element(s) (37) being increased.

On the other hand, when the dew condensation determinator (54) determines at step S109 that the dew condensation state is cleared, a heat generation amount resetter (57) resets the amount of heat generation of the power element(s) (37) to a normal state before the increase in heat generation amount (step S110). Then, the process returns to step S101, and the foregoing flow is repeated.

### Advantages of Twelfth Embodiment

In the twelfth embodiment, the humidity sensor (48) configured to detect the humidity of outdoor air before the outdoor air reaches the cooler (16), the outdoor air temperature sensor (41) similar to that of the eighth embodiment, and the temperature sensor (46) similar to that of the eighth embodiment are used as the detectors.

Based on the temperature and humidity of air (outdoor air) before the air is cooled by the cooler (16), the dew condensation determinator (54) calculates the dew-point temperature of the air. When the temperature around the power element(s) (37) is lower than the dew-point temperature, the dew condensation determinator (54) determines that the dew condensation state in which the dew condensation is highly likely to occur in the power element(s) (37) is established.

Thus, according to the twelfth embodiment, since the humidity sensor (48), the outdoor air temperature sensor (41), and the temperature sensor (46) are used, it can be easily detected with high accuracy that the dew condensation is highly likely to occur in the power element(s) (37) or the surrounding components (16, 71) thereof. In addition, when the possibility of the occurrence of the dew condensation is increased, the amount of heat generation of the power element(s) (37) is increased. Thus, the occurrence of the dew condensation can be prevented.

### «Thirteenth Embodiment of the Invention»

In the seventh to twelfth embodiments, the heat generation amount increaser (56) increases the current value of the compressor (11), thereby increasing the amount of heat generation of the power element(s) (37). In a thirteenth embodiment, a heat generation amount increaser (56) is configured to increase the switching frequency of a switching element(s) serving as a power element(s) (37) to increase the amount of heat generation of the power element(s) (37).

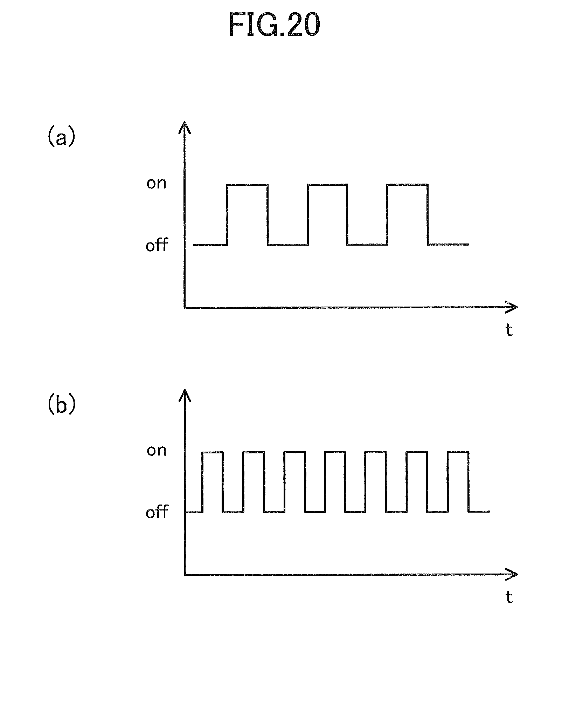

Specifically, in a control device (60), the frequency (carrier frequency) of a modulation signal to be used when a control signal from an operation control device (50) is converted into a drive signal is increased. Thus, the frequency of the drive signal to be input from the control device (60) to a base circuit of the switching element(s) of a drive circuit (31) is increased, thereby increasing the switching frequency of the switching element(s). That is, the state illustrated in FIG. 20(a) transitions to the state illustrated in FIG. 20(b). As a result, since a heat loss due to switching is increased by an increase in switching frequency, the amount of heat generation of the power element(s) (37) is increased.

In the foregoing configuration, the amount of heat generation of the power element(s) (37) can be easily increased without using a heating unit such as a heater, and therefore occurrence of dew condensation in the power element(s) (37) or surrounding components (16, 71) thereof can be reduced.

### «Fourteenth Embodiment of the Invention»

In the seventh to twelfth embodiments, the heat generation amount increaser (56) increases the current value of the compressor (11), thereby increasing the amount of heat generation of the power element(s) (37). In a fourteenth embodiment, a heat generation amount increaser (56) is configured to increase a switching loss of a switching element(s) serving as a power element(s) (37) to increase the amount of heat generation of the power element(s) (37).

Specifically, e.g., a time after an increase in resistance of a base circuit until base voltage builds up (a turn-on time required until the base circuit increases current to the maximum value and a turn-off time required until the base circuit cuts off current) is extended, and therefore the switching loss is increased.

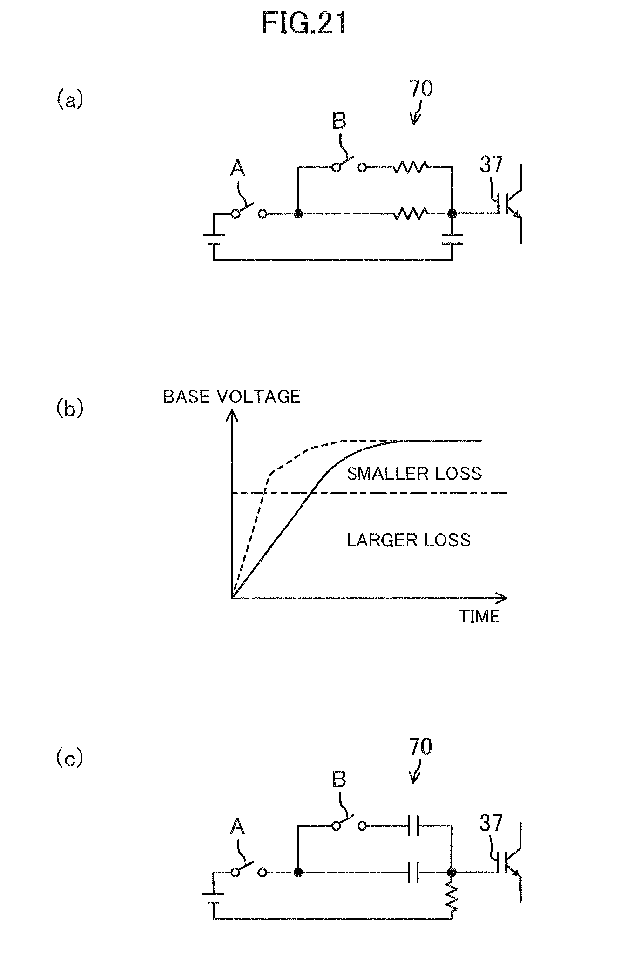

More specifically, e.g., a base circuit (70) illustrated in FIG. 21(a) is connected to the switching element. Switches A and B are closed in a normal operation, whereas the switch B is opened in a dew condensation reduction operation. As a result, as illustrated in FIG. 21(b), the time required until the base voltage of the switching element is built up is longer than that in the normal operation (changed from the state indicated by a dashed line to the state indicated by a solid line in FIG. 21 (b)), resulting in an increase in time for which the switching loss is large. Thus, the loss per switching is increased, thereby increasing the amount of heat generation of the power element(s) (37).

Alternatively, e.g., a time after an increase in capacity of a capacitor of the base circuit until the base voltage is built up (a turn-on time required until the base circuit increases current to the maximum value and a turn-off time required until the base circuit cuts off current) may be extended, and therefore the switching loss may be increased.

Specifically, e.g., a base circuit (80) illustrated in FIG. 21(c) is connected to the switching element. In the normal operation, only a switch A is closed, and a switch B is opened. In the dew condensation reduction operation, the switch B is closed. As a result, as in the case where the resistance of the base circuit is increased, the time until the base voltage of the switching element is built up is longer than that in the normal operation (changed from the state indicated by the dashed line to the state indicated by the solid line in FIG. 21(b)), resulting in an increase in time for which the switching loss is large. Thus, the loss per switching is increased, thereby increasing the amount of heat generation of the power element(s) (37).

In the foregoing configuration, the amount of heat generation of the power element(s) (37) can be easily increased without using a heating unit such as a heater, and therefore occurrence of dew condensation in the power element(s) (37) or surrounding components (16, 71) thereof can be reduced.

The base circuit (70) illustrated in FIG. 21(a) has been set forth as an example of a circuit, the resistance of which is variable. The base circuit (80) illustrated in FIG. 21 (c) has been set forth as an example of a circuit, the capacity of the capacitor of which is variable. The base circuit (70, 80) is not limited to the foregoing examples.

### «Fifteenth Embodiment of the Invention»

In the seventh to twelfth embodiments, the heat generation amount increaser (56) increases the current value of the compressor (11), thereby increasing the amount of heat generation of the power element(s) (37). In a fifteenth embodiment, a heat generation amount increaser (56) is configured to increase a conduction loss of a power element(s) (37) to increase the amount of heat generation of the power element(s) (37).

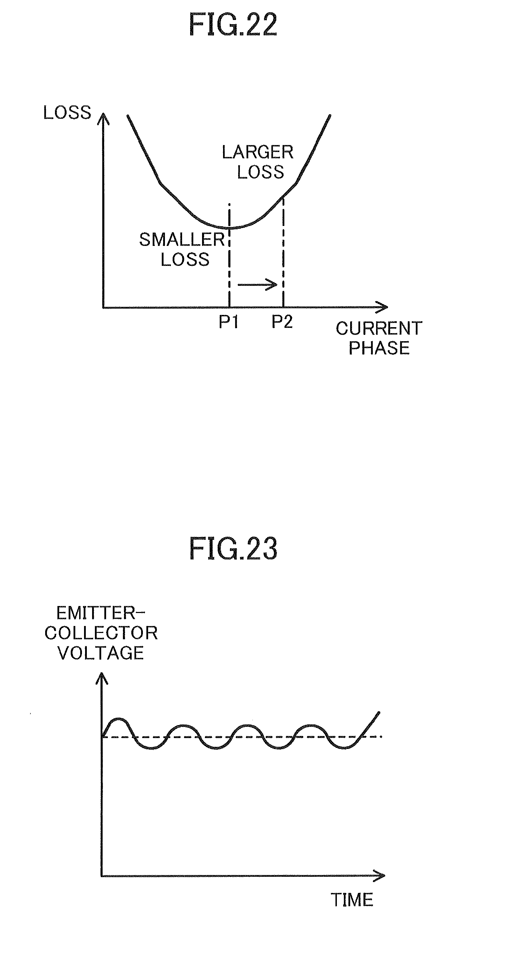

Any methods may be employed to increase the conduction loss of the power element(s) (37). As a first example, the conduction loss of the power element(s) (37) may be increased by shifting the phase of current flowing into each of drivers of a drive circuit (31) in a dew condensation reduction operation. Specifically, as illustrated in FIG. 22, in a normal operation, a refrigeration apparatus (1) is operated using a phase P1 that the conduction loss of the power element(s) (37) is the minimum. On the other hand, in the dew condensation reduction operation, the refrigeration apparatus (1) is operated using a phase P2 that the conduction loss of the power element(s) (37) is larger. The shift from the phase P1 to the phase P2 as described above increases collector current of the power element(s) (37), resulting in an increase in conduction loss of the power element(s) (37).

As a second example of increasing the conduction loss of the power element(s) (37), emitter-collector voltage of the power element(s) (37) of the drive circuit (31) may fluctuate in the dew condensation reduction operation. Specifically, as illustrated in FIG. 23, in the normal operation, the emitter-collector voltage is maintained constant (see a dashed line in FIG. 23). On the other hand, the emitter-collector voltage fluctuates in the dew condensation reduction operation (see a solid line in FIG. 23). The fluctuation of the emitter-collector voltage increases an effective value of the collector current, resulting in an increase in conduction loss of the power element(s) (37).

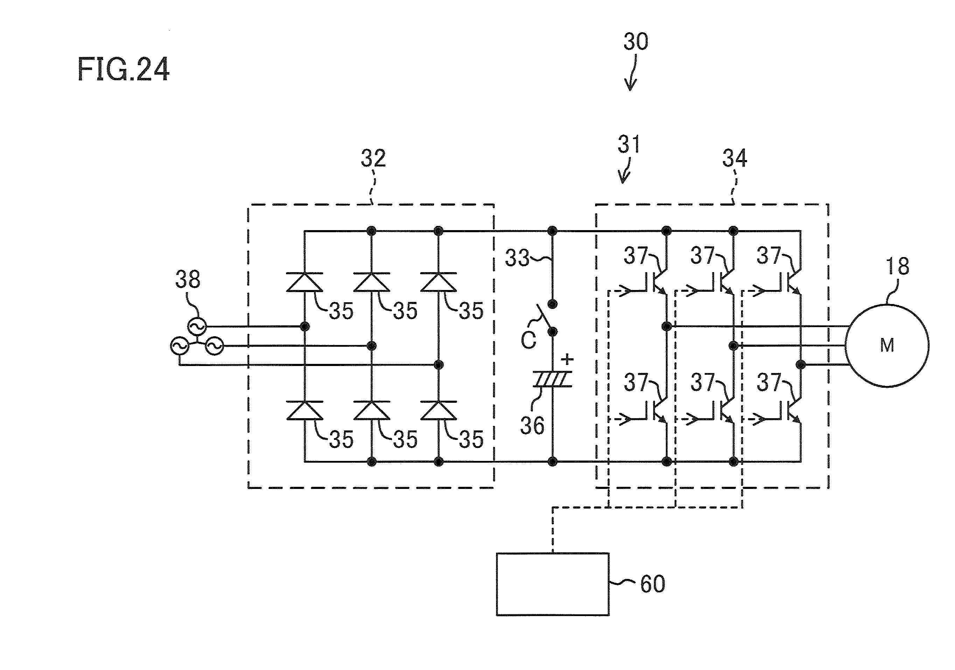

For example, the following method for fluctuating the emitter-collector voltage may be employed. As illustrated in FIG. 24, a switch C is provided in a capacitor circuit (33) of the drive circuit (31). In the normal operation, the switch C is closed, and the emitter-collector voltage is smoothed by a capacitor (36). On the other hand, in the dew condensation reduction operation, the switch C is opened to fluctuate the emitter-collector voltage.

As a third example of increasing the conduction loss of the power element(s) (37), e.g., base voltage of the power element(s) (37) may be lowered in the dew condensation reduction operation. The lowering of the base voltage of the power element(s) (37) increases on-resistance (emitter-collector resistance in a conduction state) of the power element(s) (37), resulting in an increase in conduction loss of the power element(s) (37).

The heat generation amount increaser (56) can increase the conduction loss of the power element(s) (37) by the foregoing methods to increase the amount of heat generation of the power element(s) (37). Thus, in the foregoing configuration, the amount of heat generation of the power element(s) (37) can be easily increased without using a heating unit such as a heater, and therefore occurrence of dew condensation in the power element(s) (37) or surrounding components (16, 71) thereof can be reduced.

### «Sixteenth Embodiment of the Invention»

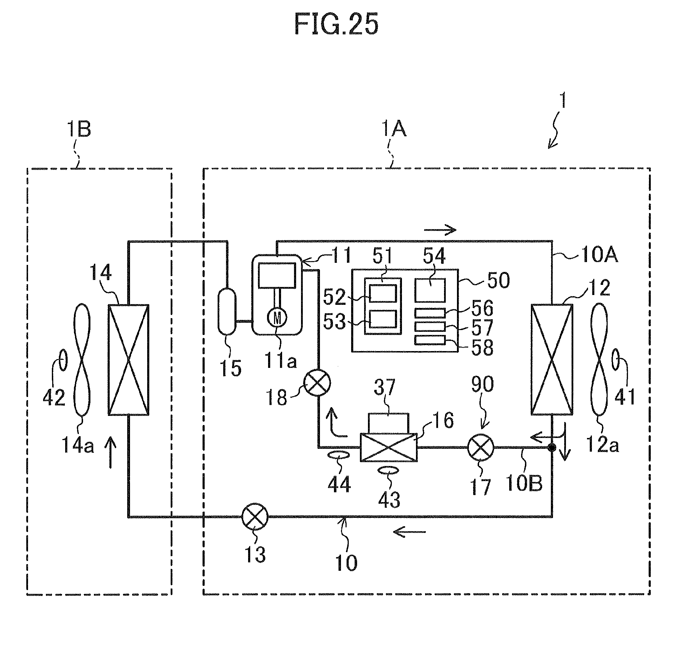

As illustrated in FIG. 25, a refrigeration apparatus (1) of a sixteenth embodiment is configured by changing the configuration of the operation control device (50) of the refrigeration apparatus (1) of any one of the seventh to fifteenth embodiments.

Specifically, an operation control device (50) includes a forcible heat generation amount resetter (58) configured to, after a predetermined time has lapsed since the amount of heat generation of a power element(s) (37) was increased by a heat generation amount increaser (56), forcibly reset the amount of heat generation of the power element(s) (37) to a normal state before the increase in heat generation amount, in addition to a dew condensation determinator (54), the heat generation amount increaser (56), and a heat generation amount resetter (57).

The power element(s) (37) generates high-temperature heat, and tends to be broken down when the temperature thereof is increased beyond a limit temperature. For such a reason, it is not preferable considering protection of the power element(s) (37) that the state in which the amount of heat generation of the power element(s) (37) is large continues for a long period of time. As in the eighth to twelfth embodiments, when dew condensation is highly likely to occur, it is determined that a dew condensation state is established, and then the amount of heat generation of the power element(s) (37) is increased. In such a case, although the dew condensation state is actually cleared, the dew condensation determinator (54) may determine that the dew condensation state is established. Thus, there is a possibility that the state in which the amount of heat generation of the power element(s) (37) is large continues uselessly.

In the sixteenth embodiment, a time sufficient for clearing the dew condensation state is preset as the predetermined time. After the predetermined time has lapsed since the amount of heat generation of the power element(s) (37) was increased, the forcible heat generation amount resetter (58) forcibly resets the amount of heat generation of the power element(s) (37) to the normal state before the increase in heat generation amount. This prevents the breakdown of the power element(s) (37), and reduces a heat loss of the power element(s) (37).

In addition, e.g., a control by the heat generation amount increaser (56) is not allowed until a predetermined time has elapsed since the forcible heat generation amount resetter (58) forcibly resets the amount of heat generation of the power element(s) (37). In such a case, a balance between the reduction in dew condensation and the reduction in heat loss of the power element(s) (37) can be ensured.

### «Seventeenth Embodiment of the Invention»

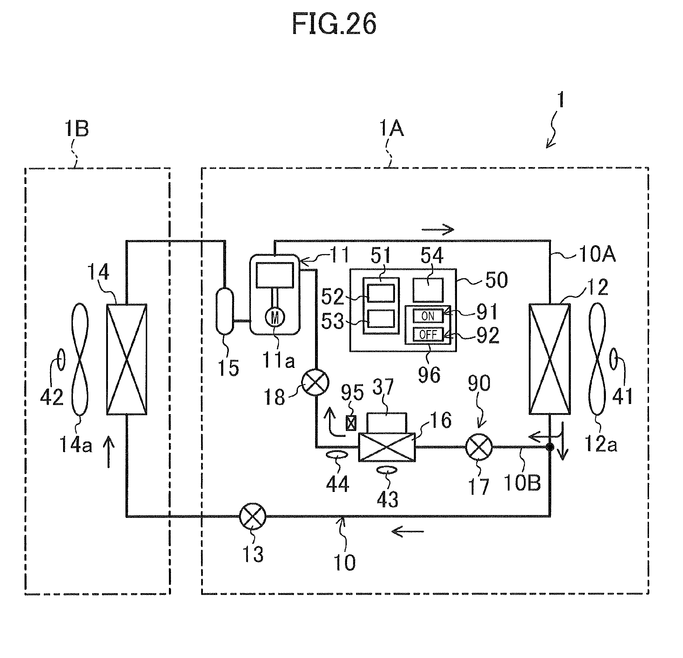

As illustrated in FIG. 26, a refrigeration apparatus (1) of a seventeenth embodiment is configured by changing the configuration of the temperature increaser (91) of the refrigeration apparatus (1) of the seventh embodiment.

Specifically, instead of the heat generation amount increaser (56) of the seventh embodiment, a temperature increaser (91) includes a heater (95) configured to heat a power element(s) (37), and a heater controller (96) configured to control ON/OFF of the heater (95). The heater (95) is provided near the power element(s) (37), and the heater controller (96) is provided in an operation control device (50). Note that the temperature resetter (92) also includes a heater (95) and a heater controller (96). Since other configurations of the present embodiment are similar to those of the seventh embodiment, the description thereof will not be repeated.

An operation of the refrigeration apparatus (1) of the seventeenth embodiment is similar to that of the seventh embodiment, except that, in a dew condensation reduction operation control by the operation control device (50), the heater controller (96) performs an ON control of the heater (95) to increase the temperature of the power element(s) (37) at step S53 and performs an OFF control of the heater (95) to reset the temperature of the power element(s) (37) to a normal temperature before the increase in temperature of the power element(s) (37) at step S56.

As described above, since the heater (95) is used to increase the temperature of the power element(s) (37), occurrence of dew condensation in the power element(s) (37) and surrounding components (16, 71) thereof may be prevented.

In the refrigeration apparatus (1) of each of the eighth to twelfth embodiments, the configuration of the temperature increaser (91) may be changed as in the foregoing.

### «Eighteenth Embodiment of the Invention»

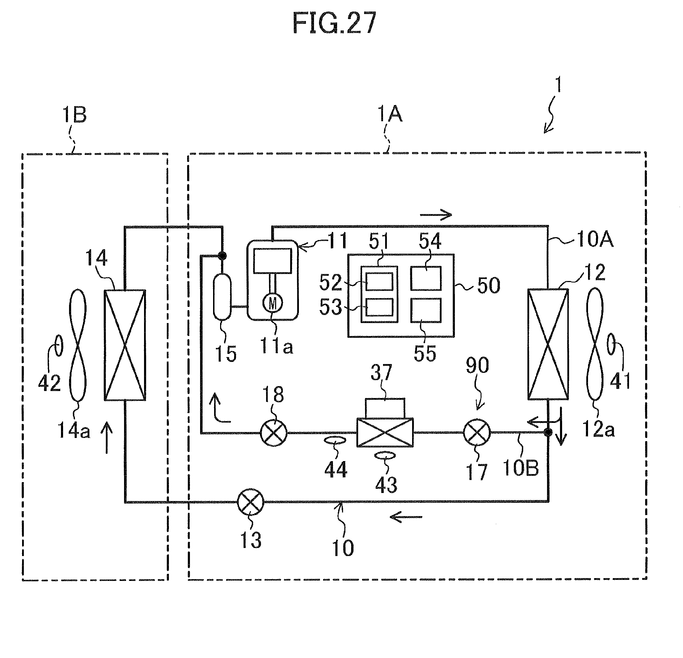

As illustrated in FIG. 27, a refrigeration apparatus (1) of an eighteenth embodiment is configured by changing part of a refrigerant circuit (10) to which an outlet end of a branch circuit (10B) is connected in each of the foregoing embodiments. Specifically, in the eighteenth embodiment, the outlet end of the branch circuit (10B) is connected to a pipe on an inlet side of a compressor (11). Other configurations of the present embodiment are similar to those of each of the foregoing embodiments. Note that, in FIG. 27, the refrigeration apparatus (1) configured by changing the configuration of the first embodiment is illustrated as an example.

As described above, in the case where the outlet end of the branch circuit (10B) is connected to the pipe on the inlet side of the compressor (11), a first opening degree adjuster (52) adjusts, in the branch circuit (10B), the degree of opening of a first throttle valve (18) such that the evaporation temperature of refrigerant in a cooler (16) reaches a target temperature. In addition, a second opening degree adjuster (53) adjusts the degree of opening of a second throttle valve (17) such that the degree of superheating of refrigerant at an outlet of the cooler (16) reaches a target degree of superheating. Thus, the temperature of refrigerant passing through the cooler (16) can be the target temperature, and moisturizing of refrigerant to be introduced into the compressor (11) can be prevented.

In a dew condensation reduction operation control, when a dew condensation determinator (54) determines that a dew condensation state is established, occurrence of dew condensation in a power element(s) (37) and the cooler (16) can be reduced by forcibly reducing the degree of opening of the first throttle valve (18) by a forcible opening degree reducer (55) on behalf of the first opening degree adjuster (52), or by increasing the temperature of the power element(s) (37) by a temperature increaser (91).

Thus, advantages similar to those of each of the foregoing embodiments can be realized in the eighteenth embodiment.

### «Nineteenth Embodiment of the Invention»

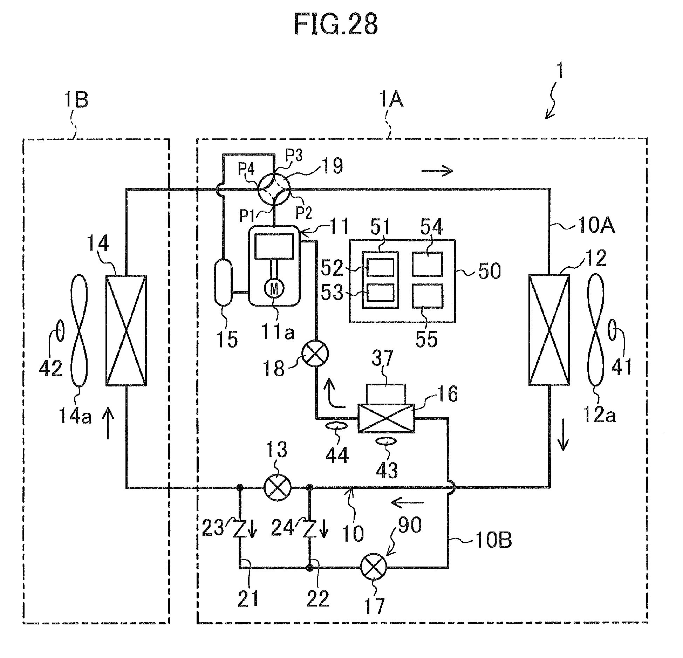

As illustrated in FIG. 28, a refrigeration apparatus (1) of a nineteenth embodiment is configured such that, in each of the foregoing embodiments, a four-way valve (19) is provided in a refrigerant circuit (10) and refrigerant circulation in a main circuit (10A) is reversible. Note that, in FIG. 28, the refrigeration apparatus (1) configured by changing the configuration of the first embodiment is illustrated as an example.

Specifically, a gas pipe connected to an outlet side of a compressor (11) is connected to a first port (P1) of the four-way valve (19). A gas pipe connected to one end of a heat-source-side heat exchanger (12) is connected to a second port (P2) of the four-way valve (19). A gas pipe connected to an inlet side of the compressor (11) is connected to a third port (P3) of the four-way valve (19). A gas pipe connected to one end of a utilization-side heat exchanger (14) is connected to a fourth port (P4) of the four-way valve (19).

Two inlet pipes (21, 22) are provided at an inlet end of a branch circuit (10B). The two inlet pipes (21, 22) are connected to a liquid pipe connecting between the heat-source-side heat exchanger (12) and the utilization-side heat exchanger (14) so as to sandwich an expansion valve (13). A check valve (23) configured to allow only a refrigerant flow from the main circuit (10A) to the inlet pipe (21) is provided in the inlet pipe (21), and a check valve (24) configured to allow only a refrigerant flow from the main circuit (10A) to the inlet pipe (22) is provided in the inlet pipe (22). Other configurations of the present embodiment are similar to those of each of the foregoing embodiments.

According to the foregoing configuration, in the refrigeration apparatus (1) of the nineteenth embodiment, the refrigerant circulation in the main circuit (10A) is reversible, and, e.g., an air conditioning apparatus is switchable between an operation for cooling an inside of a room and an operation for heating the inside of the room. Specifically, when the four-way valve (19) is switched to a first state (see a solid line in FIG. 28) in which the first port (P1) and the second port (P2) communicate with each other and the third port (P3) and the fourth port (P4) communicate with each other, the cooling operation in which the heat-source-side heat exchanger (12) serves as a condenser and the utilization-side heat exchanger (14) serves as an evaporator is performed. On the other hand, when the four-way valve (19) is switched to a second state (see a dashed line in FIG. 28) in which the first port (P1) and the fourth port (P4) communicate with each other and the second port (P2) and the third port (P3) communicate with each other, the heating operation in which the utilization-side heat exchanger (14) serves as the condenser and the heat-source-side heat exchanger (12) serves as the evaporator is performed.

Part of high-pressure liquid refrigerant flows from the inlet pipe (21, 22) connected to an upstream side of the expansion valve (13) into the branch circuit (10B). Specifically, in the cooling operation, part of high-pressure liquid refrigerant flows into the branch circuit (10B) through the inlet pipe (22) connected to the upstream side of the expansion valve (13). On the other hand, in the heating operation, part of high-pressure liquid refrigerant flows into the branch circuit (10B) through the inlet pipe (21) connected to the upstream side of the expansion valve (13).

In the branch circuit (10B), a first opening degree adjuster (52) adjusts the degree of opening of a first throttle valve (18) such that the evaporation temperature of refrigerant in a cooler (16) reaches a target temperature. In addition, a second opening degree adjuster (53) adjusts the degree of opening of a second throttle valve (17) such that the degree of superheating of refrigerant at an outlet of the cooler (16) reaches a target degree of superheating. Thus, the temperature of refrigerant passing through the cooler (16) can be the target temperature, and moisturizing of refrigerant to be introduced into the compressor (11) can be prevented.

In a dew condensation reduction operation control, when a dew condensation determinator (54) determines that a dew condensation state is established, occurrence of dew condensation in a power element(s) (37) and the cooler (16) can be reduced by forcibly reducing the degree of opening of the first throttle valve (18) by a forcible opening degree reducer (55) on behalf of the first opening degree adjuster (52), or by increasing the temperature of the power element(s) (37) by a temperature increaser (91).

According to the foregoing configuration, advantages similar to those of each of the foregoing embodiments can be realized in the nineteenth embodiment. According to the nineteenth embodiment, a flow of part of high-pressure liquid refrigerant into the branch circuit (10B) is allowed in both of the cooling operation and the heating operation. Thus, the temperature of the cooler (16) can be easily controlled, and the dew condensation around the cooler (16) can be easily reduced.

### «Twentieth Embodiment of the Invention»

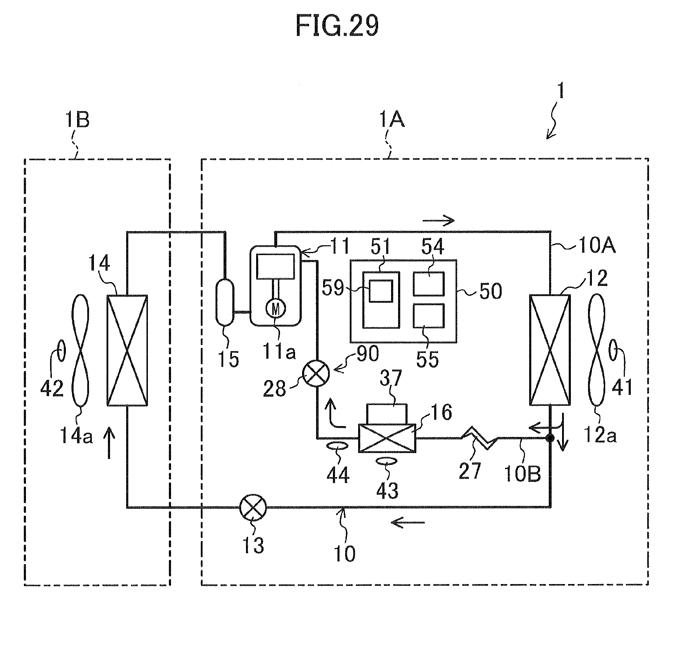

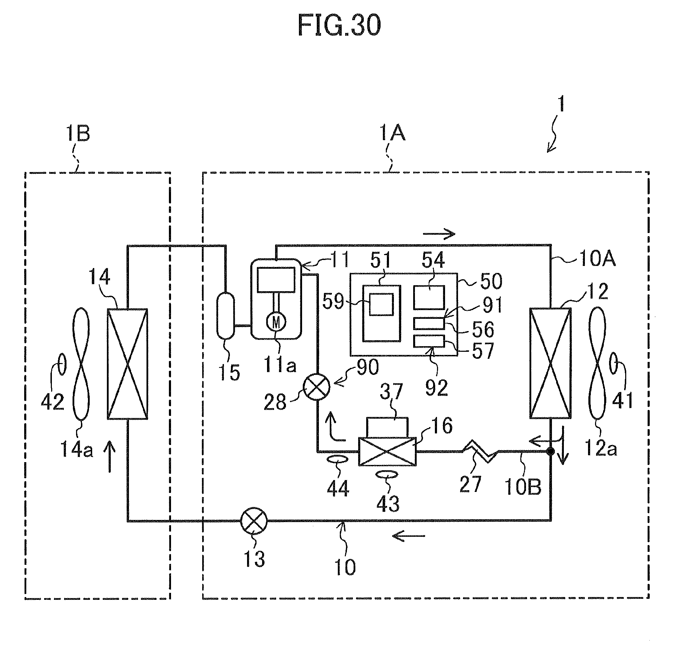

As illustrated in FIG. 29, a refrigeration apparatus (1) of a twentieth embodiment is configured by changing the configuration of the adjusting mechanism (90) of each of the foregoing embodiments of the present invention. Note that the refrigeration apparatus (1) configured by changing the configuration of the first embodiment is illustrated as an example in FIG. 29, and the refrigeration apparatus (1) configured by changing the configuration of the seventh embodiment is illustrated as an example in FIG. 30.

Specifically, an adjusting mechanism (90) includes a capillary tube (27) and a throttle valve (28) which are provided in a branch circuit (10B), and an opening degree adjuster (59) configured to adjust the degree of opening of the throttle valve (28), instead of including the first throttle valve (18), the second throttle valve (17), the first opening degree adjuster (52), and the second opening degree adjuster (53).

The capillary tube (27) is provided upstream of a cooler (16) of the branch circuit (10B), and serves as a throttle mechanism of the present invention. On the other hand, the throttle valve (28) is provided downstream of the cooler (16) of the branch circuit (10B).

The opening degree adjuster (59) is provided in a normal operator (51) of an operation control device (50), and adjusts the degree of opening of the throttle valve (28). Specifically, the opening degree adjuster (59) adjusts the degree of opening of the throttle valve (28) such that the evaporation temperature of refrigerant in the cooler (16) reaches a target temperature.

As illustrated in FIG. 29, in the case where the operation control device (50) includes a forcible opening degree reducer (55), the forcible opening degree reducer (55) is configured to forcibly reduce the degree of opening of the throttle valve (28) on behalf of the opening degree adjuster (59) when a dew condensation determinator (54) determines that a dew condensation state is established. On the other hand, as illustrated in FIG. 30, in the case where the operation control device (50) includes a temperature increaser (91), the temperature increaser (91) is configured similar to that of each of the foregoing embodiments.

In the branch circuit (10B), the opening degree adjuster (59) adjusts the degree of opening of the throttle valve (28) such that the evaporation temperature of refrigerant in the cooler (16) reaches the target temperature. Thus, the temperature of refrigerant passing through the cooler (16) is adjusted to the target temperature.

As illustrated in FIG. 29, in a dew condensation reduction operation control, in the case where the operation control device (50) includes the forcible opening degree reducer (55), the forcible opening degree reducer (55) forcibly reduces the degree of opening of the throttle valve (28) on behalf of the opening degree adjuster (59) when the dew condensation determinator (54) determines that the dew condensation state is established. Thus, a pressure on an upstream side of the throttle valve (28) is increased, and the amount of refrigerant flowing into the branch circuit (10B) is decreased. As a result, the amount of heat absorbed by refrigerant in the cooler (16) is decreased. Consequently, dew condensation in a power module (61) and surrounding components (16, 71) thereof is reduced, and the dew condensation state in the cooler (16) is cleared.

On the other hand, as illustrated in FIG. 30, in the case where the operation control device (50) includes the temperature increaser (91), when the dew condensation determinator (54) determines that the dew condensation state is established, the temperature increaser (91) increases the temperature of a power element(s) (37) in a manner similar to that of each of the foregoing embodiments. As a result, the dew condensation in the power module (61) and the surrounding components (16, 71) thereof is reduced, and the dew condensation state in the cooler (16) is cleared.

According to the foregoing configuration, advantages similar to those of each of the foregoing embodiments can be realized in the twentieth embodiment.

### «Twenty-First Embodiment of the Invention»

A refrigeration apparatus (1) of a twenty-first embodiment is configured such that the first opening degree adjuster (52) and the second opening degree adjuster (53) of each of the first to nineteenth embodiments respectively adjust, upon a start of the refrigeration apparatus (1), a first throttle valve (18) and a second throttle valve (17) to degrees of opening larger than an opening degree adjustable range of a normal operation.

Specifically, in the twenty-first embodiment, the first opening degree adjuster (52) adjusts, upon the start of the refrigeration apparatus (1), the degree of opening of the first throttle valve (18) such that the evaporation temperature of refrigerant in a cooler (16) reaches a temperature lower than a predetermined target temperature of the normal operation. On the other hand, the second opening degree adjuster (53) adjusts, upon the start of the refrigeration apparatus (1), the degree of opening of the second throttle valve (17) such that the degree of superheating of refrigerant at an outlet of the cooler (16) is smaller than a predetermined target degree of superheating of the normal operation. In the foregoing manner, the degrees of opening of the first throttle valve (18) and the second throttle valve (17) are larger than those of the normal operation upon the start of the refrigeration apparatus (1).

Upon the start of the refrigeration apparatus (1), only liquid refrigerant does not flow into a branch circuit (10B), but refrigerant containing a relatively-large amount of gas refrigerant flows into the branch circuit (10B). Thus, unevenness in temperature of the cooler (16) is likely to occur, and it is highly likely that a power element(s) (37) cannot be sufficiently cooled. In addition, if the amount of refrigerant flowing into the branch circuit (10B) is small, it takes time for refrigerant to reach the cooler (16) after the start of the refrigeration apparatus (1), and the power element(s) (37) cannot be cooled during such a time.

Since the first opening degree adjuster (52) and the second opening degree adjuster (53) are configured as described above, the first opening degree adjuster (52) adjusts, upon the start of the refrigeration apparatus (1), the degree of opening of the first throttle valve (18) to the degree of opening larger than the opening degree adjustable range of the normal operation, and the second opening degree adjuster (53) adjusts, upon the start of the refrigeration apparatus (1), the degree of opening of the second throttle valve (17) to the degree of opening larger than the opening degree adjustable range of the normal operation. As a result, since the amount of refrigerant larger than that in the normal operation can circulate through the branch circuit (10B) upon the start of the refrigeration apparatus (1), the unevenness in temperature of the cooler (16) can be prevented. In addition, after the start of the refrigeration apparatus (1), refrigerant can promptly reach the cooler (16). Thus, the power element(s) (37) can be sufficiently cooled right after the start of the refrigeration apparatus (1).

Note that the first opening degree adjuster (52) may be configured to, upon the start of the refrigeration apparatus (1), adjust the degree of opening of the first throttle valve (18) to a predetermined initial degree of opening larger than an opening degree adjustable range of the normal operation. Similarly, the second opening degree adjuster (53) may be configured to, upon the start of the refrigeration apparatus (1), adjust the degree of opening of the second throttle valve (17) to a predetermined initial degree of opening larger than the opening degree adjustable range of the normal operation.

As in the twenty-first embodiment, the opening degree adjuster (59) of the twentieth embodiment may be configured to, upon the start of the refrigeration apparatus (1), adjust the degree of opening of the throttle valve (28) larger than the opening degree adjustable range of the normal operation.

### «Twenty-Second Embodiment of the Invention»

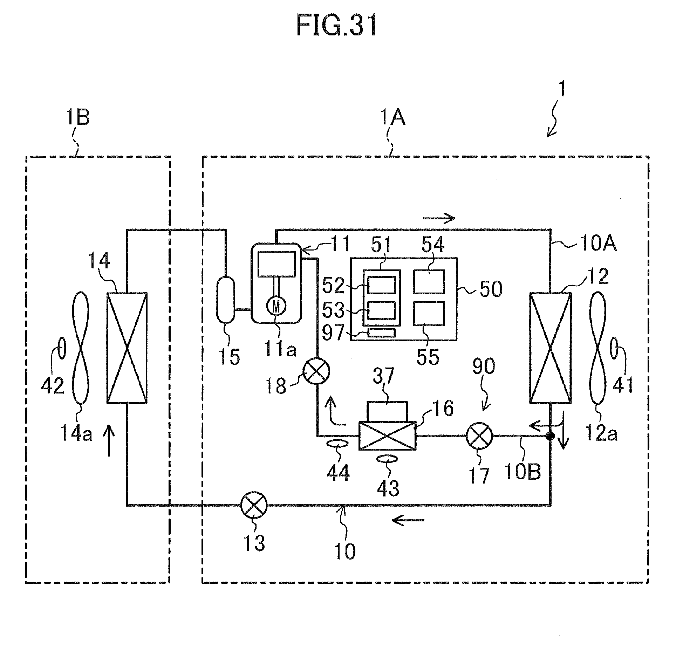

As illustrated in FIG. 31, a refrigeration apparatus (1) of a twenty-second embodiment is configured by adding, as a closing unit configured to close a branch circuit (10B) upon stoppage of the refrigeration apparatus (1), a stop controller (97) to the operation control device (50) of each of the first to nineteenth embodiments and the twenty-first embodiment. Note that, in FIG. 31, the refrigeration apparatus (1) configured by changing the configuration of the first embodiment is illustrated as an example.

Specifically, in the twenty-second embodiment, the stop controller (97) is configured to, upon the stoppage of the refrigeration apparatus (1), control the degree of opening of a first throttle valve (18) to a fully-closed state on behalf of a first opening degree adjuster (52). Thus, in the twenty-second embodiment, when the stoppage of the refrigeration apparatus (1) is selected, the stop controller (97) controls the degree of opening of the first throttle valve (18) to the fully-closed state.

When the first throttle valve (18) and a second throttle valve (17) are opened upon the stoppage of the refrigeration apparatus (1), refrigerant continues flowing until a pressure in the branch circuit (10B) is balanced. Thus, for a certain time after the stoppage of the refrigeration apparatus (1), refrigerant flows into a cooler (16) although a power element(s) (37) does not generate heat. As a result, there is a possibility that dew condensation occurs in the cooler (16), and therefore the power element(s) (37) is broken down.

However, in the twenty-second embodiment, upon the stoppage of the refrigeration apparatus (1), the stop controller (97) controls the degree of opening of the first throttle valve (18) to the fully-closed state. This prevents refrigerant from flowing into the cooler (16) after the stoppage of the refrigeration apparatus (1). Thus, a decrease in temperature of the cooler (16) is reduced.

By providing the stop controller (97), the flow of refrigerant into the cooler (16) after the stoppage of the refrigeration apparatus (1) can be reduced. This reduces the decrease in temperature of the cooler (16). Thus, the occurrence of the dew condensation in the cooler (16) can be prevented, and the breakdown of the power element(s) (37) due to adherence of dew condensation water can be prevented. In addition, by controlling the second throttle valve (17) provided downstream of the cooler (16) to the fully-closed state, the cooler (16) is not in a low-pressure state after the stoppage of the refrigeration apparatus (1). Thus, the decrease in temperature of the cooler (16) can be further reduced. Consequently, the breakdown of the power element(s) (37) can be further prevented.

Note that the stop controller (97) may be configured to, upon the stoppage of the refrigeration apparatus (1), control the degree of opening of the second throttle valve (17) to the fully-closed state on behalf of a second opening degree adjuster (53), or may be configured to control both of the degrees of opening of the first throttle valve (18) and the second throttle valve (17) to the fully-closed state on behalf of the first opening degree adjuster (52) and the second opening degree adjuster (53).

As in the twenty-second embodiment, the stop controller (97) configured to, upon the stoppage of the refrigeration apparatus (1), control the degree of opening of a throttle valve (28) to the fully-closed state on behalf of an opening degree adjuster (59) may be added to the operation control device (50) of the twentieth embodiment. In such a case, advantages similar to those of each of the foregoing embodiments can be realized.

### «Twenty-Third Embodiment of the Invention»

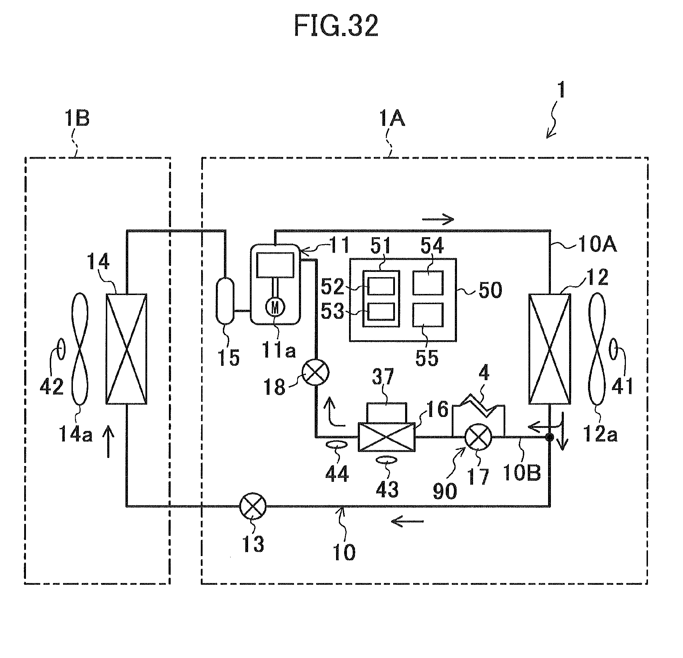

As illustrated in FIG. 32, a refrigeration apparatus (1) of a twenty-third embodiment is configured such that, in each of the first to nineteenth embodiments and the twenty-first and twenty-second embodiments, a capillary tube (4) which is a fixed throttle is connected in parallel to an upstream-side second throttle valve (17) of throttle valves of a branch circuit (10B). Note that, in FIG. 32, the refrigeration apparatus (1) configured by changing the configuration of the first embodiment is illustrated as an example.

The second throttle valve (17) is configured such that the degree of opening thereof is adjustable by a second opening degree adjuster (53). However, if the second throttle valve (17) is broken down, the degree of opening thereof cannot be adjusted. Thus, if the degree of opening of the second throttle valve (17) is fixed to a relatively-small degree of opening, the pressure of refrigerant is significantly reduced on an upstream side of a cooler (16). That is, the evaporation pressure of refrigerant in the cooler (16) is significantly reduced. For the foregoing reason, there is a possibility that the temperature of refrigerant circulating through the cooler (16) is decreased, resulting in excess of a cooling capacity of the cooler (16). In addition, if the flow rate of refrigerant flowing into the cooler (16) is too low, the cooling capacity of the cooler (16) is deficient.

In the twenty-third embodiment, the capillary tube (4) is connected in parallel to the second throttle valve (17) as described above. Thus, if the degree of opening of the second throttle valve (17) is fixed to the relatively-small degree of opening due to the breakdown of the second throttle valve (17), refrigerant passes through a flow path formed by the capillary tube (4) and then flows into the cooler (16). Consequently, the extremely-low evaporation pressure of refrigerant in the cooler (16) is prevented when the second throttle valve (17) is broken down. This prevents the excess of the cooling capacity of the cooler (16) due to the significant decrease in temperature of refrigerant circulating through the cooler (16). In addition, the extremely-low flow rate of refrigerant flowing into the cooler (16) can be prevented when the second throttle valve (17) is broken down. This prevents the deficiency of the cooling capacity of the cooler (16).

### «Twenty-Fourth Embodiment of the Invention»

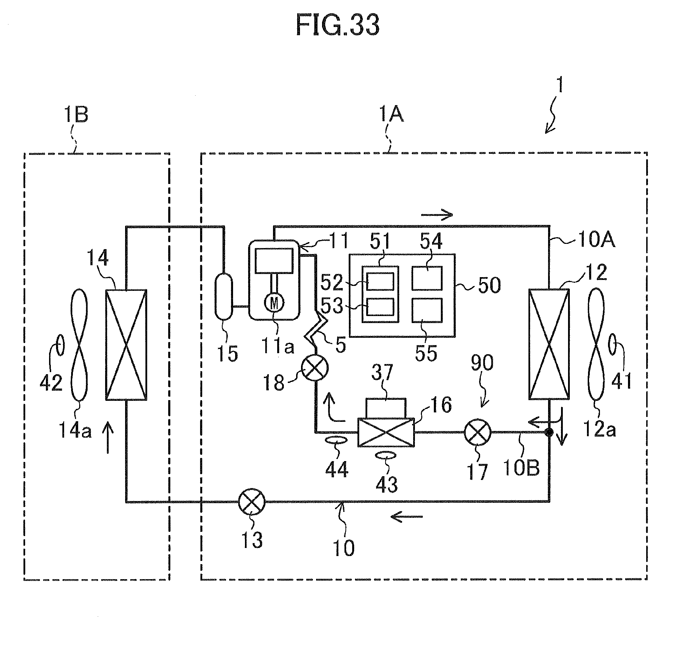

As illustrated in FIG. 33, a refrigeration apparatus (1) of a twenty-fourth embodiment is configured such that, in each of the first to twenty-third embodiments, a capillary tube (5) which is a fixed throttle is connected in series with a downstream-side first throttle valve (18) (since the throttle valve is designated by the reference numeral "28" in the twentieth embodiment, hereinafter collectively referred to as a "throttle valve (18, 28)") of throttle valves of a branch circuit (10B). Note that, in FIG. 33, the refrigeration apparatus (1) configured by changing the configuration of the first embodiment is illustrated as an example.

The throttle valve (18, 28) is configured such that the degree of opening thereof is adjustable by a first opening degree adjuster (52) (opening degree adjuster (59) in the twentieth embodiment). However, if the throttle valve (18, 28) is broken down, the degree of opening thereof cannot be adjusted. Thus, if the degree of opening of the throttle valve (18, 28) is fixed to a relatively-large degree of opening, a differential pressure in the throttle valve (18, 28) is significantly low, and the pressure of refrigerant flowing into a cooler (16) is close to the pressure of refrigerant at an outlet of the branch circuit (10B). That is, the evaporation pressure of refrigerant in the cooler (16) is significantly reduced. For the foregoing reason, there is a possibility that the temperature of the cooler (16) is decreased, resulting in excess of a cooling capacity of the cooler (16). In addition, if the degree of opening of the throttle valve (18, 28) is large, the amount of refrigerant flowing out from the cooler (16) is increased. Thus, refrigerant flows out from the cooler (16) before refrigerant flowing into the cooler (16) exchanges sufficient heat with a power element(s) (37). That is, refrigerant branched from a main flow uselessly passes through the cooler (16).

In the twenty-fourth embodiment, the capillary tube (5) is connected to a downstream side of the throttle valve (18, 28) as described above. Thus, even if the degree of opening of the throttle valve (18, 28) is fixed to the relatively-large degree of opening due to the breakdown of the throttle valve (18, 28), the pressure of refrigerant is reduced by the capillary tube (5). Consequently, the extremely-low evaporation pressure of refrigerant in the cooler (16) is prevented when the throttle valve (18, 28) is broken down. This prevents the excess of the cooling capacity of the cooler (16) due to the significant decrease in temperature of refrigerant circulating through the cooler (16). In addition, the amount of refrigerant flowing out from the cooler (16) can be controlled by the capillary tube (5) so as not to be extremely large when the throttle valve (18, 28) is broken down. This prevents refrigerant branched from the main flow from uselessly passing through the cooler (16) without the sufficient heat exchange with the power element(s) (37).

### «Twenty-Fifth Embodiment of the Invention»

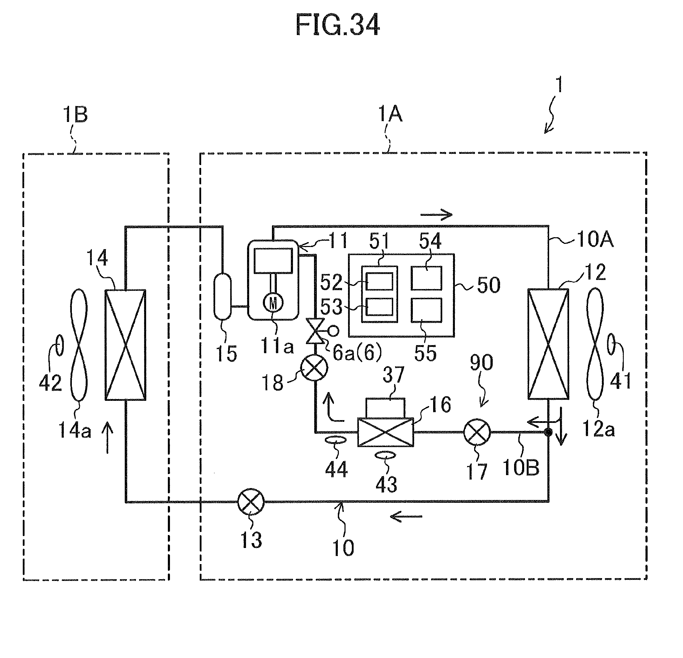

As illustrated in FIG. 34, a refrigeration apparatus (1) of a twenty-fifth embodiment is configured by adding a closing unit of the present invention configured to close a branch circuit (10B) upon power shutdown that a power supply to a power supply device (30) is shut down due to, e.g., a blackout, to the configuration of each of the first to nineteenth embodiments and the twenty-fourth embodiment. Note that, in FIG. 34, the refrigeration apparatus (1) configured by changing the configuration of the first embodiment is illustrated as an example.

Specifically, the closing unit is a solenoid valve (6a) provided in the branch circuit (10B) and configured to switch to an open state when power is ON and switch to a closed state when the power is OFF. Thus, if the power supply to the power supply device (30) is shut down due to, e.g., the blackout, the solenoid valve (6a) switches to the closed state. In such a manner, the branch circuit (10B) is closed, and refrigerant no longer circulates.

Upon the power shutdown such as the blackout, since a power supply to a power element(s) (37) is also shut down, the power element(s) (37) no longer generates heat. On the other hand, if the foregoing closing unit is not provided, the degree of opening of a throttle valve (17, 18, 28) is fixed to a degree of opening upon the power shutdown. Thus, in the branch circuit (10B), refrigerant continues flowing until a pressure is balanced. As a result, although the power element(s) (37) does not generate heat, refrigerant continues circulating through a cooler (16). Thus, there is a possibility that the temperature of the cooler (16) is decreased to a temperature at which dew condensation occurs.

In the twenty-fifth embodiment, the branch circuit (10B) is closed by the solenoid valve (6a) which is the closing unit upon the power shutdown. Thus, upon the power shutdown such as the blackout, the circulation of refrigeration through the cooler (16) is blocked, and the decrease in temperature of the cooler (16) can be reduced. Consequently, the occurrence of the dew condensation can be prevented, and breakdown of the power element(s) (37) due to adherence of dew condensation water can be prevented.

Since the solenoid valve (6a) is used as the closing unit, the branch circuit (10B) can be easily closed.

### «Twenty-Sixth Embodiment of the Invention»

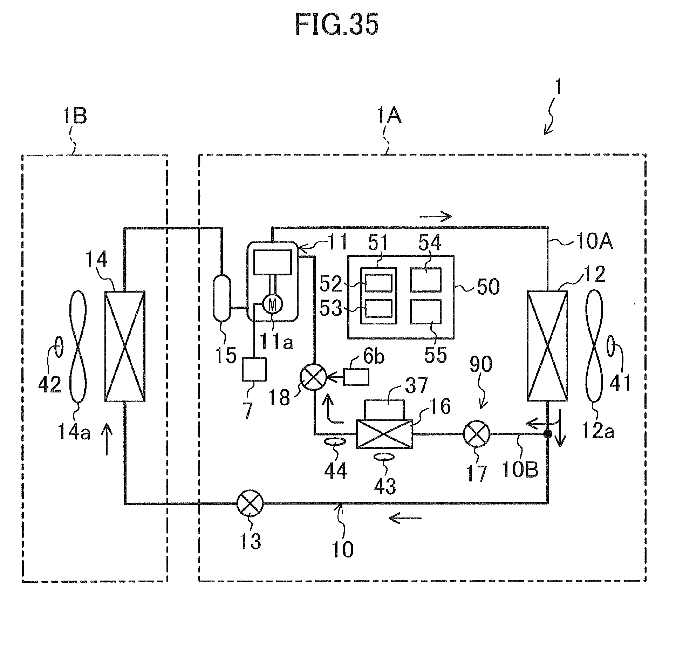

As illustrated in FIG. 35, a refrigeration apparatus (1) of a twenty-sixth embodiment is configured by providing a capacitor (7) and a power shutdown adjuster (6b) in the refrigeration apparatus (1) of the twenty-fifth embodiment instead of providing the solenoid valve (6a).

Specifically, the capacitor (7) is configured to, upon power shutdown, store power generated by rotating a motor (11a) of a compressor (11) due to inertia. In addition, the power shutdown adjuster (6b) is configured to, upon the power shutdown, adjust the degree of opening of a throttle valve (18, 28) to a fully-closed state by using power stored in the capacitor (7). Thus, upon the power shutdown, the power shutdown adjuster (6b) uses power generated by the rotation of the motor (11a) of the compressor (11) to switch the throttle valve (18, 28) to the fully-closed state. As a result, a branch circuit (10B) is closed, and circulation of refrigerant through a cooler (16) is blocked.

According to the foregoing configuration, in the twenty-sixth embodiment, the power shutdown adjuster (6b) switches the throttle valve (18, 28) to the fully-closed state to close the branch circuit (10B) upon the power shutdown. In such a manner, the circulation of refrigerant through the cooler (16) can be blocked, and a decrease in temperature of the cooler (16) can be reduced. Thus, in the twenty-sixth embodiment, occurrence of dew condensation can be prevented, and breakdown of a power element(s) (37) due to adherence of dew condensation water can be prevented.

Note that, in the twenty-sixth embodiment, the power shutdown adjuster (6b) may control the degree of opening of a second throttle valve (17) to the fully-closed state upon the power shutdown. In such a case, the similar advantages can be realized.

In addition, the capacitor (7) may be configured to, upon the power shutdown, store power generated by reversely rotating the motor (11a) of the compressor (11) due to a pressure difference of refrigerant.

### «Twenty-Seventh Embodiment of the Invention»

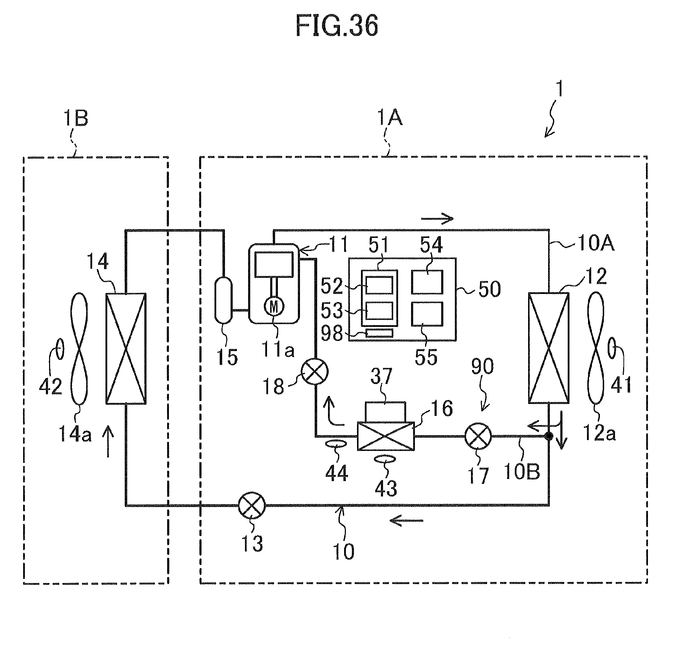

As illustrated in FIG. 36, a refrigeration apparatus (1) of a twenty-seventh embodiment is configured by adding a pump-down controller (98) configured to perform a pump-down operation in which refrigerant is stored in a heat-source-side heat exchanger (12), to the operation control device (50) of each of the first to twenty-sixth embodiments. Note that, in FIG. 36, the refrigeration apparatus (1) configured by changing the configuration of the first embodiment is illustrated as an example.

Specifically, the pump-down controller (98) is configured to perform the pump-down operation in which refrigerant is stored in the heat-source-side heat exchanger (12) by switching an expansion valve (13) to a fully-closed state and switching a throttle valve (a first throttle valve (18) or a throttle valve (28)) to the fully-closed state. In addition, the pump-down controller (98) includes a timer configured to measure a time from a preset start point of the pump-down operation to an overheating point bringing about a overheating state in which the temperature of a power element(s) (37) is highly likely to exceed a predetermined upper limit. The pump-down controller (98) completes the pump-down operation before termination of the time measurement by the timer. More specifically, the pump-down controller (98) changes the rotational speed of a motor (11a) of a compressor (11) such that the pump-down operation is completed before the termination of the time measurement by the timer.

When the pump-down operation is performed, the throttle valve (18, 28) is switched to the fully-closed state to close a branch circuit (10B). Thus, refrigerant no longer flows into a cooler (16). Although the power element(s) (37) cannot be cooled by the cooler (16) and the temperature of the power element(s) (37) is increased, refrigerant does not flow into the cooler (16), and therefore the overheating state of the power element(s) (37) cannot be estimated based on a refrigerant state. As a result, there is a possibility that the power element(s) (37) enters the overheating state during the pump-down operation, resulting in breakdown of the power element(s) (37).

In the twenty-seventh embodiment, the pump-down controller (98) is configured to perform the pump-down operation, i.e., to estimate the overheating point at which the power element(s) (37) enters the overheating state during the pump-down operation and complete the pump-down operation before the overheating point. Thus, since the pump-down operation can be completed before the power element(s) (37) enters the overheating state, the breakdown of the power element(s) (37) can be prevented, and it can be ensured that the pump-down operation is performed.

Note that the pump-down controller (98) may include an estimator configured to estimate the overheating point based on the heat capacity and heat generation amount of the power element(s) (37) which are input to the estimator, instead of including the timer.

### «Twenty-Eighth Embodiment of the Invention»

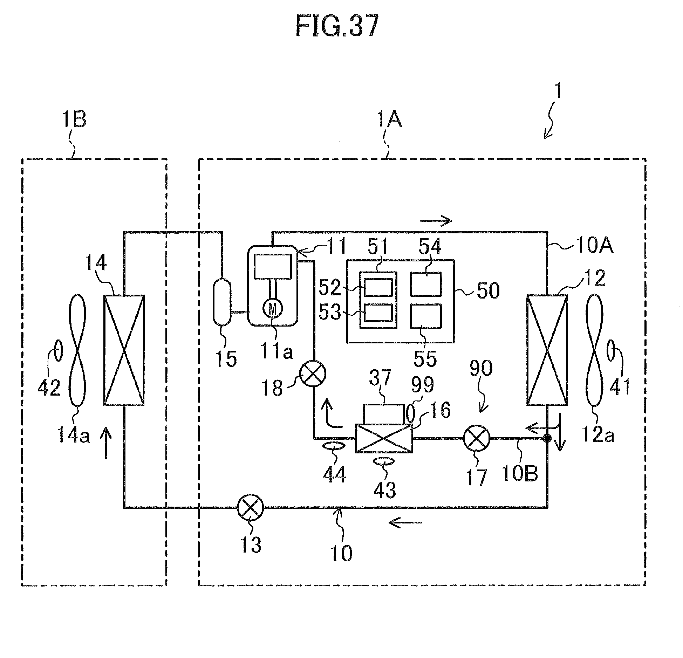

As illustrated in FIG. 37, a refrigeration apparatus (1) of a twenty-eighth embodiment is configured by adding a start interrupting unit configured to interrupt a start of the refrigeration apparatus (1) when due condensation is highly likely to occur in a cooler (16), to the configuration of each of the first to twenty-seventh embodiments. Note that, in FIG. 37, the refrigeration apparatus (1) configured by changing the configuration of the first embodiment is illustrated as an example.

Specifically, the start interrupting unit includes a temperature switch (99) configured to interrupt the start of the refrigeration apparatus (1) when the temperature of the cooler (16) is equal to or lower than a predetermined lower limit. The temperature switch (99) is attached to the cooler (16) and is connected to an operation control device (50). The temperature switch (99) detects the temperature of the cooler (16), and interrupts the start of the refrigeration apparatus (1) by transmitting a start interrupting signal to the operation control device (50). Note that the predetermined lower limit is set to a temperature at which the dew condensation is highly likely to occur in the cooler (16).

Upon stoppage of the refrigeration apparatus (1), the dew condensation may be highly likely to occur in the cooler (16) depending on, e.g., a change in environment. If the refrigeration apparatus (1) is started in such a state, there is a possibility that a short circuit is caused in, e.g., an electrical connection part of a power element(s) (37).

However, in the twenty-eighth embodiment, the temperature switch (99) is provided. Thus, if the dew condensation is highly likely to occur in the cooler (16), the temperature switch (99) interrupts the start of the refrigeration apparatus (1). Since the temperature switch (99) interrupts the start of the refrigeration apparatus (1) when the dew condensation is highly likely to occur in the cooler (16), the short circuit in, e.g., the electrical connection part of the power element(s) (37) upon the start of the refrigeration apparatus (1) can be prevented. In other words, the start of the refrigeration apparatus (1) is allowed only when there is no possibility that the short circuit is caused, thereby ensuring safety upon the start of the refrigeration apparatus (1).

Note that the start interrupting unit of the present invention is not limited to the temperature switch (99). Any units may be employed as long as the unit can detect, before the start of the refrigeration apparatus (1), whether or not the dew condensation is highly likely to occur in the cooler (16) and can interrupt the start of the refrigeration apparatus (1) when it is determined that the dew condensation is highly likely to occur.

### «Other Embodiment»

Each of the foregoing embodiments may have the following configurations.

In the twentieth embodiment, the throttle mechanism (e.g., the capillary tube (27)) of the present invention is provided upstream of the cooler (16) of the branch circuit (10B), and the throttle valve (28) of the present invention is provided downstream of the cooler (16). However, the throttle mechanism (27) and the throttle valve (28) may be arranged in reversed positions. In such a case, the opening degree adjuster (59) is configured to, in the normal operation, adjust the degree of opening of the throttle valve such that the evaporation temperature of refrigerant in the cooler (16) reaches a target temperature.

According to the foregoing configuration, the opening degree adjuster (59) adjusts the degree of opening of the throttle valve (28), and controls the evaporation temperature of refrigerant in the cooler (16) to the target temperature. On the other hand, when the dew condensation determinator (54) determines that the dew condensation state is established, the forcible opening degree reducer (55) forcibly reduces the degree of opening of the throttle valve (28) by a predetermined amount on behalf of the opening degree adjuster (59). Thus, the amount of refrigerant flowing into the branch circuit (10B) is decreased, and therefore the amount of heat absorbed by refrigerant in the cooler (16) (the amount of heat dissipated from the power module (61)) is decreased. As a result, the dew condensation in the power module (61) and the surrounding components (16, 71) thereof is reduced, and the dew condensation state in the cooler (16) is cleared.

Even in the foregoing configuration, since the temperature of refrigerant passing through the cooler (16) is adjustable by providing the adjusting mechanism (90) (the throttle valve (28), the capillary tube (27), or the opening degree adjuster (59)), the temperature of the cooler (16) can be adjusted to a suitable temperature. That is, the temperature of refrigerant passing through the cooler (16) can be adjusted depending on the amount of heat generation of the power element(s) (37) and the change in installation environment of the power element(s) (37). Thus, insufficient cooling or excessive cooling of the power element(s) (37) by the cooler (16) can be reduced, thereby improving efficiency of cooling of the power element(s) (37) by the cooler (16).

Note that the foregoing embodiments have been set forth merely for purposes of preferred examples in nature, and are not intended to limit the scope, applications, and use of the invention.

### INDUSTRIAL APPLICABILITY

As described above, the present invention is useful as the refrigeration apparatus in which the power element(s) of the power supply device configured to supply power to the components of the refrigerant circuit is cooled by refrigerant.

### DESCRIPTION OF REFERENCE CHARACTERS

- 1: Refrigeration Apparatus
- 4: Capillary Tube (Fixed Throttle)
- 5: Capillary Tube (Fixed Throttle)
- 6: Closing Unit
- 6a: Solenoid Valve
- 6b: Power Shutdown Adjuster (Power Shutdown Adjusting Unit)
- 10: Refrigerant Circuit
- 10A: Main Circuit
- 10B: Branch Circuit
- 11: Compressor
- 12: Heat-Source-Side Heat Exchanger
- 13: Expansion Valve (Expansion Mechanism)
- 14: Utilization-Side Heat Exchanger
- 16: Cooler
- 17: Second Throttle Valve (Throttle Mechanism)
- 18: First Throttle Valve (Throttle Valve)
- 27: Capillary Tube (Throttle Mechanism)
- 28: Throttle Valve
- 30: Power Supply Device
- 37: Power Element
- 41: Outdoor Air Temperature Sensor (Air Temperature Sensor)
- 42: Room Temperature Sensor
- 43: Evaporation Temperature Sensor
- 44: Outlet Temperature Sensor
- 45: Dew Condensation Sensor
- 46: Temperature Sensor
- 47: Humidity Sensor
- 48: Humidity Sensor
- 52: First Opening Degree Adjuster (Opening Degree Adjuster)
- 53: Second Opening Degree Adjuster (Throttle Mechanism Adjuster)
- 54: Dew Condensation Determinator
- 55: Forcible Opening Degree Reducer
- 56: Heat Generation Amount Increaser
- 57: Heat Generation Amount Resetter
- 58: Forcible Heat Generation Amount Resetter
- 59: Opening Degree Adjuster
- 90: Refrigerant Temperature Adjusting Mechanism
- 91: Temperature Increaser
- 92: Temperature Resetter
- 95: Heater
- 97: Stop Controller
- 98: Pump-Down Controller
- 99: Temperature Switch (Start Interrupting Unit)

## Claims

1. A refrigeration apparatus including
a refrigerant circuit (10) having
a main circuit (10A) in which a compressor (11), a heat-source-side heat exchanger (12), an expansion mechanism (13), and a utilization-side heat exchanger (14) are connected together to perform a refrigeration cycle,
a branch circuit (10B) which branches part of high-pressure liquid refrigerant flowing through the main circuit (10A) and leads the part of high-pressure liquid refrigerant from a high-pressure part of the main circuit (10A) to part of the main circuit (10A) having a pressure lower than that of the high-pressure part,
a power supply device (30) including a power element (37) and supplying power to a driver of a component of the refrigerant circuit (10), and
a cooler (16) connected to the branch circuit (10B) and cooling the power element (37) by refrigerant flowing through the branch circuit (10B), the refrigeration apparatus comprising:
an adjusting mechanism (90) configured to adjust a state of refrigerant flowing through the branch circuit (10B) and adjust a temperature of refrigerant passing through the cooler (16) to a target temperature.

2. The refrigeration apparatus of claim 1, wherein
the adjusting mechanism (90) includes
a throttle mechanism (17, 27) connected to one end of the cooler (16) of the branch circuit (10B),
a throttle valve (18, 28) which is connected to the other end of the cooler (16) of the branch circuit (10B) and a degree of opening of which is adjustable, and
an opening degree adjuster (52, 59) adjusting the degree of opening of the throttle valve (18, 28) such that an evaporation temperature of refrigerant in the cooler (16) reaches a target temperature.

3. The refrigeration apparatus of claim 2, wherein
the throttle valve (18) is provided downstream of the cooler (16),
the throttle mechanism (17) is provided upstream of the cooler (16), and a degree of opening of the throttle mechanism (17) is adjustable, and
the adjusting mechanism (90) further includes a throttle mechanism adjuster (53) adjusting the degree of opening of the throttle mechanism (17) such that a degree of superheating of refrigerant at an outlet of the cooler (16) reaches a target degree of superheating.

4. The refrigeration apparatus of claim 3, wherein
the opening degree adjuster (52) adjusts, upon a start of the refrigeration apparatus, the degree of opening of the throttle valve (18) to a degree of opening larger than an opening degree adjustable range of a normal operation, and
the throttle mechanism adjuster (53) adjusts, upon the start of the refrigeration apparatus, the degree of opening of the throttle mechanism (17) to a degree of opening larger than the opening degree adjustable range of the normal operation.

5. The refrigeration apparatus of claim 3 or 4, further comprising:
a stop controller (97) configured to, upon stoppage of the refrigeration apparatus, control at least one of the degrees of opening of the throttle valve (18) and the throttle mechanism (17) to a fully-closed state.

6. The refrigeration apparatus of any one of claims 3-5, further comprising:
a fixed throttle (4) connected in parallel to the throttle mechanism (17).

7. The refrigeration apparatus of any one of claims 3-6, further comprising:
a fixed throttle (5) connected in series with the first throttle valve (18).

8. The refrigeration apparatus of any one of claims 2-7, further comprising:
a detector (41, 46, 47, 48) configured to detect a physical amount to be an indicator for a possibility of occurrence of dew condensation in the power element (37) or a surrounding component (16, 71) thereof; and
a forcible opening degree reducer (55) configured to, when a detection value of the detector (41, 46, 47, 48) indicates a dew condensation state in which the dew condensation is highly likely to occur in the power element (37) or the surrounding component (16, 71) thereof, forcibly reduce the degree of opening of the throttle valve (18, 28) on behalf of the opening degree adjuster (52, 59).

9. The refrigeration apparatus of claim 8, wherein
the detector includes
a temperature sensor (46) provided in the power element (37) or the surrounding component (16, 71) thereof, and
an air temperature sensor (41) detecting a temperature of air around the power supply device (30), and
the forcible opening degree reducer (55) is configured to, when the detection value of the temperature sensor (46) is lower than the detection value of the air temperature sensor (41) and it is determined that the dew condensation state is established, forcibly reduce the degree of opening of the throttle valve (18, 28) on behalf of the opening degree adjuster (52, 59).

10. The refrigeration apparatus of claim 8, wherein
the detector includes
a temperature sensor (46) provided in the power element (37) or the surrounding component (16, 71) thereof, and
an air temperature sensor (41) detecting a temperature of air around the power supply device (30), and
the forcible opening degree reducer (55) is configured to, when a temperature obtained by adding a preset temperature increase from an installation part of the temperature sensor (46) to an electrical connection part of the power element (37) to the detection value of the temperature sensor (46) is lower than the detection value of the air temperature sensor (41) and it is determined that the dew condensation state is established, forcibly reduce the degree of opening of the throttle valve (18, 28) on behalf of the opening degree adjuster (52, 59).

11. The refrigeration apparatus of claim 8, wherein
the detector includes
a temperature sensor (46) provided in the power element (37) or the surrounding component (16, 71) thereof, and
an air temperature sensor (41) detecting a temperature of air around the power supply device (30), and
the forcible opening degree reducer (55) is configured to, when the detection value of the temperature sensor (46) is lower than a dew-point temperature corresponding to a preset reference relative humidity at an air temperature detected by the air temperature sensor (41) and it is determined that the dew condensation state is established, forcibly reduce the degree of opening of the throttle valve (18, 28) on behalf of the opening degree adjuster (52, 59).

12. The refrigeration apparatus of claim 8, wherein
the detector includes a humidity sensor (47) detecting a relative humidity of air around the power element (37), and
the forcible opening degree reducer (55) is configured to, when the detection value of the humidity sensor (47) is higher than a predetermined upper limit and it is determined that the dew condensation state is established, forcibly reduce the degree of opening of the throttle valve (18, 28) on behalf of the opening degree adjuster (52, 59).

13. The refrigeration apparatus of claim 8, wherein
the detector includes
a humidity sensor (48) detecting a relative humidity of air around the power supply device (30),
an air temperature sensor (41) detecting a temperature of air around the power supply device (30), and
a temperature sensor (46) provided in the power element (37) or the surrounding component (16, 71) thereof, and
the forcible opening degree reducer (55) is configured to, when the detection value of the temperature sensor (46) is lower than a dew-point temperature calculated based on the relative humidity detected by the humidity sensor (48) and the air temperature detected by the air temperature sensor (41), forcibly reduce the degree of opening of the throttle valve (18, 28) on behalf of the opening degree adjuster (52, 59).

14. The refrigeration apparatus of any one of claims 2-7, further comprising:
a dew condensation sensor (45) detecting dew condensation in the power element (37) or the surrounding component (16, 71) thereof; and
a forcible opening degree reducer (55) configured to, when a detection value of the dew condensation sensor (45) indicates a dew condensation state in which dew condensation occurs in the power element (37) or the surrounding component (16, 71) thereof, forcibly reduce the degree of opening of the throttle valve (18, 28) on behalf of the opening degree adjuster (52, 59).

15. The refrigeration apparatus of any one of claims 1-14, further comprising:
a closing unit (6) configured to close the branch circuit (10B) upon power shutdown that a power supply to the power supply device (30) is shut down.

16. The refrigeration apparatus of claim 15, wherein
the closing unit (6) is configured by a solenoid valve (6a) provided in the branch circuit (10B) and switching to a closed state upon the power shutdown.

17. The refrigeration apparatus of claim 3, further comprising:
a power shutdown adjusting unit (6b) configured to, upon power shutdown that a power supply to the power supply device (30) is shut down, use power generated in a driver of the compressor (11) by rotation of the compressor (11) to adjust at least one of the degrees of opening of the throttle valve (18) and the throttle mechanism (17) to a fully-closed state.

18. The refrigeration apparatus of any one of claims 1-17, further comprising:
a pump-down controller (98) configured to
control the expansion mechanism (13) and at least one of the throttle valve (18) and the throttle mechanism (17) to the fully-closed state to perform a pump-down operation in which refrigerant is stored in the heat-source-side heat exchanger (12), and
estimate an overheating point bringing about an overheating state in which a temperature of the power element (37) is highly likely to exceed a predetermined upper limit to complete the pump-down operation before the overheating point.

19. The refrigeration apparatus of any one of claims 1-18, further comprising:
a start interrupting unit (99) configured to, when the dew condensation is highly likely to occur in the cooler (16), interrupt the start of the refrigeration apparatus.

20. The refrigeration apparatus of any one of claims 2-7, further comprising:
a detector (41, 46, 47, 48) configured to detect a physical amount to be an indicator for a possibility of occurrence of dew condensation in the power element (37) or a surrounding component (16, 71) thereof; and
a temperature increaser (91) configured to, when a detection value of the detector (41, 46, 47, 48) indicates a dew condensation state in which the dew condensation is highly likely to occur in the power element (37) or the surrounding component (16, 71) thereof, increase a temperature of the power element (37).

21. The refrigeration apparatus of claim 20, wherein
the detector includes
a temperature sensor (46) provided in the power element (37) or the surrounding component (16, 71) thereof, and
an air temperature sensor (41) detecting a temperature of air around the power supply device (30), and
the temperature increaser (91) is configured to, when the detection value of the temperature sensor (46) is lower than the detection value of the air temperature sensor (41) and it is determined that the dew condensation state is established, increase the temperature of the power element (37).

22. The refrigeration apparatus of claim 20, wherein
the detector includes
a temperature sensor (46) provided in the power element (37) or the surrounding component (16, 71) thereof, and
an air temperature sensor (41) detecting a temperature of air around the power supply device (30), and
the temperature increaser (91) is configured to, when a temperature obtained by adding a preset temperature increase from an installation part of the temperature sensor (46) to an electrical connection part of the power element (37) to the detection value of the temperature sensor (46) is lower than the detection value of the air temperature sensor (41) and it is determined that the dew condensation state is established, increase the temperature of power element (37).

23. The refrigeration apparatus of claim 20, wherein
the detector includes
a temperature sensor (46) provided in the power element (37) or the surrounding component (16, 71) thereof, and
an air temperature sensor (41) detecting a temperature of air around the power supply device (30), and
the temperature increaser (91) is configured to, when the detection value of the temperature sensor (46) is lower than a dew-point temperature corresponding to a preset reference relative humidity at an air temperature detected by the air temperature sensor (41) and it is determined that the dew condensation state is established, increase the temperature of the power element (37).

24. The refrigeration apparatus of claim 20, wherein
the detector includes a humidity sensor (47) detecting a relative humidity of air around the power element (37), and
the temperature increaser (91) is configured to, when the detection value of the humidity sensor (47) is higher than a predetermined upper limit and it is determined that the dew condensation state is established, increase the temperature of the power element (37).

25. The refrigeration apparatus of claim 20, wherein
the detector includes
a humidity sensor (48) detecting a relative humidity of air around the power supply device (30),
an air temperature sensor (41) detecting a temperature of air around the power supply device (30), and
a temperature sensor (46) provided in the power element (37) or the surrounding component (16, 71) thereof, and
the temperature increaser (91) is configured to, when the detection value of the temperature sensor (46) is lower than a dew-point temperature calculated based on the relative humidity detected by the humidity sensor (48) and the air temperature detected by the air temperature sensor (41) and it is determined that the dew condensation state is established, increase the temperature of the power element (37).

26. The refrigeration apparatus of any one of claims 2-7, further comprising:
a dew condensation sensor (45) detecting dew condensation in the power element (37) or the surrounding component (16, 71) thereof; and
a temperature increaser (91) configured to, when a detection value of the dew condensation sensor (45) indicates a dew condensation state in which dew condensation occurs in the power element (37) or the surrounding component (16, 71) thereof, increase a temperature of the power element (37).

27. The refrigeration apparatus of any one of claims 20-26, wherein
the temperature increaser (91) includes a heat generation amount increaser (56) increasing an amount of heat generation of the power element (37).

28. The refrigeration apparatus of any one of claims 20-26, wherein
the temperature increaser (91) includes a heater (95) heating the power element (37).

29. The refrigeration apparatus of claim 27, further comprising:
a heat generation amount resetter (57) configured to, when the dew condensation state is cleared, reset the amount of heat generation of the power element (37) increased by the heat generation amount increaser (56) to a normal state before an increase in heat generation amount.

30. The refrigeration apparatus of claim 29, further comprising:
a forcible heat generation amount resetter (58) configured to, after a predetermined time has lapsed since the amount of heat generation of the power element (37) is increased by the heat generation amount increaser (56), forcibly reset the amount of heat generation of the power element (37) increased by the heat generation amount increaser (56) to the normal state before the increase in heat generation amount.

31. The refrigeration apparatus of any one of claims 27, 29, or 30, wherein
the heat generation amount increaser (56) increases a current value of the compressor (11) to increase the amount of heat generation of the power element (37) controlling the compressor (11).

32. The refrigeration apparatus of any one of claims 27, 29, or 30, wherein
the power element (37) is a switching element, and
the heat generation amount increaser (56) increases a switching frequency of the switching element to increase the amount of heat generation of the power element (37).

33. The refrigeration apparatus of any one of claims 27, 29, or 30, wherein
the power element (37) is a switching element, and
the heat generation amount increaser (56) increases a loss of the switching element to increase the amount of heat generation of the power element (37).

34. The refrigeration apparatus of any one of claims 27, 29, or 30, wherein
the heat generation amount increaser (56) increases a conduction loss of the power element (37) to increase the amount of heat generation of the power element (37).
